(19) Europäisches Patentamt
European Patent Office
Office européen des brevets

(11) EP 2 598 578 B1

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(21) Anmeldenummer: **11748603.5**

(22) Anmeldetag: **21.07.2011**

(51) Int Cl.:
***C09C 1/00*** (2006.01) ***B82Y 30/00*** (2011.01)
***C09D 5/36*** (2006.01) ***C09D 7/12*** (2006.01)

(86) Internationale Anmeldenummer:
**PCT/EP2011/062544**

(87) Internationale Veröffentlichungsnummer:
**WO 2012/013568 (02.02.2012 Gazette 2012/05)**

(54) **PVD-METALLEFFEKTPIGMENTE MIT DIFFRAKTIVER STRUKTUR UND METALLNANOPARTIKELN, VERFAHREN ZU DEREN HERSTELLUNG UND VERWENDUNG DERSELBEN**

PVD-METALLIC EFFECT PIGMENTS WITH DIFFRACTIVE STRUCTURE AND METAL NANOPARTICLES, PROCESS FOR PREPARING THEM AND USE THEREOF

PIGMENTS PVD À EFFET MÉTALLIQUE PRÉSENTANT UNE STRUCTURE DIFFRACTIVE ET DES NANOPARTICULES MÉTALLIQUES, ET PROCÉDÉ DE PRODUCTION ET UTILISATION DESDITS PIGMENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2010 DE 102010032399**

(43) Veröffentlichungstag der Anmeldung:
**05.06.2013 Patentblatt 2013/23**

(73) Patentinhaber: **Eckart GmbH**
**91235 Hartenstein (DE)**

(72) Erfinder:
- **GEIßLER, Bernhard**
  **90592 Schwarzenbruck (DE)**
- **FISCHER, Martin**
  **92281 Königstein (DE)**
- **HENGLEIN, Frank**
  **90489 Nürnberg (DE)**
- **SCHNEIDER, Ralph**
  **91207 Lauf (DE)**
- **HERZING, Wolfgang**
  **91233 Neunkirchen (DE)**
- **GREIWE, Klaus**
  **91207 Lauf (DE)**

(74) Vertreter: **Walcher, Armin et al**
**Louis, Pöhlau, Lohrentz**
**Patentanwälte**
**Postfach 30 55**
**90014 Nürnberg (DE)**

(56) Entgegenhaltungen:
**DE-A1-102007 034 928** **US-A1- 2007 207 099**

EP 2 598 578 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein dunkles Metalleffektpigment, welches diffraktive Strukturen aufweist, ein Verfahren zur Herstellung dieser Pigmente sowie deren Verwendung.

Metalleffektpigmente werden seit vielen Jahren in Beschichtungen zur Erzeugung eines metallischen Effektes eingesetzt.

Klassische Metalleffektpigmente bestehen aus plättchenförmigen Metallpigmenten, deren Wirkung auf der gerichteten Reflexion von einfallendem Licht an den flächig ausgebildeten und im jeweiligen Anwendungsmedium parallel ausgerichteten Metallpigmenten beruht.

Typische Anwendungsgebiete der Metalleffektpigmente sind die Lackindustrie, insbesondere die Automobilindustrie, die Druckindustrie und die Kunststoffindustrie.

Seit längerer Zeit sind Metalleffektpigmente, die durch PVD-Verfahren hergestellt werden, bekannt. Sie zeichnen sich durch extrem hohen Glanz, ein enormes Deckvermögen und einzigartige optische Eigenschaften aus. Bedingt durch ihre geringe Dicke von ca. 30 bis 70 nm und ihre extrem glatten Oberflächen neigen sie dazu, sich nach ihrer Applikation sehr dicht an den Untergrund anzuschmiegen. Dies führt bei einem sehr glatten Untergrund nahezu zu einem spiegelähnlichen Erscheinungsbild.

Ebenfalls sind Metalleffektpigmente, die durch PVD-Verfahren hergestellt werden, bekannt, die eine regelmäßige geprägte Struktur aufweisen. Diese Struktur vermag als optisches Gitter zu wirken und zerlegt einfallendes Licht in seine Spektralfarben. Dadurch erzeugen diese Pigmente einen bunt schillernden Farbeffekt ("Regenbogeneffekt") im Verbund mit den typischen Eigenschaften metallischer Pigmente wie hohem Glanz, hoher Brillanz und sehr guter Deckkraft.
Derartige Pigmente sind beispielsweise in der US 5,624,076 sowie in der US 6,692,830 B2 offenbart.

Kosmetische Anwendungen derartiger Pigmente sind in der EP 1 694 288 B1 offenbart. Sie befinden sich unter den Handelsnamen Holographic® oder Metalure Prismatic® im Handel.

Von der Firma Flex (Santa Rosa, Kalifornien, USA) werden unter dem Handelsnamen Spectraflair® Pigmente angeboten. Der Aufbau und die Herstellung dieser Pigmente sind in Barbara Parker "Advances in Interference Color", im Tagungsband Color Cosmetic Summit, Montreal (2003) beschrieben. Bei diesen Pigmenten handelt sich um mit PVD-Verfahren erzeugte, mehrschichtige Metalleffektpigmente mit einem zentralen Kern aus Aluminium und darauf aufgebrachten Schichten aus $MgF_2$. Auf diesen niedrig brechenden Schichten ist ein Gitter mit definiertem Abstand der Gitterstrukturen aufgeprägt. Diese Pigmente erzeugen äußerst starke Regenbogeneffekte.

Um einen dunklen metallischen Effekt und zugleich einen Regenbogeneffekt zu erzeugen, können die bekannten Metalleffektpigmente mit Regenbogeneffekt mit kommerziell erhältlichen Schwarzpigmenten abgetönt werden. Nachteiligerweise weisen derartige Formulierungen jedoch stets einen unvorteilhaften Braunstich auf. Dieser tritt insbesondere unter flachen Beobachtungs- bzw. Einfallswinkeln auf.

In der EP 1 522 606 A1 wird die Herstellung einer Folie mit schwarzem Aluminiumoxid beschrieben. Hierbei werden weder Metalleffektpigmente noch mehrschichtige Strukturen offenbart. Die hier offenbarten Folien weisen keinen nennenswerten Metalleffekt mit Glanz und Flop auf.

In der US 4,430,366 wird die Herstellung von Folien, die eine Abfolge aus in sich homogenen Schichten aus Metall und Metalloxid enthalten, beschrieben. Hier sind ebenfalls keine Metalleffektpigmente erwähnt.

Die DE 69601432 T2 betrifft ein Verfahren zur thermischen Erzeugung eines Bildes auf einem Substrat, wobei eine sauerstoffhaltige schwarze Aluminiumschicht so aufgebracht wird, dass die Schicht eine optische Transmission von wenigstens 0,3 bei einer Wellenlänge zwischen 200 und 1100 nm hat. Dieses Dokument betrifft ebenfalls nicht die Bereitstellung von Metalleffektpigmenten.

Die EP 1 144 711 B1 offenbart ein Verfahren zur Herstellung von reflektierenden Farbpigmenten, wobei auf eine Reflexionsschicht zumindest eine Farbänderung bewirkende Schicht aus einem transparenten Material mit einem Brechungsindex von größer als 1,8, üblicherweise Metalloxid, und einem lichtabsorbierenden Metall unter gleichzeitiger Verdampfung aufgebracht wird, wobei das lichtabsorbierende Metall und das Metall des Metalloxids voneinander verschieden sind. Das Verfahren ist prozesstechnisch sehr schwer zu steuern.

Die DE 10 2007 007 908 A1 offenbart dunkle metallische Metalleffektpigmente, die nach PVD-Verfahren hergestellt werden. Sie weisen eine weitgehend homogene Zusammensetzung auf und besitzen einen relativ hohen Sauerstoffgehalt von 25 bis 58 Atom-%. Die Schicht ist dunkel, da das Metall in Form kleiner Metallnanopartikel, die in Metalloxid dispergiert sind, vorliegt. Derartige Metalleffektpigmente ergeben dunkle, jedoch hochglänzende Metalleffektpigmente mit ausgeprägtem Hell-Dunkelflop. Die Pigmente weisen jedoch keinen Regenbogeneffekt auf.

Die WO 2009/012995 A1 offenbart dreischichtige Metalleffektpigmente, die ebenfalls sehr dunkle metallische Metalleffektpigmente ergeben können. Auch hier ist jedoch kein Regenbogeneffekt vorhanden.

Die US 2007/0207099 A1 betrifft eine kosmetische Zusammensetzung, die PVD-Aluminiumpigmente mit einer diffraktiven Struktur enthält.

Die DE 10 2007 034 928 A1 betrifft ein metallisches Effektpigment, das wenigstens drei Schichten aufweist, mit sehr hohem Hell-Dunkel-Flop.

Aufgabe der vorliegenden Erfindung ist die Bereitstellung eines dunklen und/oder farbigen Metalleffektpigmentes mit metallischem Glanz und einem Regenbogeneffekt. In mit diesen Pigmenten pigmentierten Anwendungen sollen diese keinen Braunstich, insbesondere bei flachen Einfalls- und/oder Beobachtungswinkeln, aufweisen. Besonders vorteilhaft soll vielmehr ein Blaustich zu sehen sein.

Weiter ist es Aufgabe der Erfindung, hochglänzende, metallisch wirkende Effektpigmente mit verschiedenen Grundfarbtönen in Verbindung mit einem Regenbogeneffekt darzustellen.

Insbesondere ist es Aufgabe der Erfindung, goldfarbige, metallisch wirkende Effektpigmente mit Regenbogeneffekt bereit zu stellen.

Die erfindungsgemäßen Effektpigmente sollen durch einfache Herstellungsverfahren bereit gestellt werden können.

Die der Erfindung zugrundeliegende Aufgabe wird durch Bereitstellung eines Metalleffektpigments gemäß Anspruch 1 gelöst.

Bevorzugte Ausführungsformen sind in der Unteransprüchen 2 bis 19 angegeben.

Die Aufgabe der Erfindung wird weiterhin durch Bereitstellung eines Beschichtungsmittels, das die Metalleffektpigmente nach einem der Ansprüche 1 bis 19 enthält, gelöst.

Auch wird die Aufgabe durch Bereitstellung eines beschichteten Gegenstandes, der mit Metalleffektpigment nach einem der Ansprüche 1 bis 19 oder einem erfindungsgemäßen Beschichtungsmittel versehen ist, gelöst.

Gemäß einer bevorzugten Variante der Erfindung ist das Beschichtungsmittel aus der Gruppe, die aus Coatings, Lacken, Automobillacken, Pulverlacken, Druckfarben, Digitaldruckfarben, Kunststoffen und kosmetischen Formulierungen besteht, ausgewählt.

Schließlich wird die Aufgabe der Erfindung auch durch Bereitstellung eines Verfahrens zur Herstellung der Metalleffektpigmente nach einem der Ansprüche 1 bis 19 gelöst, wobei das Verfahren folgende Schritte umfasst:

(a1) Aufbringen einer Trennschicht auf ein linear bewegbares Substrat
(a2) Einbringen einer diffraktiven Struktur in die Trennschicht, vorzugsweise durch Einprägen,
(a3) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff,
oder
(b1) Aufbringen einer Trennschicht auf ein linear bewegbares Substrat
(b2) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff,
(b3) Einbringen einer diffraktiven Struktur auf und/oder in mindestens eine Fläche der in Schritt (b2) aufgebrachten PVD-Schicht, vorzugsweise durch Einprägen,
sowie
c) Ablösen der aufgedampften und mit einer diffraktiven Struktur versehenen PVD-Schicht(en),
d) Zerkleinern der abgelösten PVD-Schicht(en),
e) optional Überführen der zerkleinerten PVD-Schicht(en) in eine Dispersion oder Paste.

Erfindungsgemäß werden unter der Bezeichnung "Metalleffektpigment" auch "Metalleffektpigmente" verstanden.

Unter einem "Metalleffektpigment" wird ein flächiges Metallpigment verstanden. Bei dem erfindungsgemäßen Metalleffektpigment handelt es sich um ein durch physikalische Dampfabscheidung (PVD: physical vapour deposition) hergestelltes Metalleffektpigment, das auch als PVD-Metalleffektpigment bezeichnet werden kann.

Die Metallnanopartikel können auch als Metallcluster bezeichnet werden.

Bei einer bevorzugten Ausführungsform der Erfindung liegen die Metallnanopartikel vorzugsweise im wesentlichen in einer Metalloxidphase oder Metalloxidmatrix, weiter bevorzugt vollständig in einer Metalloxidphase oder Metalloxidmatrix, vor.

Es hat sich überraschend gezeigt, dass Metalleffektpigmente mit einem gut ausgeprägten optischen Regenbogeneffekt in Verbindung mit verschiedensten Grundfarbtönen erhalten werden können. So kann in Abhängigkeit von der Größe der Metallnanopartikel beispielsweise im Falle von Aluminiumnanopartikeln ein dunkler Grundfarbton oder ein goldener Grundfarbton eingestellt werden. Auch ist es über die Einstellung der Schichtdicke der Schicht, die Metallnanopartikel in einer Metalloxidmatrix enthalten, möglich, einen Grundfarbton zu erhalten, der beispielsweise gold, violett, blau oder schwarz bzw. dunkel sein kann.

Die vorliegende Erfindung ermöglicht mithin die Bereitstellung von Metalleffektpigmenten mit interessanten optischen Eigenschaften. Äußerst vorteilhaft können diese Metalleffektpigmente kostengünstig hergestellt werden. So ist es beispielsweise möglich goldfarbene Aluminiumeffektpigmente mit Regenbogeneffekt herzustellen. Diese goldfarbenen Aluminiumeffektpigmente können anstelle der wesentlich teureren Messingeffektpigmente verwendet werden.

Die erfindungsgemäßen Metalleffektpigmente sind und wirken für einen Betrachter metallisch, obgleich die Metalleffektpigmente zu einem signifikanten Anteil Metalloxid enthalten. Dieses Ergebnis ist erstaunlich und vermutlich auf die spezielle Struktur, d.h. die Anordnung von Metallnanopartikeln in einer Metalloxidmatrix, der erfindungsgemäßen Metallpigmente zurückzuführen.

Bei einer bevorzugten Ausführungsform umfasst die wenigstens eine Schicht, die Metallnanopartikel und Metalloxidphase umfasst, die wenigstens eine diffraktive Struktur. Gemäß weiteren bevorzugten Ausführungsformen ist die diffraktive Struktur wenigstens teilweise in die wenigstens eine Schicht, die Metallnanopartikel und Metalloxidphase umfasst, eingeformt und/oder diese wenigstens eine Schicht ist zu einer diffraktiven Struktur ausgeformt. Bei einer Variante der Erfindung weist das Metalleffektpigment die diffraktive Struktur(en) nur auf der oberen oder unteren Fläche der Metalleffektpigmente auf.

Bei einer besonders bevorzugten Ausführungsform ist die gesamte Schicht zu einer diffraktiven Struktur ausgeformt. Auf diese Weise wird ein besonders starker "Regenbogeneffekt" erzielt.

Das physikalische Grundprinzip dieses Regenbogeneffekts ist die Beugung einfallenden Lichts an der oder den diffraktiven Struktur(en). Damit unterscheidet sich die Farbgebung der erfindungsgemäßen Metalleffektpigmente grundlegend von jener beispielsweise farbigen Interferenzeffekten. Bei interferenzstrukturen erhält man durch eine geeignete Abfolge von hoch- und niedrigbrechenden Schichten unterschiedlichste Farbtöne. Hier sind zahllose Interferenzpigmente im Stand der Technik bekannt. Bei sogenannten Multilayerschichten wird ein geeignetes Substrat, z.B. ein plättchenförmiger Glimmer, ein Glassplättchen, oder Metalleffektpigment wie ein Aluminiumeffektpigment mit mindestens einem Schichtpaket aus alternierenden hoch-, niedrig-, hochbrechenden Schichten belegt. Derartige Effektpigmente können ebenfalls Farbflops, d.h. unterschiedliche Farben bei verschiedenen Einfalls- und/oder Betrachtungswinkeln erzeugen. Dennoch sind die hiermit erzielten Effekte nicht vergleichbar mit den Regenbogeneffekten, die mit diffraktiven Effektpigmenten zu erreichen sind.

Die diffraktive(n) Struktur(en) weist/weisen bevorzugt ein periodisches Muster mit diffraktiven Elementen auf. Hierbei bezieht sich das periodische Muster auf die kleinste Einheit der diffraktiven Elemente. Vorzugsweise weist die periodische diffraktive Struktur 5000 bis 20000 diffraktive Elemente/cm auf, besonders bevorzugt 8.000 - 18.000 diffraktive Elemente/cm und ganz besonders bevorzugt 9.000 - 16.000 diffraktive Elemente/cm auf. Innerhalb dieses Bereiches wird vorwiegend sichtbares Licht (ca. 400 bis 800 nm Wellenlänge) gemäß dem bekannten Prinzip eines Beugungsgitters gebeugt, wodurch der Betrachter einen Regenbogeneffekt wahrnimmt. Es können jedoch auch Anteile der IR-Strahlung und/oder der UV-Strahlung gebeugt werden.

Die Periodizität bestimmt wesentlich die gebeugten Wellenlängen des einfallenden Lichts. Im Einzelnen kann dies nach bekannten Formeln berechnet werden, wie sie der US 6,692,830 B2 zu entnehmen sind.

Als diffraktive Elemente kommen beispielsweise symmetrische Dreiecke, asymmetrische Dreiecke, Rillen unterschiedlichster Formen, Rechteckfunktionen, Kreise, wellenförmige Linien, Kegel, Kegelstümpfe, Noppen, Prismen, Pyramiden, Pyramidenstümpfe, Zylinder, Halbkugeln, etc. sowie Kombinationen dieser geometrischen Formen und Körper in Betracht.

Geometrische Körper mit einer oder mehreren zur Pigmentoberfläche parallel angeordneten Flächen, wie beispielsweise Kegelstümpfe, Pyramidenstümpfe, Zylinder oder Rechteckfunktionen weisen aufgrund dieser Flächen ein höheres Reflexionsvermögen auf.

Geometrische Körper, die, bezogen auf die Pigmentoberfläche, schräge Seitenoberflächen aufweisen, verstärken den Regenbogeneffekt. Unter schrägen Seitenflächen werden Seitenflächen, die, bezogen auf den Untergrund, einen Winkel von 5 bis 89°, vorzugsweise von 15 bis 84°, noch weiter bevorzugt von 27 bis 80°, noch weiter bevorzugt von 43 bis 74°, aufweisen, verstanden. Geeignete geometrische Körper sind beispielsweise Kegel, Kegelstümpfe, Pyramiden, Pyramidenstümpfe, etc..

Bei Kegelstümpfen erfolgt beispielsweise sowohl eine Reflexion an der zur Pigmentoberfläche parallelen Deckfläche und eine Verstärkung des Regenbogeneffektes an der Mantelfläche. Entsprechend erfolgt bei Pyramidenstümpfen die Reflexion an der Deckfläche und eine Verstärkung des Regenbogeneffektes an den schrägen Seitenflächen.

Selbstverständlich ist es auch möglich, bei Kegelstümpfen oder Pyramidenstümpfen die Deckfläche nicht parallel zur Pigmentoberfläche, sondern schräg zur Pigmentoberfläche anzuordnen.

Über die durch Prägung und/oder Formung auf der Pigmentoberfläche angeordneten geometrischen Körper kann der Regenbogeneffekt und/oder das Reflexionsvermögen des erfindungsgemäßen Metalleffektpigmentes verstärkt oder das relative Verhältnis von Regenbogeneffekt zu Reflexion geändert werden.

So können die geometrischen Körper abschnittsweise getrennt oder auch miteinander gemischt vorliegen. Auch ist es selbstverständlich möglich, die geometrischen Formen und geometrischen Körper überlagert anzuordnen, so dass beispielsweise auf einer wellenförmigen Struktur zusätzlich geometrische Körper angeordnet sind.

Gemäß einer weiteren Variante der Erfindung können auf der Metalleffektpigmentoberfläche ungeprägte bzw. ungeformte, mithin glatte, Abschnitte neben geprägten und/oder geformten Abschnitten vorliegen. Auch hierdurch kann das relative Verhältnis von Regenbogeneffekt zu Reflexion geändert werden.

Bevorzugt ist die gesamte Oberfläche des Metalleffektpigments mit der diffraktiven Struktur versehen, vorzugsweise geprägt. Es kann jedoch auch nur ein Teil der Metalleffektpigmentoberfläche mit der diffraktiven Struktur versehen, vorzugsweise geprägt, werden bzw. zu einer diffraktiven Struktur ausgeformt sein. Bevorzugt werden mindestens 60 %, besonders bevorzugt mindestens 75% und ganz besonders bevorzugt mindestens 90% der Metalleffektpigmentooberfläche mit einer diffraktiven Struktur geprägt bzw. zu einer diffraktiven Struktur ausgeformt sein.

Bei einer besonders bevorzugten Ausführungsform umfasst oder besteht die diffraktive Struktur aus wellenförmigen, beispielsweise sinusförmigen, Linien, Kegeln oder Kegelstümpfen. Bei einer ganz besonders bevorzugten Ausführungsform umfasst oder besteht die diffraktive Struktur aus sinusförmigen Linien, da diese Form zum einen besonders leicht einzuprägen ist und zum anderen einen sehr starken Beugungseffekt bewirkt. Bei diesen sinusförmigen Linien ist die diffraktive Struktur vorzugsweise auf dem ganzen Metalleffektpigment eingeprägt.

Um einen deutlich wahrnehmbaren Effekt erzielen zu können, weist die diffraktive Struktur vorzugsweise eine gewisse Mindesttiefe auf, da ansonsten der physikalische Effekt der Beugung nur unzureichend ausgebildet sein kann. Daher sollte die diffraktive Struktur bevorzugt eine Tiefe (gemessen als "Berg zu Tal") von mindestens 40 nm, bevorzugt 40 nm bis 600 nm und besonders bevorzugt von 50 nm bis 400 nm und ganz besonders bevorzugt von 100 nm bis 250 nm aufweisen. Oberhalb von 600 nm kann die Stabilität der Struktur als ganzes nicht mehr gegeben sein.

Es ist bevorzugt, dass die mittlere Schichtdicke der wenigstens einen Schicht, die Metallnanopartikel und Metalloxidphase umfasst, in einem Bereich von 8 bis 500 nm liegt. Gemäß einer weiteren bevorzugten Aufführungsform einem Bereich von 12 bis 200 nm, weiter bevorzugt von 15 bis 130 nm

Die Tiefe der diffraktiven Struktur kann mithin die mittlere Schichtdicke der wenigstens einen Schicht, die Metallnanopartikel und Metalloxidphase umfasst, übertreffen. Dies ist bevorzugt vor allem dann der Fall, wenn die gesamte wenigstens eine Schicht zu einer diffraktiven Struktur ausgeformt ist.

Gemäß einer bevorzugten Weiterbildung der Erfindung ist das Metall der wenigstens einen Schicht, die Metallnanopartikel und Metalloxidphase umfasst, aus der Gruppe, die aus Aluminium, Magnesium, Chrom, Silber, Kupfer, Gold, Zink, Zinn, Mangan, Eisen, Kobalt, Nickel, Titan, Tantal, Molybdän, Wolfram, deren Mischungen und deren Legierungen besteht, ausgewählt ist. Besonders bevorzugt ist das Metall der wenigstens einen Schicht, die Metallnanopartikel und Metalloxidphase umfasst, aus der Gruppe, die aus Aluminium, Chrom und Titan, deren Mischungen und deren Legierungen besteht, ausgewählt.

Gemäß einer bevorzugten Weiterbildung der Erfindung liegt die mittlere Größe der Metallnanopartikel in einem Bereich von 1 bis 50 nm. Als sehr geeignete
Größenbereiche haben sich auch mittlere Durchmesser aus einem Bereich von 1,5 bis 30 nm, weiter bevorzugt von 2 bis 13 nm, erwiesen.

Der Grundfarbton der erfindungsgemäßen Metalleffektpigmente wird vorzugsweise über die durchschnittliche Größe der Metallnanopartikel eingestellt. So unterscheidet sich die Farbgebung der Metalleffektpigmente regelmäßig in Abhängigkeit von der durchschnittlichen Größe der Metallnanopartikel.

Unter einer kleinen durchschnittlichen Größe an Metallnanopartikel werden insbesondere solche verstanden, die in einem Größenbereich von 1 bis 10 nm, insbesondere von 2 bis zu 8 nm, liegen. Üblicherweise beträgt die durchschnittliche Größe der Metallnanopartikel wenigstens 4 nm.

Unter einer großen durchschnittlichen Größe an Metallnanopartikel werden insbesondere solche verstanden, die in einem Größenbereich von mehr als 10 nm, insbesondere von bis zu 50 nm, liegen. Bei einer sehr geeigneten Variante der Erfindung liegt die durchschnittliche Größe der großen Metallnanopartikel in einem Bereich von 15 bis 30 nm.

Auch kann die Farbgebung und/oder die Farbintensität von der Dicke der Schicht, die Metallnanopartikel und Metalloxidphase umfasst, abhängig sein.

Die wenigstens eine Schicht, die Metallnanopartikel in einer Metalloxidmatrix enthält, oder mehrere Schichten, die jeweils Metallnanopartikel in einer Metalloxidmatrix enthalten können, bewirken je nach Schichtdicke und Größe der Metallnanopartikel einen dunklen bis schwarzen optischen Eindruck.

Es wird vermutet, dass die in der Oxidmatrix enthaltenen oder eingebetteten Metallnanopartikel elektronisch in einer Wechselwirkung stehen. Die Metallnanopartikel weisen eine äußerst starke Absorption elektromagenetischer Strahlung auf. Im Unterschied zu einem reinen Metall ("Bulk"-Metall) sind die Metallatome elektronisch nicht so stark miteinander verbunden, dass die typische metallische Reflektion auftritt. Daher ergibt sich insgesamt ein dunkler Farbeffekt. Die Größe der Metallnanopartikel lässt sich mittels TEM-Analyse ermitteln. Hierbei wird die Probe vorzugsweise präpariert, wie weiter unten erläutert, und die Aufnahmen, bei denen die Metallnanopartikel aufgrund ihres hohen Streuquerschnitts für die Elektronen dunkel erscheinen, ausgewertet. Zur Bestimmung der mittleren Größe werden mindestens 70 Teilchen ausgezählt und der arithmetische Mittelwert gebildet. Die mittlere Größe der Metallnanopartikel liegt bevorzugt in einem Bereich von 1 bis 50 nm, besonders bevorzugt 1,5 bis 30 nm und ganz besonders bevorzugt 2 bis 10 nm.

Zur Bestimmung der Schichtdicken, der des Metalls, der Mengen an Metallnanopartikel und an Metalloxid kann mit den in den Beispielen angegebenen Verfahren, wie ESCA (Chemische Analyse mit Photoelektronenspektroskopie), allgemein bestimmt werden.

Die Erfinder haben überraschend festgestellt, dass über die Größe der Metallnanopartikel, die in der Metalloxidphase vorliegen, die Grundfarbe der Metalleffektpigmente beeinflusst oder verändert werden kann. Beispielsweise erhält man im Falle von Aluminium goldfarbene Aluminiumeffektpigmente, wenn die in Aluminiumoxid enthaltenen Aluminiumnanopartikel einen mittlere Größe in einem Größenbereich von 15 bis 28 nm, vorzugsweise von 18 bis 25 nm, weiter bevorzugt etwa bei 20 nm, aufweisen.

Weisen die Aluminiumnanopartikel, die im Aluminiumoxid vorliegen, hingegen eine mittlere Größe auf, die in einem Bereich von 2 bis 13 nm, weiter bevorzugt von 5 bis 12 nm, noch weiter bevorzugt bei etwa 10 nm, liegen, dann werden Aluminiumeffektpigmente erhalten, die einen dunklen oder schwarzen Grundfarbton aufweisen.

Die erfindungsgemäßen Metalleffektpigmente mit dunklem oder schwarzem Grundfarbton können auch mit weiteren Effektpigmenten, beispielsweise ungeprägten Metalleffektpigmenten und/oder Perlglanzpigmenten, gemischt werden. Hierbei erhält man eine Pigmentmischung, die nach Applikation einer mit dieser Pigmentmischung pigmentierten Farbe oder einem Lack eine Beschichtung mit einem verborgenen Regenbogeneffekt ergibt. Der Regenbogeneffekt ist dann im wesentlichen nur im direkten Sonnenlicht oder einer anderen starken Weißlichtquelle erkennbar. Eine solche Pigmentmischung bzw. ein entsprechend pigmentierter Lack oder eine Farbe eignen sich insbesondere zur Verwendung als Sicherheitsmerkmal.

Somit erlaubt die vorliegende Erfindung über die Einstellung der mittleren Größe der Metallnanopartikel auf überraschend einfache Art und Weise die Erzeugung verschiedenster Grundfarbtöne, die zusammen mit einem Regenbogeneffekt wahrgenommen werden und äußerst interessante Farbgestaltung ermöglichen.

Zusätzlich kann der Farbeindruck der Metalleffektpigmente zusätzlich auch über die eingestellte Dicke der Schicht, in der die Metallnanopartikel in der Metalloxidphase vorliegen, verändert werden.

Gemäß einer weiteren bevorzugten Ausführungsform liegt der durchschnittliche Gehalt an Metallnanopartikeln in der wenigstens einen Schicht, die Metallnanopartikel und Metalloxidphase umfasst, in einem Bereich von 1 bis 50 Atom-%, weiter bevorzugt von 3 bis 40 Atom-%, besonders bevorzugt von 4 bis 35 Atom-%, und ganz besonders bevorzugt von 5 bis 20 Atom-%, jeweils bezogen auf den Gesamtgehalt an Metall und Sauerstoff in dieser Schicht.

Bei einer Schichtdicke aus einem Bereich von 50 bis 80 nm, vorzugsweise von 55 bis 75 nm, und vorzugsweise aus Al und/oder Cr als Metall und einem Sauerstoffgehalt aus einem Bereich von 55 Atom-% bis 70 Atom-% liegen Metallnanopartikel in fein verteilter Form vor. Metalleffektpigmente mit dieser Zusammensetzung sind transparent goldfarben.

Bei weiterer Steigerung der Schichtdicke erhält man zunächst rote, sodann violette und schließlich blaue transparente Metalleffektpigmente.

Auf diesem Wege lassen sich im besondern schwermetallfreie goldfarbene, transparente, prismatische Al-Pigmente beschreiben.

Transparente prismatische Cr-Pigmente zeichnen sich durch Korrosionsbeständigkeit aus und hohe Farbintensität aus.

Gemäß einer Variante der Erfindung ist der Gehalt an Metallnanopartikeln über die Dicke der wenigstens einen Schicht, die Metallnanopartikel und Metalloxidphase umfasst, weitgehend homogen, vorzugsweise homogen. Unter "homogen" wird in diesem Zusammenhang verstanden, dass über die Dicke der Schicht, in der die Metallnanopartikel in dem Metaloxid vorliegen, weitgehend kein Gradient bezüglich der Konzentration der Metallnanopartikel vorliegt. Mithin sind die Metallnanopartikel über die Dicke der Schicht gleichmäßig verteilt. Kriterium über das Vorliegen einer weitgehend homogenen Konzentration der Metallnanopartikel entlang der wenigstens einen Schicht sind hierbei die mittels Sputterprofile und ESCA bestimmten Konzentrationen an elementarem Metall.

Gemäß einer weiteren Variante der Erfindung weist die wenigstens eine Schicht, die Metallnanopartikel und Metalloxidphase umfasst, eine erste Außenfläche und eine zweite Außenfläche auf, wobei der Gehalt an Metallnanopartikeln in der ersten Außenfläche und in der zweiten Außenfläche dieser Schicht voneinander verschieden ist und sich um wenigstens 10 Atom-% unterscheidet.

Unter einer Außenfläche wird erfindungsgemäß eine Tiefe von etwa 10 nm verstanden. Diese Tiefe entspricht der üblichen Signaltiefe der ESCA-Methode, mit der die Konzentration des Metalloxids und/oder der Metallnanopartikel bestimmt werden kann.

Erfindungsgemäß ist es mithin möglich, asymmetrische Metalleffektpigmente bereitzustellen. Wenn die erfindungsgemäßen Metalfeffektpigmente einschichtig ausgebildet sind, dann stellen die Außenflächen dieser Schicht zugleich die Außenflächen des Metalleffektpigmentes dar. Die Grundfarbe der Metalleffektpigmente kann auch in Abhängigkeit von der Konzentration der Metallnanopartikel in der Metalloxidphase variieren. Da die Orientierung der Metalleffektpigmente, beispielsweise in einem Lack oder einer Druckfarbe, in Bezug auf die Lage der Außenfläche statistisch variiert, können mithin mit einem Metalleffektpigment Mischungen von Farbtönen, die zugleich einen Regenbogeneffekt aufweisen, erzeugt werden. Dies ermöglicht interessante Farbgebungen. Außerdem sind diese asymmetrisch aufgebauten Pigmente leichter reproduzierbar herzustellen.

Weiterhin ist bevorzugt, dass das Metalleffektpigment zwei aufeinander angeordnete Schichten, wobei wenigstens eine Schicht Metallnanopartikel in einer Metalloxidphase umfasst, aufweist, diese wenigstens eine Schicht eine erste Außenfläche und eine zweite Außenfläche aufweist und der Gehalt an Metallnanopartikeln in der ersten Außenfläche und in der zweiten Außenfläche dieser wenigstens einen Schicht voneinander verschieden ist und sich um wenigstens 10 Atom-% unterscheidet.

Bei dieser Variante der Erfindung kann die wenigstens eine Schicht, die Metallnanopartikel und Metalloxidphase oder Metalloxidmatrix enthält, auf einer metallischen Schicht aufgebracht sein. Die metallische Schicht weist dabei vorzugsweise eine Schichtdicke von wenigstens 2 nm, vorzugsweise wenigstens 5 nm, auf. Als sehr geeignet hat sich eine Schichtdicke in einem Bereich von 5 bis 30 nm, vorzugsweise von 7 bis 25 nm, erwiesen. In diesem Schichtendickenbereich weist die Metallschicht stark absorbierende Eigenschaften auf, weshalb die Metalleffektpigmente insgesamt einen dunkleren oder dezenteren Farbeindruck bewirken.

Selbstverständlich kann die Metallschicht auch eine größere Dicke aufweisen, beispielsweise in einem Bereich von 30 bis 250 nm, vorzugsweise von 35 bis 180 nm. Als sehr geeignet hat sich auch eine Bereich von 38 bis 74 nm erwiesen. Bei diesen größeren Schichtdicken ist die Metallschicht stark reflektierend und glänzend.

Der Farbeindruck dieser zweischichtigen Metalleffektpigmente kann über die Schichtdicke und/oder die durchschnittliche Größe der Metallnanopartikel in der Metalloxidphase oder Metalloxidmatrix eingestellt werden. Der Farbeindruck geht mit steigender Schichtdicke dabei von gold über rot bis zu blau. Diese Grundfarbtöne weisen die erfindungsgemäßen Metalleffektpigmente zusätzlich zu dem Regenbogeneffekt auf.

Beispielsweise können bei einem konstanten Verhältnis von Sauerstoff zu Metall, mithin bei Aufbringung einer Schicht mit einer konstanten Größe an Metallnanopartikeln in einer Metalloxidmatrix, auf einer Metallschicht die vorgenannten Grundfarbtöne eingestellt werden.

So weisen beispielsweise Chromeffektpigmente mit einer zweischichtigem Struktur aus einer Aluminiummetallschicht und einer Schicht mit in Chromoxid eingebetteten Chromnanopartikel, wobei der Sauerstoffanteil, bezogen auf die Gesamtmenge an Sauerstoff und Chrom in dieser Schicht, in einem Bereich von 30 bis 58 Atom-% liegt, in Abhängigkeit von der Schichtdicke folgenden Grundfarbon auf:

Beispiel A:

| | |
|---|---|
| Dicke der Aluminiumschicht: | 15 nm |
| Dicke der Schicht mit Chromnanopartikel in Chromoxid: | 15 nm |
| Grundfarbton: | Gold |

Beispiel B:

| | |
|---|---|
| Dicke der Aluminiumschicht: | 15 nm |
| Dicke der Schicht mit Chromnanopartikel in Chromoxid: | 20 bis 30 nm |
| Grundfarbton: | Rot |

Beispiel C:

| | |
|---|---|
| Dicke der Aluminiumschicht: | 15 nm |
| Dicke der Schicht mit Chromnanopartikel in Chromoxid: | 40 bis 60 nm |
| Grundfarbton: | Blau |

Gemäß einer weiteren Variante der Erfindung weist das plättchenförmige Metalleffektpigment drei oder mehr aufeinander angeordnete Schichten, wobei wenigstens eine Schicht Metallnanopartikel in einer Metalloxidphase umfasst, auf, die wenigstens eine Schicht mit einer ersten und einer zweiten Außenfläche aufweist, das Metalleffektpigment eine erste Außenfläche und eine zweite Außenfläche aufweist und der höchste Gehalt an Metallnanopartikeln in der ersten oder in der zweiten Außenfläche des Metalleffektpigmentes vorliegt und sich der Gehalt an Metallnanopartikeln in der ersten und in der zweiten Außenfläche der wenigstens einen Schicht um wenigstens 10 Atom-% unterscheidet.

Erfindungsgemäß ist auch bevorzugt, dass sich in wenigstens einer Schicht, die Metallnanopartikel und Metalloxidphase umfasst, der Gehalt an Metallnanopartikeln kontinuierlich über die Dicke dieser Schicht ändert.

Vorzugsweise ändert sich in wenigstens einer Schicht, die Metallnanopartikel und Metalloxidphase umfasst, der Gehalt an Metallnanopartikeln wenigstens teilweise mit einem Gradienten, der in einem Bereich von 0,1 bis 4 Atom-%/nm liegt, über die Dicke der Schicht. Gemäß einer weiter bevorzugten Variante liegt der Gradient in einem Bereich von 0,5 bis 3 Atom-%/nm.

Gemäß einer weiter bevorzugten Variante ändert sich zwischen zwei aufeinander folgenden Schichten der Gehalt an Metallnanopartikeln diskontinuierlich. Gemäß einer bevorzugten Variante der Erfindung liegt der Unterschied in dem Gehalt an Metallnanopartikeln in einem Bereich von 10 Atom-% bis 40 Atom-%, weiter bevorzugt von 12 Atom-% bis 35 Atom-% und noch weiter bevorzugt von 15 Atom-% bis 30 Atom-%.

Bei einer weiteren bevorzugten Variante der erfindungsgemäßen Schicht, in der Metallnanopartikel in einer Metalloxidmatrix vorliegen, liegt der durchschnittliche Gehalt an Metall M und Sauerstoff bei mindestens 80 Atom.-%, besonders bevorzugt bei mindestens 90 Atom-%, bezogen auf diese eine Schicht. Mithin kann diese Schicht auch Fremdelemente und/oder-atome enthalten. Bevorzugte Fremdelemente in dieser Schicht sind beispielsweise Stickstoff, Schwefel, Kohlenstoff und/oder Wasserstoff. So kann insbesondere Stickstoff (bevorzugt in Form von Metallnitriden) in die Schicht eingebracht werden, wenn bei der Herstellung der erfindungsgemäßen Metalleffektpigmente als Sauerstoffquelle Luft verwendet wird.

Der optische Eindruck der Metalleffektpigmente kann mithin durch eine Vielzahl von Kombinationsmöglichkeiten beeinflusst werden. So kann beispielsweise der metallische Glanz der erfindungsgemäßen Metalleffektpigmente verstärkt werden, indem eine Außenfläche des Metalleffektpigmentes durch eine metallische Schicht gebildet ist. Unter einer metallischen Schicht ist mithin eine Schicht zu verstehen, die im wesentlichen, vorzugsweise vollständig, aus durchgehendem Metall gebildet ist, das oberflächlich auch eine natürlich auftretende Metalloxidschicht aufweisen kann. Mithin liegen in dieser Schicht aus durchgehendem Metall keine Metallnanopartikel in einer Metalloxidmatrix vor.

Gemäß einer weiteren Variante der Erfindung weist das Metalleffektpigment wenigstens eine erste und eine zweite aufeinanderfolgende Schicht auf, wobei die erste Schicht Metallnanopartikel enthält und die zweite Schicht elementares Metall enthält, wobei der Gehalt an Metallnanopartikeln in der Außenfläche der ersten Schicht, die Metallnanopartikel und Metalloxidphase umfasst, in einem Bereich von 1 bis 50 Atom-% liegt und der Gehalt an elementarem Metall in der Außenfläche der zweiten Schicht in einem Bereich von 60 bis 95 Atom-% liegt, mit der Maßgabe, dass der Unterschied in dem Gehalt an Metallnanopartikeln und an elementarem Metall in den beiden Außenflächen wenigstens 10 Atom-% beträgt.

Bei dieser Variante weisen die erfindungsgemäßen Metalleffektpigmente eine Metallschicht auf, die als Reflektor wirken kann. Es ist selbstverständlich auch möglich, die Metallschicht zentral anzuordnen, so dass auf der Oberfläche als auch auf der Unterfläche der Metallschicht jeweils wenigstens eine Schicht, die Metallnanopartikel in eine Metalloxidschicht enthält, angeordnet ist.

Der durchschnittliche Gehalt an Metall in der Metallschicht, bezogen auf den Gesamtgehalt an Metall und Sauerstoff in dieser wenigstens einen Schicht, liegt in einem Bereich von 60 bis 95 Atom-%. Weiter bevorzugt beträgt der durchschnittliche Gehalt an Metall und Sauerstoff in der wenigstens einen Schicht mindestens 90 Atom-%, bevorzugt mindestens 95 Atom-% und besonders bevorzugt mindestens 97 Atom-%, jeweils bezogen auf diese eine Schicht. In dieser Metallschicht liegen mithin keine Metallnanopartikel vor. Vielmehr handelt es sich bei dieser Metallschicht um eine übliche Metallschicht, die auch Metalloxid umfassen kann.

Bevorzugt ist bei der vorstehenden Variante der Erfindung das Metall ein dreiwertiges Metall und besonders bevorzugt wird das Metall aus der Gruppe, die aus Aluminium, Chrom, Mischungen und Legierungen davon besteht, ausgewählt.

Bei einer anderen Variante ist bevorzugt, dass das Metall ein vierwertiges Metall ist und besonders bevorzugt aus der Gruppe, die aus Titan, Zinn, Mischungen und Legierungen davon besteht, ausgewählt wird. Hierbei weist das Metalleffektpigment wenigstens eine erste und eine zweite aufeinanderfolgende Schicht auf, wobei die erste Schicht Metallnanopartikel enthält und die zweite Schicht elementares Metall enthält, und wobei der Gehalt an Metallnanopartikeln in der Außenfläche der ersten Schicht, die Metallnanopartikel und Metalloxidphase umfasst, in einem Bereich von 1 bis 50 Atom-% liegt und der Gehalt an elementarem Metall in der Außenfläche der zweiten Schicht in einem Bereich von 60 bis 95 Atom-% liegt, mit der Maßgabe, dass der Unterschied in dem Gehalt an Metallnanopartikeln und an elementarem Metall in den beiden Außenflächen wenigstens 10 Atom-% beträgt.

Auch bei dieser Variante der erfindungsgemäßen Metalleffektpigmente kann die Metallschicht als Reflektor wirken. Es ist selbstverständlich auch hier möglich, die Metallschicht zentral anzuordnen, so dass auf der Oberfläche als auch auf der Unterfläche der Metallschicht jeweils wenigstens eine Schicht, die Metallnanopartikel in eine Metalloxidschicht enthält, angeordnet ist.

Gemäß einer bevorzugten Weiterbildung der Erfindung weist die wenigstens eine Schicht, die Metallnanopartikel und Metalloxidphase umfasst, einen durchschnittlichen Sauerstoffgehalt von 15 bis 77 Atom-%, bezogen auf den Gesamtgehalt an Metall und Sauerstoff in dieser Schicht, auf.

Bei weiter bevorzugten Ausführungsformen weist die Schicht einen durchschnittlichen Sauerstoffgehalt von 30 bis 57 Atem-%, weiter bevorzugt von 35 bis 53 Atom-%, auf.

Gemäß einer bevorzugten Ausführungsform der Erfindung liegt der Sauerstoffgehalt im Falle von einwertigen Metallen in einem Bereich von 15 bis 30, vorzugsweise von 20 bis 28 Atom-%.

Gemäß einer bevorzugten Ausführungsform der Erfindung liegt der Sauerstoffgehalt im Falle von zweiwertigen Metallen in einem Bereich von 28 bis 48, vorzugsweise von 33 bis 43 Atom-%.

Gemäß einer bevorzugten Ausführungsform der Erfindung liegt der Sauerstoffgehalt im Falle von dreiwertigen Metallen in einem Bereich von 30 bis 58, vorzugsweise von 35 bis 53 Atom-%.

Gemäß einer bevorzugten Ausführungsform der Erfindung liegt der Sauerstoffgehalt im Falle von vierwertigen Metallen in einem Bereich von 40 bis 64, vorzugsweise von 45 bis 59 Atom-%.

Der in dieser Schicht vorhandene Sauerstoff liegt als Metalloxid vor. Dieses Metalloxid bildet eine Matrix, in die die Metallnanopartikel eingelagert sind. Die Metalloxidmatrix bewirkt mehrere Vorteile. Sie schützt zum einen die oxidationsempfindlichen Metallnanopartikel völlig überraschenderweise bereits sehr effektiv vor Oxidation. Dies ist insbesondere ein sehr überraschender Effekt, da bekanntlich metallische Nanopartikel deutlich unedler und mithin korrosionsanfälliger sind, als ihre makroskopischen Ausführungsformen.

Zum anderen verleiht die Metalloxidmatrix der Schicht mechanische Eigenschaften, die kaum von den Eigenschaften entsprechender herkömmlicher Metalloxide zu unterscheiden ist. Somit sind die erfindungsgemäßen Schichten ebenfalls mechanisch spröde, was den großen Vorteil hat, das die erfindungsgemäßen Metallpigmente sich sehr leicht mechanisch zerkleinern lassen. Dies führt zu Metalleffektpigmenten mit ausgeprägt glatten Bruchkanten, was wiederum den optischen Eigenschaften (Flop, Glanz) sehr förderlich ist.

Die wenigstens eine Schicht besteht dabei im Wesentlichen aus Metall und Sauerstoff. Das Metall liegt dabei einerseits als elementares Metall in Form von Metallnanopartikeln und andererseits als Metalloxid vor. Das Metall, mithin die Metallnanopartikel und/oder das Metall in der Metalloxidmatrix, kann auch jeweils eine Mischung verschiedener Metalle sein, wobei die Mischung verschiedener Metalle in den Metallnanopartikeln und der Metalloxidmatrix dabei identisch sind. Aufgrund der spezifischen Struktur der Schicht aus Metallnanopartikeln und Metalloxidmatrix unterscheidet sich die erfindungsgemäße Schicht signifikant von rein stöchiometrischen oder auch nicht-stöchiometrischen Metalloxidschichten. Die erfindungsgemäße Schicht bewirkt optisch ein metallisches Aussehen mit hohem Hell-Dunkel-Flop. In Abhängigkeit von der Größe und/oder der Konzentration der Metallnanopartikel und/oder der Schichtdicke kann gleichzeitig eine dunkle bis schwarze Farbgebung eintreten. Daher werden Effektpigmente, basierend auf dieser Schicht, optisch als Metalleffektpigmente wahrgenommen. In ihren mechanischen Eigenschaften jedoch gleichen die erfindungsgemäßen Metalleffektpigmente eher typischen Perlglanzpigmenten, die auf Metalloxiden basieren.

Erfindungsgemäß ist es bei einer weiteren Variante der Erfindung bevorzugt, dass das Metalleffektpigment wenigstens drei Schichten umfasst:

A) eine Schicht A, welche wenigstens ein Metall $M_A$ und einen durchschnittlichen Gehalt an Sauerstoff $O_A$, bezogen auf den Gesamtgehalt an $M_A$ und $O_A$ in der Schicht A aufweist,
B) eine Schicht B mit wenigstens einem Metall $M_B$ und einem durchschnittlichen Gehalt an Sauerstoff $O_B$ von 0 bis 77 Atom-%, bezogen auf den Gesamtgehalt an $M_B$ und $O_B$ in der Schicht B,
C) eine Schicht C, welche wenigstens ein Metall $M_C$ und einen durchschnittlichen Gehalt an Sauerstoff $O_C$, bezogen auf den Gesamtgehalt an $M_C$ und $O_C$ in der Schicht C, aufweist,

wobei der durchschnittliche Sauerstoffgehalt $O_{AC}$ in den Schichten A und C gemäß der Formel (I)

$$O_{AC} = \frac{1}{2}\left(\frac{O_A}{M_A + O_A} + \frac{O_C}{M_C + O_C}\right) \qquad \text{(I)}$$

bestimmt wird und in einem Bereich von 8 bis 77 Atom-% liegt, mit der Maßgabe, dass wenigstens eine der Schichten A, B oder C Metallnanopartikel enthält.

Gemäß einer weiteren Variante dieser Ausführungsform liegt der durchschnittliche Gehalt an Sauerstoff $O_{AC}$ in den Schichten A und C in einem

Bereich von 10 bis 74 Atom-%, weiter bevorzugt von 15 bis 70 Atom-%, noch weiter bevorzugt in einem Bereich von 20 bis 64 Atom-%. Die Angaben beziehen sich jeweils auf den Gesamtgehalt an $M_A$, $O_A$, $M_C$ und $O_C$ in der Schichten A und C.

Gemäß einer weiteren bevorzugten Ausführungsform liegt der durchschnittliche Gehalt an Sauerstoff $O_A$, bezogen auf den Gesamtgehalt an $M_A$ und $O_A$ in der Schicht A, sowie der durchschnittliche Gehalt an Sauerstoff $O_C$, bezogen auf den Gesamtgehalt an $M_C$ und $O_C$ in der Schicht C, unabhängig voneinander jeweils in einem Bereich von 25 bis 58 Atom-%, bevorzugt von 30 bis 57 Atom-%.

Bei einwertigen Metallen liegt der durchschnittliche Gehalt an Sauerstoff $O_{AC}$ in den Schichten A und C vorzugsweise in einem Bereich von 8 bis 30 Atom-%. Bei zweiwertigen Metallen liegt der Gehalt an Sauerstoff $O_{AC}$ vorzugsweise in einem Bereich von 25 bis 48 Atom%. Bei dreiwertigen Metallen liegt der Gehalt an Sauerstoff $O_{AC}$ vorzugsweise in einem Bereich von 30 bis 58 Atom-%. Bei vierwertigen Metallen liegt der Gehalt an Sauerstoff $O_{AC}$ vorzugsweise in einem Bereich von 35 bis 64 Atom-%.

Gemäß einer noch weiteren Variante der Erfindung beträgt in der Schicht A des Metalleffektpigmentes der Gesamtgehalt an $M_A$ und an $O_A$ 80 bis 100 Atom-%, bezogen auf sämtliche Komponenten der Schicht A.

Gemäß einer noch weiteren Variante der Erfindung beträgt in der Schicht A des Metalleffektpigmentes der Gesamtgehalt an $M_C$ und an $O_C$ 80 bis 100 Atom-%, bezogen auf sämtliche Komponenten der Schicht C.

Gemäß einer noch weiteren Variante der Erfindung beträgt in der Schicht A und der Schicht C des Metalleffektpigmentes der Gesamtgehalt an $M_A$ und an $O_A$ 80 bis 100 Atom-% und der Gesamtgehalt an $M_C$ und $O_C$ 80 bis 100 Atom-%, jeweils bezogen auf sämtliche Komponenten der Schicht A bzw. C.

Gemäß einer äußerst bevorzugten Ausführungsform der Erfindung wird bei den vorstehend beschriebenen Varianten eines wenigstens drei Schichten umfassenden Metalleffektpigments das Metall aus der Gruppe, die aus Aluminium, Chrom, Mischungen und Legierungen davon besteht, ausgewählt.

Bei einer bevorzugten Verwendung von Aluminium als Metall lassen sich Metalleffektpigmente bereitstellen, die beispielweise einen goldfarbenen Grundfarbton zusätzlich zum Regenbogeneffekt aufweisen.

Die erfindungsgemäßen Metalleffektpigmente lassen sich beispielsweise in Kosmetika verwenden. Kosmetika unterliegen strengsten Vorschriften in Bezug auf zulässige Bestandteile. Schwermetalle dürfen bei der Herstellung von Kosmetika keine Verwendung finden. Insoweit ist die Bereitstellung von schwermetallfreien Metalleffektpigmenten mit Regenbogeneffekt und einem einstellbaren Grundfarbton von großem Vorteil, beispielsweise in der Kosmetikindustrie aber auch in der Lack-, Farb- oder Kunststoffindustrie.

Gemäß einer weiteren Variante der Erfindung ist das Metalleffektpigment mit einer Korrosionsschutzschicht, die optional oberflächenmodifiziert ist, umhüllt.

Die erfindungsgemäßen Metalleffektpigmente können mit einer, vorzugsweise umhüllenden, Schutzschicht gegen Korrosion versehen sein. Die Schutzschicht kann dabei Metalloxid und/oder Kunststoff umfassen oder daraus bestehen.

Gemäß einer bevorzugten Ausführungsform der Erfindung ist die Metalloxidschicht unter Verwendung von Sol-Gel-Verfahren aufgebracht. Vorzugsweise handelt es sich bei dem Metalloxid um Siliciumoxid, Aluminiumoxid, Ceroxid oder Mischungen davon.

Bei einer weiteren Variante der Erfindung sind die erfindungsgemäßen Metalleffektpigmente mit einer Kunststoffschicht versehen. Vorzugsweise handelt es sich hierbei um Polyacrylat- und/oder Polymethacrylatschicht.

Selbstverständlich können auch Mischschichten aus Metalloxid und Kunststoff aufgebracht werden. Auch ist eine sequentielle Anordnung möglich, bei der die Kunststoffschicht(en) und Metalloxidschicht(en) nacheinander angeordnet sind.

Gemäß einer bevorzugten Variante der Erfindung wird als Korrosionsschutzschicht eine Siliciumoxidschicht, vorzugsweise $SiO_2$-Schicht, verwendet. Die Siliciumoxiclschicht ist vorzugsweise mittels Sol-Gel-Verfahren aufgebracht, wobei vorzugsweise Tetralkoxysilane bei einer ersten Variante unter sauren oder basischen Bedingungen in einem einstufigen Verfahren oder bei einer zweiten Variante zunächst unter sauren und sodann basischen Bedingungen in einem zweistufigen Verfahren oder bei einer dritten Variante zunächst unter basischen und sodann sauren Bedingungen in einem zweistufigen Verfahren hydrolysiert und Siliciumoxid, vorzugsweise $SiO_2$, auf den erfindungsgemäßen Metalleffektpigment abgebracht wird. Bei den Tetraalkoxysilanen handelt es sich vorzugsweise um Tetramethoxysilan, Tetraethoxysilan und/oder Tetrapropoxysilan.

Selbstverständlich kann die Metalloxidschicht auch durch Hydrolyse von Metallsalzen, wie beispielsweise Metallhalogeniden, vorzugsweise Metallchloriden, aufgebracht sein.

Gemäß einer weiteren bevorzugten Ausführungsform ist die Metalloxidschicht, vorzugsweise Siliciumoxidschicht, organisch-chemisch modifiziert. Bei dieser organisch-chemischen Oberflächenmodifizierung kann es sich um Hydrophobierungsmittel, wie beispielsweise Alkylsilane handeln. Es können aber auch reaktive Oberflächenmodifizierungsmittel angeordnet sein, die reaktive funktionelle organische Gruppen aufweisen. Bei diesen reaktiven funktionellen organischen Gruppen kann es sich um Acryl-, Methacryl-, Vinyl-, Epoxid-, Hydroxyl-, Amino-, Mercapto-Gruppen, etc. handeln. Über diese reaktiven funktionellen Gruppen ist eine chemische Anbindung, beispielsweise an das oder die Bindemittel einer Farbe, Druckfarbe oder eines Lackes oder Kunststoffes möglich. Durch die chemische Anbindung werden die Metalleffektpigmente besser eingebunden, so dass die Korrosionsbeständigkeit der Metalleffektpigmente und/oder die Schwitzwasserbeständigkeit eines Lackes signifikant verbessert werden.

Die erfindungsgemäßen Metalleffektpigmente werden unter Verwendung von physikalischer Dampfabscheidung (PVD: physical vapour deposition) erhalten.

Das Verfahren umfasst dabei folgende Schritte:

(a1) Aufbringen einer Trennschicht auf ein linear bewegbares Substrat
(a2) Einbringen einer diffraktiven Struktur in die Trennschicht, vorzugsweise durch Einprägen,
(a3) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff,
oder
(b1) Aufbringen einer Trennschicht auf ein linear bewegbares Substrat
(b2) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff,

(b3) Einbringen einer diffraktiven Struktur auf und/oder in mindestens eine Fläche der in Schritt (b2) aufgebrachten PVD-Schicht, vorzugsweise durch Einprägen,

sowie

c) Ablösen der aufgedampften und mit einer diffraktiven Struktur versehenen PVD-Schicht(en),

d) Zerkleinern der abgelösten PVD-Schicht(en),

e) optional Überführen der zerkleinerten PVD-Schicht(en) in eine Dispersion oder Paste.

Unter "reaktiver physikalischer Dampfabscheidung" wird erfindungsgemäß die Abscheidung von Metalldampf in Gegenwart von Sauerstoff, beispielsweise reiner Sauerstoff oder Luft, oder einer Sauerstoff abgebenden Quelle, beispielsweise Wasser, verstanden. Bei dieser reaktiven physikalischen Dampfabscheidung (PVD) wird Metalloxid und Metall, beispielsweise in Form von Metallnanopartikeln, abgeschieden.

Die reaktive physikalische Dampfabscheidung wird vorzugsweise bei einem Druck in einem Bereich von $1x10^{-5}$ bis $1x10^{-2}$ mbar, vorzugsweise von $1x10^{-4}$ bis $1x10^{-3}$ mbar, durchgeführt. Um eine effektive Umsetzung von Metalldampf und Sauerstoff zu bewirken, wird der Sauerstoff bei einem geringeren Druck vorzugsweise näher an der Metalldampfquelle zugeführt als bei einem höheren Druck.

Bei der Herstellung der erfindungsgemäßen Metalleffektpigmente können zwei Ansätze gewählt werden, die sich im Hinblick auf die Ausbildung der diffraktiven Struktur unterscheiden.

Bei dem ersten Ansatz wird die auf dem linear bewegbaren Substrat, üblicherweise eine Kunststofffofie, beispielsweise Polyesterfolie, aufgebrachte Trennschicht, die auch als "release coat" bezeichnet wird, mit einer diffraktiven Struktur versehen und sodann das Metall aufgedampft.

Bei dem zweiten Ansatz wird auf das linear bewegbare Substrat, üblicherweise eine Kunststofffolie, beispielsweise Polyesterfolie, eine Trennschicht aufgebracht, auf die sodann das Metall aufgedampft wird. Nach Aufdampfung des Metallfilmes wird sodann die diffraktive Struktur in den Metallfilm eingebracht.

Die diffraktive Struktur kann beispielsweise durch Prägen in die Trennschicht oder den aufgedampften Metallfilm eingebracht werden. Das Prägen kann beispielsweise unter Verwendung eines Prägestempels oder eine Prägewalze erfolgen. Hierbei wird ein Negativabdruck des Prägestempels oder der Prägewalze in die Trennschicht oder die aufgedampfte Metallschicht eingebracht.

In Bezug auf die Prägemuster wird auf die vorstehenden Ausführungen zu den geprägten oder geformten Metalleffektpigmenten verwiesen. Die Ausführungen gelten entsprechend.

Das Bedampfen mit Metall kann auf herkömmliche Art und Weise, beispielsweise durch Elektronenstrahltechnologie, Sputtern oder widerstands- bzw. strahlungsbeheizte Verfahren erfolgen. Dabei können mehrere Verdampfer in Reihe und/oder parallel zueinander angeordnet werden.

Die Dicke der Metallschichten kann dabei durch Transmissionsmessungen kontrolliert werden. Die Transmissionen sind meist aufgrund des teilweise oxidischen Charakters der Folienschicht geringer als bei der Verdampfung reiner Metalle.

Bei Erzeugung von farbigen Oxidschichten, die beispielsweise auf einer reflektiven Metallschicht aufgebracht werden, können auch Reflexionsmessungen zur Steuerung bzw. Regelung des Verdampfungsprozesses herangezogen werden.

Der beim Bedampfungsschritt zugeführte Sauerstoff oder ein Sauerstoff abgebendes Mittel kann durch eine Vielzahl möglicher Verfahrensvarianten in die zur Bedampfung verwendete Vakuumkammer eingebracht werden. In der Regel wird der Sauerstoff mit Mass Flow Controllern geregelt und an gewünschter Positionierung in die Vakuumkammer zudosiert.

Die Sauerstoffquelle, beispielsweise Sauerstoff oder das Sauerstoff abgebende Mittel, beispielsweise Wasser oder Wasserdampf, kann direkt und zentral, oder diffus und homogen verteilt in den Metalldampf, oder beabstandet zur Metalldampfquelle in die Vakuumkammer eingebracht werden.

Durch eine zentrale Anordnung von Metalldampfquelle und Sauerstoffquelle oder durch eine diffuse Zugabe der Sauerstoffquelle kann eine Schicht mit homogen verteilten Metallnanopartikeln in einer Metalloxidmatrix hergestellt werden.

Unter einer diffusen Zugabe wird eine Zugabe verstanden, bei der die Sauerstoffquelle so in die Vakuumkammer eingebracht wird, dass in der Vakuumkammer kein Gradient in Bezug auf die Sauerstoffquelle erzeugt wird, mithin in der Vakuumkammer eine homogene Verteilung der Sauerstoffquelle gegeben ist.

Sowohl bei zentraler Anordnung von Metalldampf und Sauerstoffzufuhr als auch bei diffuser Zugabe der Sauerstoffquelle wird eine homogene Verteilung der Metallnanopartikel in der Metalloxidphase oder Metalloxidschicht erzeugt.

Bei einer räumlichen Beabstandung von Metalldampferquelle und Sauerstoffquelle in Bezug auf die Bewegungsrichtung des zu bedampfenden Substrates kommt es zu einer Überlagerung eines Metalldampfes mit radial abfallender Metalldampfkonzentration und einer Sauerstoffquelle, beispielsweise Sauerstoffgas, mit radial abnehmender Konzentration und zur Erzeugung einer Schicht auf dem Substrat mit einem Metallnanopartikelgradient in einer Metalloxidmatrix.

Bei dezentraler Anordnung der Sauerstoffzufuhr in Bezug auf die Metaildampfquelle wird mithin ein Gradient an Metallnanopartikeln in einer Metalloxidphase oder Metalloxidmatrix erzeugt. Ist die Sauerstoffzufuhr in Bezug auf die Bewegungsrichtung des linear bewegten Substrates, beispielsweise Bandes, vor der Metalldampfquelle angeordnet, so wird zu Beginn mehr Metalloxid und weniger Metallnanopartikel abgeschieden. Nachfolgend nimmt in Bewegungsrichtung des Substrates der Anteil an Metallnanopartikeln zu und der Anteil an Metalloxid ab.

Ist die Sauerstoffzufuhr, bezogen auf die Bewegungsrichtung des Substrates, nach der Metalldampfquelle angeordnet, so werden zunächst mehr Metallnanopartikel und weniger Metalloxid abgeschieden. Nachfolgend nehmen in Bewegungsrichtung des Substrates der Anteil an Metallnanopartikel ab und der Anteil an Metalloxid zu. Durch die beabstandete Anordung der Metaildampfquelle und der Sauerstoffzufuhr oder Sauerstoffquelle ist es mithin möglich, einen Gradienten an Metallnanopartikeln in einer Metalloxidphase oder Metalloxidmatrix zu erzeugen.

In Abhängigkeit von der Entfernung der Anordnung der Sauerstoffzufuhr zur Metalldampfquelle kann der Metalloxidgehalt auch auf null abnehmen, so dass eine reine Metallschicht als eine der beiden Außenflächen des Metalleffektpigmentes aufgebracht wird. Mithin kann ein zweischichtiges erfindungsgemäßes Metalleffektpigment in einem einstufigen Verfahren aufgebracht werden. Die erste Schicht enthält hierbei einen Gradienten an Metallnanopartikeln in einer Metalloxidschicht, wobei der relative Anteil an Metallnanopartikeln zunimmt, der relative Anteil an Metalloxid abnimmt und schließlich eine durchgehende Metallschicht, die in Abhängigkeit von der Schichtdicke als Absorber oder Reflektor wirkt, aufgebracht ist.

Die vorliegende Erfindung betrifft somit Verfahren, mit denen erfindungsgemäße Metalleffektpigmente hergestellt werden können, bei denen die wenigstens eine Schicht, die Metallnanopartikel in eine Metalloxidphase oder Metalloxidmatrix enthält, einen homogenen Aufbau oder einen Gradienten aufweist.

Somit betrifft die vorliegende Erfindung gemäß einer weiteren Variante ein Verfahren zur Bereitstellung von Metalleffektpigmenten, die wenigstens eine im wesentlichen homogen, vorzugsweise homogen, aufgebaute Schicht, die Metallnanopartikel und Metalloxidphase oder Metalloxidmatrix enthält, mit folgenden Schritten:

(a1) Aufbringen einer Trennschicht auf ein linear bewegbares Substrat,
(a2) Einbringen einer diffraktiven Struktur in die Trennschicht, vorzugsweise durch Einprägen,
(a3) Bedampfen eines linear bewegten Substrates in einer einen Bedampfungsabschnitt aufweisenden Vakuumkammer mittels reaktiver physikalischer Dampfabscheidung (PVD) mit wenigstens einem Metall in Gegenwart von Sauerstoff, so dass sich ein Teil des Metalls mit Sauerstoff unter Bildung von Metalloxid umsetzt und nicht umgesetztes Metall in Form von Metallnanopartikeln und gebildetes Metalloxid über den Bedampfungsabschnitt im wesentlichen homogen, vorzugsweise homogen, verteilt in Bezug auf die Bewegungsrichtung des linear bewegten Substrats abgeschieden werden unter Erhalt einer PVD-Schicht oder mehrerer aufeinander angeordneter PVD-Schichten,
oder
(b1) Aufbringen einer Trennschicht auf ein linear bewegbares Substrat,
(b2) Bedampfen eines linear bewegten Substrates in einer einen Bedampfungsabschnitt aufweisenden Vakuumkammer mittels reaktiver physikalischer Dampfabscheidung (PVD) mit wenigstens einem Metall in Gegenwart von Sauerstoff, so dass sich ein Teil des Metalls mit Sauerstoff unter Bildung von Metalloxid umsetzt und nicht umgesetztes Metall in Form von Metallnanopartikeln und gebildetes Metalloxid über den Bedampfungsabschnitt im wesentlichen homogen, vorzugsweise homogen, verteilt in Bezug auf die Bewegungsrichtung des linear bewegten Substrats abgeschieden werden unter Erhalt einer PVD-Schicht oder mehrerer aufeinander angeordneter PVD-Schichten,
(b3) Einbringen einer diffraktiven Struktur auf und/oder in mindestens eine Fläche der in Schritt (b2) aufgebrachten PVD-Schicht, vorzugsweise durch Einprägen,
sowie
(c) Ablösen der aufgedampften und mit einer diffraktiven Struktur versehenen PVD-Schicht(en),
(d) Zerkleinern der abgelösten PVD-Schicht(en),
(e) optional Überführen der zerkleinerten PVD-Schicht(en) in eine Dispersion oder Paste.

Weiterhin betrifft die vorliegende Erfindung gemäß einer weiteren Variante ein Verfahren zur Bereitstellung von Metalleffektpigmenten, die wenigstens eine Gradientenschicht, die Metallnanopartikel und Metalloxidphase oder Metalloxidmatrix enthält, mit folgenden Schritten:

(a1) Aufbringen einer Trennschicht auf ein linear bewegbares Substrat,
(a2) Einbringen einer diffraktiven Struktur in die Trennschicht, vorzugsweise durch Einprägen,

(a3) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff, so dass sich ein Teil des Metalls mit Sauerstoff unter Bildung von Metalloxid umsetzt und nicht umgesetztes Metall in Form von Metallnanopartikeln und gebildetes Metalloxid über den Bedampfungsabschnitt unter Bildung eines Gradienten in Bezug auf die Bewegungsrichtung des linear bewegten Substrats abgeschieden werden unter Erhalt einer PVD-Schicht oder mehrerer aufeinander angeordneter PVD-Schichten,
oder
(b1) Aufbringen einer Trennschicht auf ein linear bewegbares Substrat,
(b2) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff, so dass sich ein Teil des Metalls mit Sauerstoff unter Bildung von Metalloxid umsetzt und nicht umgesetztes Metall in Form von Metallnanopartikeln und gebildetes Metalloxid über den Bedampfungsabschnitt unter Bildung eines Gradienten in Bezug auf die Bewegungsrichtung des linear bewegten Substrats abgeschieden werden unter Erhalt einer PVD-Schicht oder mehrerer aufeinander angeordneter PVD-Schichten,
(b3) Einbringen einer diffraktiven Struktur auf und/oder in mindestens eine Fläche der in Schritt (b2) aufgebrachten PVD-Schicht, vorzugsweise durch Einprägen,
sowie
(c) Ablösen der aufgedampften und mit einer diffraktiven Struktur versehenen PVD-Schicht(en),
(d) Zerkleinern der abgelösten PVD-Schicht(en),
(e) optional Überführen der zerkleinerten PVD-Schicht(en) in eine Dispersion oder Paste.

Gemäß einer weiteren Variante der Erfindung umfasst das Verfahren folgende Schritte:

(a1) Aufbringen einer Trennschicht auf ein linear bewegbares Substrat,
(a2) Einbringen einer diffraktiven Struktur in die Trennschicht, vorzugsweise durch Einprägen,
(a3) Sequentielles Aufbringen von Schichten A, B und C übereinander mittels physikalischer Dampfabscheidung durch Aufdampfen von Metallen $M_A$, $M_B$ und $M_C$ auf ein linear bewegtes Substrat, wobei zumindest die Schichten A und/oder C in Gegenwart wenigstens einer Sauerstoffabgebenden Sauerstoffquelle aufgedampft werden und wobei entsprechend das Substrat für die Schicht A und/oder B eine Trennschicht mit diffraktiver Struktur aufweist,
oder
(b1) Aufbringen einer Trennschicht auf ein linear bewegbares Substrat,
(b2) Sequentielles Aufbringen von Schichten A, B und C übereinander mittels physikalischer Dampfabscheidung durch Aufdampfen von Metallen $M_A$, $M_B$ und $M_C$ auf ein linear bewegtes Substrat, wobei zumindest die Schichten A und/oder C in Gegenwart wenigstens einer Sauerstoffabgebenden Sauerstoffquelle aufgedampft werden und wobei entsprechend das Substrat für die Schicht A und/oder B eine Trennschicht mit diffraktiver Struktur aufweist,
(b3) Einbringen einer diffraktiven Struktur auf und/oder in mindestens eine Fläche der in Schritt (b2) aufgebrachten PVD-Schicht, vorzugsweise durch Einprägen,
sowie
(c) Ablösen der aufgedampften PVD-Schicht(en),
(d) Zerkleinern der abgelösten PVD-Schicht(en),
(e) optional Überführen der zerkleinerten PVD-Schicht(en) in eine Dispersion oder Paste.

Zur Erzeugung von einer im Wesentlichen homogenen Verteilung der Metallnanopartikel in einer oxidischen Matrix sind mehrer Varianten möglich.

Bei einer Metallverdampfung, beispielsweise unter Verwendung eines Verdampfertiegels (10), wie in den Abb. 2 bis 6 veranschaulicht, wird zentral über dem Verdampfer, beispielsweise Verdampfertiegel (10), ein Bereich mit sehr hoher Metalldichte erzeugt, die radial abfällt.

Die Sauerstoffquelle, beispielsweise Sauerstoff, kann, wie in Abb. 2 veranschaulicht, diffus in die Vakuumkammer (1), über den Sauerstoffeinlass (15), eingelassen werden. Der Metalldampf bzw. das Metalloxid wird sodann auf dem linear bewegten Substrat (14), das über eine Quellerolle (3) und eine Umlenkrolle (4) durch den Blendeneingang (11) zugeführt wird, abgeschieden. Das bedampfte Substrat wird nachfolgend über den Blendenausgang (12), die Umlenkrolle (5) zur Aufnehmerrolle (6) zugeführt. Zwischen dem Blendeneingang (11) und Blendenausgang (12) befindet sich der Bedampfungsausschnitt (13), in dem das Substrat (14) bedampft wird. Der Abscheidungsvorgang auf dem Substrat (14) wird mittels Transmissionsmessung (7; 8) kontrolliert.

In Abb. 3 ist eine vereinfachte Vorrichtung zur Durchführung des erfindungsgemäßen Verfahrens dargestellt. Die Sauerstoffquelle, beispielsweise Sauerstoff, wird über den Gaseinlass 20.1 diffus in die Vakuumkammer gegeben. Der Verdampfertiegel (10) ist unter dem zu bedampfenden Substrat angeordnet. Der Bedampfungsausschnitt (13) ist durch die Abdeckplatte (18) am Blendeneingang (16) und die Abdeckplatte (19) am Blendenausgang (17) definiert.

Diese einfache Variante kann beispielsweise zur Herstellung sehr dünner Metallschichten mit einer Dicke von kleiner als 30 nm verwendet werden. Bevorzugt werden hier Metallnanopartikel-haltige Metalloxidschichten von Titan, Aluminium und/oder Chrom hergestellt.

Die Homogenität der Schichten kann durch eine leicht verminderte Metallverdampfungsrate verbessert werden, da sich dann der Sauerstoff in den sich ausbildenden Metallverdampfungskegel leichter dispergiert.

Um höhere Schichtdicken als 30 nm, bevorzugt 40 -50 nm, zu erzeugen, kann der Sauerstoff auch durch seitlich angeordnete Sauerstofflanzen (20.2, 20.3, 20.4) mit entsprechenden Öffnungen gezielter in den Verdampfungskegel eingebracht werden, wie dies in den Abb. 4, 5 und 6 veranschaulicht ist. Die Zuführung über seitliche Sauerstofflanzen (20.2, 20.3, 20.4) kann einseitig (Abb. 4 und Abb. 6) oder zweiseitig (Abb. 5) erfolgen.

Die beschichteten Substrate, üblicherweise Folien, zeigen ein zunächst dunkles graues transparentes leicht farbstichiges Erscheinungsbild bei Sauerstoffgehalten für Al bzw. Cr von 40-55 Atom-%.

Nach Ablösung und Zerkleinerung des aufgedampften Films kommt der jeweilige Farbeffekt des Pigmentes in einer Applikation zur Geltung, da mehrere Pigmente übereinanderliegen und einen gemeinsamen Farbeindruck vermitteln.

Eine weitere vorteilhafte Variante ist es, bei sehr hohen Metallverdampfungsraten den Sauerstoff oder die Sauerstoffquelle direkt oberhalb des Verdampfungstiegels (10) oder Verdampfungsschiffs zuzuführen. Exemplarisch ist dies auch in Abbildung 4 und 6 dargestellt.

Für eine optimale Umsetzung des Metalls ist im Besonderen die in Abbildung 6 dargestellte Geometrie geeignet, da sowohl der Sauerstoff oder die Sauerstoffquelle als auch das verdampfte Metall zentral zugeführt und in Abhängigkeit von der Sauerstoffmenge vor der Abscheidung auf dem bewegten Substrat umgesetzt werden.

Zur Herstellung von erfindungsgemäßen Metalleffektpigmenten, bei denen sich der Gehalt an Metall zwischen der wenigstens einen Schicht, die Metallnanopartikel und Metalloxidphase oder Metalloxidmatrix enthält, und einer zweiten Schicht um wenigstens 10 Atom-% unterscheidet, kann eine käufliche Metallreflektorfolie, beispielsweise Aluminiumfolie mit einer Schichtdicke in einem Bereich von bevorzugt von 10nm-50nm bedampft werden. Die Aluminiumfolie kann vor der Bedampfung durch Prägung mit einer diffraktiven Struktur versehen werden. Hier werden gemäß einer bevorzugten Variante oxidisch eingebettete Metallnanopartikel von Cr, Ti und/oder Al aufgebracht, die im Zusammenwirken mit dem Metallreflektor, beispielsweise Aluminiumreflektor oder Aluminiumschicht, ein blaues Erscheinungsbild auf der beschichteten Folie ergeben können. Besonders vorteilhaft ist für eine Blaufärbung auf einem Aluminiumreflektor (Aluminiumfolie) eine Schichtdicke von oxidisch eingebetteten Metallnanopartikel von Cr, Al oder Ti von ca. 60 nm,

Nach Ablösung und Zerkleinerung des Films werden erfindungsgemäße Metalleffektpigmente erhalten, die sich zum einen durch einen starken metallischen Effekt und zum anderen durch eine leichte Blaustichigkeit auszeichnen. Die diffraktive Struktur der Metalleffektpigmente verleiht den Metalleffektpigmenten ein edles metallisches blaustichiges mit einem Regenbogen versehenes Erscheinungsbild.

Die Herstellung von erfindungsgemäßen Metalleffektpigmenten, die einen Metallnanopartikelgradienten in einer Metalloxidmatrix enthalten, kann beispielsweise mit einer Vorrichtung erfolgen, die in Abb. 5 dargestellt ist, wobei die Sauerstoffquelle, beispielsweise Sauerstoff, nur einseitig, d.h. über den in Abb. 5 dargestellten linken oder rechten Gaseinlass, erfolgt.

Ein Vorteil bei dieser Verfahrensvariante liegt darin, dass sich der Prozess über Reflexionsmessungen steuern lässt, da eine vorzugsweise blaue Beschichtung auf einem metallischen Reflektor erzeugt wird.

Die Stärke des Regenbogeneffektes kann hierbei durch die in die Folie eingeprägte diffraktive Struktur beeinflusst werden. Bei geprägten Folien, die nur teilweise eine Prägung aufweisen, wird beispielsweise der metallische Glanz erhöht und der Regenbogeneffekt in der Endanwendung in einem Lack oder einer Farbe dezent eingestellt.

Bei einer weiteren bevorzugten Ausführungsform weisen die erfindungsgemäßen Metalleffektpigmente einen dreischichtigen Aufbau auf, wobei in den Schichten A, B und C die Metalle $M_A$, $M_B$ und $M_C$ gleich und vorzugsweise Aluminium sind. Mit der in der Abb. 6 dargestellten Vorrichtung können goldfarbene geprägte Effektpigmente auf einfache Weise bereitgestellt werden.

Bei dieser Variante wird zentral über dem Verdampfer Sauerstoff in den Metallverdampfungskegel zugeführt.

Diese Verfahrensvariante zeichnet sich in vorteilhafter Weise dadurch aus, dass bei einer zugeführten definierten Sauerstoffmenge bzw. Metalldampfmenge pro Zeiteinheit goldfarbene geprägte Metalleffektpigmente, d.h. Pigmente mit diffraktiver Struktur, mit unterschiedlichen Schichtdicken hergestellt werden können. Die Schichtdicken können dabei über die eingestellte Geschwindigkeit des Substrates, üblicherweise eine Kunststofffolie, gesteuert werden. Es ergibt sich bei Verwendung von Aluminium als Metall $M_A$, $M_B$ und $M_C$ hierbei ein "Goldbereich" für Schichtdicken von 30 nm bis 250 nm bevorzugt von 50 nm bis 150 nm besonders bevorzugt von 70 nm bis 100 nm. Der Sauerstoffanteil liegt bei diesen Metalleffektpigmenten bei sämtlichen Schichten A, B und C bevorzugt zwischen 30 und 35 Atom-%.

So kann dieses Verfahren auch in einfacher Weise genutzt werden, um durch weitere Sauerstoffgaszuführung die Größe der Metallnanopartikel zu verkleinern und bei unterschiedlichen Schichtdicken dunkle bis schwarze Pigmente zu generieren.

Es ergibt sich hierbei ein "Schwarzbereich" für Schichtdicken von 15 nm bis 250 nm bevorzugt von 30 nm bis150 nm besonders bevorzugt von 50 nm bis 100 nm. Der Sauerstoffanteil liegt bei dieser Variante der Metalleffektpigmente in sämtlichen Schichten A, B und C vorzugzweise in einem Bereich zwischen 45 und 55 Atom-%.

Eine weitere bevorzugte Ausführungsform, bei der das Metall $M_B$ verschieden von den Metallen $M_A$ und $M_C$ ist, sind stellt die Abfolge des verdampften Metalls mit Cr/Al/Cr dar.

Erfindungsgemäße Metalleffektpigmente mit diesem Aufbau zeichnen sich dadurch durch eine besondere Korrosionsbeständigkeit aus. Die außenliegenden Chrom und/oder Chromoxidschichten schützen die zentrale angeordnete dünne Aluminiumnanopartikel-haltige Aluminiumoxidschicht, die beispielsweise eine Schichtdicke in einem Bereich von 15 bis 25 nm aufweist, effektiv vor Korrosion. Käufliche silberfarbene Pigmente diesen Schichtdickenbereichs gemäß, zeigen in entsprechenden QUV und Chemikalientest keine Beständigkeit.

Eine besonders bevorzugte Ausführungsform stellt hierbei eine hochglänzendes geprägtes Pigment dar. Die Schichtdicken der Schichten A und C, die Chromnanopartikel in Chromoxid aufweisen, liegen in einem Bereich von 15 bis 20 nm und der Sauerstoffgehalt liegt zwischen 35 bis 58 Atom-%, bevorzugt von 40 bis 45 Atom-%. Die Schicht B ist bei dieser Ausführungsform ein PVD-Aluminiumschicht, die nicht unter reaktiven Bedingungen aufgedampft wurde. Diese Aluminiumschicht kann oberflächlich Aluminiumoxid enthalten. Der Kern dieser Aluminiumschicht besteht aus metallischem Aluminium, das nicht in Form von Aluminiumnanopartikeln vorliegt. Die Schichtdicke der Schicht B liegt in einem Bereich von 15 bis 50 nm, bevorzugt von 20 bis 30 nm.

Als besonders vorteilhaft wirkt sich hier aus, dass auf Grund der geringen Schichtdicken der Chromnanopartikelhaltigen Chromoxid-Schicht mit gleichen Bandgeschwindigkeiten wie bei der Beschichtung mit der Aluminiumschicht beschichtet werden kann. Typische Bandgeschwindigkeiten können hier bei 800 m/min oder auch höher liegen. Die Sauerstoffdosierung in eine dünne Cr-Schicht von 15 nm kann auf einfache Weise über einen diffusen Sauerstoffeinlass gemäß Abbildung 3 erfolgen.

Beschreibung der Abbildungen

Abbildung 1 zeigt den schematischen Aufbau eines erfindungsgemäßen Metalleffektpigmentes mit geprägter Oberfläche mit enthaltenen Metallnanopartikeln in einer oxidischen Matrix.

Abbildung 2 zeigt den Aufbau einer PVD-Vorrichtung in einer Vakuumkammer 1 in Form einer Bandbeschichtungsanlage mit einer Quellrolle 3, von der das linear bewegliche Substrat 14 abgerollt wird. Das Substrat wird dann über die Umlenkrollen 4 und 5 zur Aufnehmerrolle 6 geführt. Die Blenden 11 bzw. 11.1 und 12 bzw. 12.1 legen den Beschichtungsraum dar. Die Blenden 11 und 12 begrenzen den Bedampfungsabschnitt 13, in dem das linear bewegte Substrat mittels PVD bedampft wird. Die Blenden 11.1 und 12.1 trennen die Bedampfungseinheit mit Verdampfertiegel 10 von der Umgebung ab. Die Transmissionsmessung 7 und 8 bzw. die Schwingquarzmessung 9 erlauben eine Bestimmung der Menge von abgeschiedenem Metalloxid und elementarem Metall.

Die Abbildungen 3 bis 6 zeigen besondere Ausgestaltungen der in Abbildung 2 veranschaulichten Vorrichtung.

Abbildung 3 zeigt einen alternativen Aufbau in dem in Abschnitt 2 von Abb. 2 eingegrenzten Bereich mit einer linken Abdeckplatte 16 (11 und 11.1) für den Folieneingang in den Beschichtungsraum bzw. einer rechten Abdeckplatte für den Folienausgang 17 (12 und 12.1) aus dem Beschichtungsraum. Der Beschichtungsbereich des Substrats ist weiterhin durch die Abdeckplatten 18 und 19 begrenzt. Außerhalb des Abschnitts 2 ist eine kleine Öffnung für einen optionalen diffusen Gaseinlass angedeutet in der linken Vakuumkammerwand 15 vorgesehen.

Abbildung 4 zeigt einen alternativen Aufbau in dem in Abschnitt 2 von Abb. 2 eingegrenzten Bereich. Die Gaszuführung ist durch ein horizontales Gaseinlassrohr 20.2 zentral über dem Verdampfertiegel 10 mit drei kleinen Öffnungen von jeweils ca. 1 mm Durchmesser eingezeichnet. Die Ausströmöffnungen sind durch drei kleine Pfeile angedeutet.

Abbildung 5 zeigt einen alternativen Aufbau in dem im Abschnitt 2 von Abb. 2 eingegrenzten Bereich mit einem oberen Beschichtungsausschnitt 13.1 und einem unterem Beschichtungsausschnitt 13.2. Der obere Beschichtungsausschnitt 13.1 wird durch die Vorrichtung 16 und 19 begrenzt. Der untere Beschichtungsausschnitt 13.2 wird durch die untere linke Abdeckplatte 18.1 und einer rechten unteren Abdeckplatte 19.1 beschrieben. Die Gaszuführung wird durch ein rechts, linksseitiges Gaseinlassrohr mit jeweils drei kleinen Öffnungen, von jeweils ca. 1 mm Durchmesser von jeder Seite gezeigt. Die Ausströmöffnungen sind durch kleine Pfeile angedeutet.

Abbildung 6 zeigt einen alternativen Aufbau in dem im Abschnitt 2 von Abb. 2 eingegrenzten Bereich, bei der die Gaszuführung

mit einem Gaseinlass durch ein in Verdampfungsrichtung vertikales Rohr 20.4 und einer Öffnung von ca. 4 mm realisiert wird. Das vertikale Rohr befindet sich auf einer Achse mit dem Verdampfertiegel 10

Abbildung 7 zeigt die Draufsicht auf die Anordnung der Blenden, um einen sequenziellen Schichtaufbau auf dem sich mit konstanter Bandgeschwindigkeit bewegenden Substrat für Beispiel 7 bzw. Vgl-Beispiel 7 zu erzeugen. Die Längsblenden 21, 22.1 bzw. 22.2 und 23 grenzen dabei die Beschichtungsbereiche für die Beispiele 7a, 7b und 7c bzw. die Vergleichsbeispiele 7a, 7b und 7c ein.

Abbildung 8 zeigt ein TEM-Bild der PVD-Schicht aus Beispiel 1. Die dunklen Flecken sind Metallnanopartikel.

Abbildung 9 zeigt das zur Abbildung 8 der PVD-Schicht aus Beispiel 1 zugehörige Elektronenbeugungsbild. Die Beugungsreflexe sind in konzentrischen Ringen angeordnet. Der Reflex nullter Ordnung ist ausgeblendet. Die konzentrischen Ringe zeigen, dass es sich bei den schwarzen Flecken aus Abb. 8 um Metallnanopartikel handelt.

Abbildung 10 stellt die Intensitätsverteilung der Elektronenbeugungsreflexe der oxidischen Aluminiumschichten aus dem erfindungsgemäßen Beispiel 1 dar. Aufgetragen ist die Reflexionsintensität über dem reziproken Gitterabstand.

Abbildung 11a und 12a stellen jeweils mittels XPS/ESCA-Sputterprofilen bestimmte Konzentrationsverteilungen der Elemente Sauerstoff (O), elementares Metall (Al(0) bzw. Ti(0)) und Kohlenstoff (C) für die Pigmente der erfindungsgemäßen Beispiele 4 und des Vergleichsbeispiel 4 dar.

Abbildung 11b und 12b stellen jeweils das Verhältnis von elementarem Metall zu oxidierten Metall in Atom-% über die Schichtdicke dar, wobei diese Abbildungen zu den Abbildungen 11a und 12a korrespondieren, jedoch ohne den Anteil an Sauerstoff.

Die Abbildungen 13a, 13b und 13c stellen die farbmetrischen CIELAB Daten der L*; H* und C* - Daten der Pigmente des erfindungsgemäßen Beispiels 1 und der Vergleichsbeispiele 9, 9a, 9b und 9c dar.

Abbildung 13.d stellt die spektrale Auswertung der Farbmessung der Spektren von 12 $\mu$m Rakelabzügen der Pigmente des Beispiels 1 und der Vergleichsbeispiele 9, 9a, 9b und 9c im sichtbaren Wellenlängenbereich von jeweils 400-700 nm unter den drei vermessenen Glanzwinkeln von jeweils 25°, 45°, und 75° dar.

Abbildung 14a und 14b zeigt die Gegenüberstellung der H*-Verläufe der CIELAB Daten der Pigmente der erfindungsgemäßen Beispiele 1-6 und der Vergleichsbeispiele 8 und 9 und der Vergleichsbeispiele 1-6

Abbildung 15 zeigt die Blickrichtung 29 eines Betrachters um eine gewölbte und beleuchtete Rakelapplikation durch die Lichtquellen 27.1, 27.2 und 27.3 gemäß Tabelle 5. Das dem Beobachter durch die Blickrichtung erzeugte Erscheinungsbild in den Reflexionspunkten 24, 25 und 26 ist in Tabelle 5 zusammengestellt.

Abbildung 16 beschreibt die geometrische Anordnung für die farbmetrische Vermessung der Rakelabzüge. Die Lichtquelle 30 strahlt dabei konstant auf eine in 45° geneigte Fläche 31, auf die der jeweilige Rakelabzug angeordnet ist.

Abbildung 17 zeigt den Gehalt an Metallnanopartikel in einem Metalleffektpigment in Abhängigkeit vom Sauerstoffgehalt und der Oxidationsstufe des Metalls.

Abbildung 18 eine REM-Aufnahme der Metalleffektpigmente des erfindungsgemäßen Beispiels 1, bei der die eingeprägten zylinderstumpfartigen Strukturen sehr gut erkennbar sind.

## Beispiele

Im Folgenden wird die Herstellung, Charakterisierung und farbmetrische Bewertung der erfindungsgemäßen Metalleffektpigmente anhand von Beispielen und Vergleichsbeispielen beschrieben, ohne die Erfindung zu beschränken.

**Teil A:** Herstellung der erfindungsgemäßen Metalleffektpigmente anhand der erfindungsgemäßen Beispiele 1-7 und der Vergleichsbeispiele 1-7 und 8, die den Stand der Technik veranschaulichen. Die Beispiele 1-7 (geprägt) und die Referenzbeispiele Vgl.-1-7 (ungeprägt) sind korrespondierend durch das Beschichtungsverfahren erstellt und haben deshalb den gleichen strukturellen Aufbau innerhalb der erfindungsgemäßen Pigmente (Beispiele 1-7) und den Pigmenten aus dem Stand der Technik (Vgl.-Beispiele 1-7).

**Teil B**: Charakterisierung des strukturellen Aufbaus der erfindungsgemäßen PVD-Metalleffektpigmente gemäß den Beispielen 1, 2, 7c und den Vergleichsbeispielen Vgl.-3a, Vgl.-4a, Vgl.-4b, Vgl.-8 und Vgl.-9 anhand von TEM Messungen (Durchsicht, Beugung).
Zur weiteren Charakterisierung wurden eine käufliche Metaluretype Vgl.-Beispiel 9 und eine intern erstellte silberfarbene Metaluretype Vgl.-Beispiel 8 auf ihren strukturellen Aufbau untersucht.

**Teil C**: Charakterisierung des strukturellen Aufbaus der erfindungsgemäßen Pigmente anhand von EDX-Messungen siehe Stofftabelle 2.

**Teil D**: Charakterisierung des Verlaufs an Sauerstoff bzw. Metall über die Schichtdicke von der oberen Fläche A zur unteren Fläche B anhand von Sputterprofilen (Elementanalyse ESCA und Aussage über die Oxidationszustände des in der Schicht enthaltenen Metalls) der erfindungsgemäßen Beispiele 4 und dem Vergleichsbeispiel 4

**Teil E**: Farbmetrische Bewertung der erfindungsgemäßen geprägten PVD-Metalleffektpigmente

**Teil A: Herstellung der erfindungsgemäßen Metalleffektpigmente und Vergleichspigmenten gemäß den erfindungsgemäßen Beispielen 1-7 und den Vergleichspigmenten 1-7 und 8**

**Schritt 1:** Beschichtung der Trägerfolie

Die allgemeine Herstellung der Metalleffektpigmente erfolgte gemäß den Verfahrensparametern in Tabelle 1.

Für die einzelnen Beispiele und Referenzbeispiele wurde zusätzlich auf eine bereits aufgewickelte ungeprägte Folie (Quellrolle 3 gemäß Abbildung 2) im direkten Anschluß jeweils einige Meter einer geprägten Folie der Firma CfC aufgespult. Als Referenzrolle wurde eine ungeprägte Polyethylenterephthalat-(PET)-Folie mit einer Dicke von 23 $\mu$m, welche mit einem Releasecoat beschichtet war, als Substrat verwendet. Der Releasecoat bestand aus acetonlöslichem Methylmethacrylatharz und wurde in einem separaten Arbeitsschritt auf herkömmliche Weise vorab aufgebracht.

Als Verdampfungsverfahren wurde das Elektronenstrahl-Verdampfungsverfahren verwendet.

Weiterhin wurde zwischen einem einstufigen und einem zweistufigen, sowie einem dreistufigen Beschichtungsverfahren unterschieden.

Das einstufige Verfahren beschreibt die Herstellung von PVD-Metalleffektpigmenten gemäß den Beispielen mit einem einzigen Beschichtungsschritt.

Das zweistufige Verfahren beschreibt die Herstellung von PVD-Metalleffektpigmenten gemäß erfindungsgemäßen Beispielen durch zwei aufeinanderfolgende separate Beschichtungsschritte.

Das dreistufige Verfahren beschreibt die Herstellung von PVD-Metalleffektpigmenten gemäß erfindungsgemäßen Beispielen durch drei aufeinanderfolgende separate Beschichtungsschritte.

Die Kontrolle einer konstanten Beschichtungsrate der Schichtdicken der aufgedampften PVD-Metallschicht bzw. des mit eingebauten Oxids auf dem Substrat erfolgte über die erzeugte Massenbelegung an einem sich stationär in einer Vakuumkammer 1 befindenden Schwingquarz 9 und einer Online-Transmissionsmessung 7 und 8 gemäß Abbilddung 2.

Die erzeugte Massenbelegung auf dem Substrat wird dabei vom Substratabstand zum Metallverdampfer, der Länge L der Blendenöffnung, der Bandgeschwindigkeit des Substrates und der jeweiligen Verdampfungsrate bestimmt.

Der für die Beispiele benötigte Gasfluss wurde durch einen Gasflussregler (Mass Flow Controller) der Firma MKS, München, Deutschland, zugeführt. Der Ort der jeweiligen Sauerstoffzuführung ist in den Abbildungen 3, 4, 5 und 6 schematisch dargestellt.

Die Massenbelegung auf dem Substrat wurde bei den Beispielen nach Ablösung von der Folie durch Auswaage ermittelt.

Eine konstante Beschichtungsrate wurde durch eine Schwingquarzmessung 9 bzw. eine Online-Transmissionsmessung 7 und 8 gemäß Abbildung 2 gewährleistet.

**Tabelle 1** Verfahrensparameter für die erstellten Beispiele

| Substrat | Patentbeispiel | Verdampfter Stoff | Verdampfungs-geometrie | Bandgeschwin-digkeit $[m*min^{-1}]$ | Sauerstoffmenge [sccm] | Kammervakuum $[1*10^{-4}$ mbar] | Massenbelegung $[g*m^{-1}]$ | Art des Bandverfahrens |
|---|---|---|---|---|---|---|---|---|
| Geprägt | 1 | Al | Abbildung 5 | 32 | 500 | 1,7 | 0,076 | Einschicht |
| | 2 | Cr | Abbildung 6 | 32 | 400 | 9 | 0,141 | Einschicht |
| | 3a | Cr | Abbildung 3 | 24 | 300 | 2,5 | 0,055 | |
| | 3b | Al | Abbildung 3 | 20 | - | 0,9 | 0,1 | |
| | 3c | Cr | Abbildung 3 | 24 | 300 | 1,38 | 0,117 | |
| | 3 | | | | | | 0,272 | Dreischicht |
| | 4a | Al | Abbildung 3 | 20 | - | 1,15 | 0,054 | |
| | 4b | Ti | Abbildung 6 | 16 | 1100 | 3,95 | 0,207 | |
| | 4 | | | | | | 0,276 | Zweischicht |
| | 5 | Al | Abbildung 6 | 32 | 200 | 5,7 | 0,176 | Einschicht |
| | 6 | Al | Abbildung 6 | 16 | 500 | 3,5 | 0,283 | Einschicht |
| | 7a | Al | Abbildung 6 und Abbildung 7 | 16 | 500 | 2 | | |
| | 7b | Al | | | | | | |
| | 7c | Al | | | | | | |
| | 7 | Al | | | | | 0,324 | Einschicht |
| Ungeprägt | Vgl.-1 | Al | Abbildung 5 | 32 | 500 | 1,7 | 0,076 | Einschicht |
| | Vgl.-2 | Cr | Abbildung 6 | 32 | 400 | 9 | 0,141 | Einschicht |
| | Vgl.-3a | Cr | Abbildung 3 | 24 | 300 | | 0,055 | |
| | Vgl.-3b | Al | Abbildung 3 | 20 | - | 0,9 | 0,1 | |
| | Vgl.-3c | Cr | Abbildung 3 | 24 | 300 | 1,38 | 0,117 | |

| | | | | | | | | |
|---|---|---|---|---|---|---|---|---|
| | Vgl.-3 | | | | | | 0,272 | Dreischicht |
| | Vgl.-4a | Al | Abbildung 3 | 20 | - | 1,15 | 0,054 | |
| | Vgl.-4b | Ti | Abbildung 6 | 16 | 1100 | 3,95 | 0,207 | |
| | Vgl.-4 | | | | | | 0,276 | Zweischicht |
| | 5 | Al | Abbildung 6 | 32 | 200 | 5,7 | 0,176 | Einschicht |
| | Vgl.-6 | Al | Abbildung 6 | 16 | 500 | 3,5 | 0,283 | Einschicht |
| | Vgl.-7a | Al | Abbildung 6 und Abbildung 7 | 16 | 500 | 2 | | |
| | Vgl.-7b | Al | | | | | | |
| | Vgl.-7c | Al | | | | | | |
| | Vgl.-7 | Al | | | | | 0,324 | Einschicht |
| Geprägt | Vgl.-8 | Al | Abbildung 3 | 20 | - | 1,1 | 0,121 | Einschicht |

**Schritt 2: Ablösung von der Trägerfolie und Zerkleinerung**

Nach erfolgter physikalischer Dampfabscheidung wurden die einzelnen PVD-Schichten bzw. PVD-Schichtpakete gemäß den jeweiligen Beispielen von der Trägerfolie durch das Ablösen mit Lösemittel von dem mit releasecoatbeschichteten Substrats erreicht. Bei den so erhaltenen Suspensionen wurden Reste der Trennschicht ("Releasecoat") mit Lösemittel von den abgelösten PVD-Schichten bzw. PVD-Schichtpaketen getrennt und gewaschen.
Das äußere durch das Beschichtungsverfahren erzeugte Erscheinungsbild der Pigmente ist in der Tabelle 3 nach dem Ablösen der Pigmente von der Trägerschicht angegeben.
Die Zerkleinerung der abgelösten Schichten kann beispielsweise, wie unter Punkt E beschrieben, erfolgen.

**Teil B:**

Charakterisierung des strukturellen Aufbaus der erfindungsgemäßen PVD-Metalleffektpigmente gemäß den Beispielen 1, 2, 7c und den Vergleichsbeispielen Vgl.-3a, Vgl.-4a, Vgl.-4b, Vgl.-8 und Vgl.-9 anhand von TEM Messungen (Durchsicht, Beugung).
Zur weiteren Charakterisierung wurden eine käufliche Metaluretype Vgl.-Beispiel 9 und eine intern erstellte silberfarbene Metaluretype Vgl.-Beispiel 8 auf ihren strukturellen Aufbau untersucht.
Als Gerät wurde ein Zeiss 922 Omega (Fa. Zeiss) verwendet. Dieses war mit einem CCD-Detektor vom Typ Ultrascan 1000 (Fa. Gatan) bestückt. Als abbildendes Medium diente ein Elektronenstrahl, der die PVD-Metalleffektpigmente bzw. deren Schichtabschnitt gleichmäßig und weitgehend parallel durchleuchtete. Die Beschleunigungsspannung betrug 200 kV. Die Elektronen wurden an Inhomogenitäten in der Probe gestreut und an Gitterstrukturen gebeugt. Nach dem Verlassen der Schicht wurden die Elektronen durch eine Elektronenoptik in die Zwischenbildebene fokussiert und nach dem Durchlaufen einer weiteren Vergrößerungsstufe mittels eines elektronischen CCD - Kamerasystems abgebildet. Man erhielt auf diese Weise ein reelles Abbild der durchleuchteten Schicht. TEM-Aufnahmen der erfindungsgemäßen Beispiele zeigten, dass Metallkristallite von wenigen Nanometern Größe in einer weitgehend amorphen Matrix aus Metalloxid vorlagen. Abbildung 8a zeigt exemplarisch eine TEM-Aufnahme für Beispiel 1.
Demgegenüber zeigten die Vergleichsbeispiele 8 und 9 eine grundsätzlich andere Struktur als die oben beschriebenen Materialien. Man fand die klassische metallische Struktur mit gut ausgebildeten Kristallen unterschiedlicher Orientierung. Exemplarisch ist dies in Abbildung 8b für Vergleichsbeispiel 9 dargestellt.
Die abbildenden monoenergetischen Elektronen werden bei der Durchstrahlung der Proben an kristallinen Strukturen gebeugt. Analog zum Debye-Scherrer-Verfahren bei feinkörnigem Kristallpulver regelloser Orientierungen liegen die Elektronenbeugungsreflexe auf Kreisbögen, auf denen die Bragg-Bedingungen für die jeweiligen Kristallnetzebenen erfüllt sind.
Anhand der Lage, der Verteilungen und der Intensitäten der Beugungsreflexe im Elektronenbeugungsbild lässt sich eindeutig nachweisen, dass die beugenden Strukturen der erfindungsgemäßen Beispiele aus kleinen Kristalliten von metallischem Aluminium, Chrom bzw. Titan bestehen. Diese sind statistisch orientiert und jeweils so klein und in so großer Zahl vorhanden, dass sich die jeweiligen Reflexe zu einem kontinuierlichen Beugungsring überlappen. Dieser Sachverhalt ist exemplarisch in Abbildung 9a für das erfindungsgemäße Beispiel 1 dargestellt. Abbildung 10 zeigt exemplarisch die Messung der Beugungsintensität für das erfindungsgemäße Beispiel 1.
Demgegenüber weisen die Vergleichsbeispiele 8 und 9 sehr scharfe und diskrete Beugungsreflexe auf. Das beweist, dass nur wenige große Kristallite an der Beugung beteiligt sind. Die Abbildung 9b zeigt exemplarisch für das Vergleichsbeispiel 9 diese Zusammenhänge.
Bei den erfindungsgemäßen Beispielen mit Metallnanopartikeln aus Aluminium findet man weiterhin einen breiten Untergrund an Streureflexen. Neben den Al-Beugungsreflexen sind keine weiteren Reflexe nachweisbar, so dass davon ausgegangen werden kann, dass die Matrix, die die Metallkristallite umgibt, amorph ist.
Der Verlauf der Reflexintensität im Elektronenbeugungsbild der erfindungsgemäßen Chromschichten für Beispiel 2 oder 3a zeigt, dass die Beugungsmaxima exakt an den Stellen liegen, die von metallischem Chrom zu erwarten sind und zeigen die entsprechende Intensitätsverteilung im reziproken Raum. Die Reflexe sind deutlich verbreitert, was ebenfalls beweist, dass die beugenden Metallkristalle nur nanometergroß sein können. Damit ist die Existenz dieser Cr-MetallMetallnanopartikel sicher nachgewiesen. Neben den Chrom-Reflexen findet sich ein weiterer Reflex über einem kontinuierlich abfallenden Intensitätsuntergrund. Das lässt den Schluss zu, dass das Chromoxid nicht ausschließlich amorph ist, sondern teilkristallin vorliegt.
Entsprechende Ergebnisse erhält man für die Titanschicht des Beispiels 4b. Auch hier findet man kleinste Metallkristallite in einer teilkristallinen Oxidmatrix.

**Teil C: Charakterisierung mittels REM und EDX**

Analytische Sauerstoffbestimmung mittels EDX-Messungen:

Von den Schichten gemäß den erfindungsgemäßen Beispielen 1-7 bzw. der Vergleichsbeispiel 1-7 wurden die Zusammensetzung von Sauerstoff und Metall mit der oben beschriebenen Messmethodik mittels EDX (Gerät: EDAX Gemini; Fa. EDAX Incorp., USA) ermittelt. Es zeigte sich eine Übereinstimmung der stofflichen Daten auf Grund der gleichen Beschichtungsparameter, wie oben bereits (unter Schritt 1) beschrieben.

Probenvorbereitung:

Die Schichten wurden in einem Lösemittel dispergiert und zerkleinert. Einige Tropfen der Dispersion wurden auf einen Probenteller aufgegeben und das Lösemittel bei Raumtemperatur langsam verdampft. Dabei orientierten sich die Schichten weitgehend parallel zur Telleroberfläche.

Messung:

Von den Schichten der erfindungsgemäßen Beispiele wurde das mittlere atomare Verhältnis von Sauerstoff zu Metall bestimmt.

Dazu wurden zuerst mittels rasterelektronenmikroskopischer Aufnahmen Bereiche gesucht, an denen mindestens 4 bis 5 einzelne separate PVD-Schichten übereinanderlagen. An diesen Stellen wurde gemessen. Für die Messungen an den Aluminium/Aluminiumoxidschichten wurde eine Beschleunigungsspannung von 5kV gewählt, für die Chrom/Chromoxidschichten wurde mit einer Spannung von 8 kV gearbeitet. Auf diese Weise wurde sichergestellt, dass für eine gute Mittelwertbildung stets mehrere Schichten gleichzeitig angeregt wurden, ohne dass der Substratuntergrund mitgemessen wurde. Es wurden jeweils für Sauerstoff die K-Linie (Anregungsenergie: ca. 0,5 keV), für Chrom die $K\alpha$-Linie (Anregungsenergie: ca. 5,4 keV) und für Aluminium die $K\alpha$-Linie (Anregungsenergie: ca. 1,5 keV) angeregt. Das angeregte Röntgenspektrum wurde ausgemessen und aus dem Peakhöhenverhältnis mit Hilfe eines Softwareprogramms der Anteil an Sauerstoff bzw. Metall bestimmt.

## Tabelle 2 Stoffdaten

| Substrat | Patent-beispiel | Ver-dampfter Stoff | Schicht-dickeaus REM [nm] | Atomarer Sauerstoff [%] EDAX-Analyse | Atomarer Sauerstoff [%] ESCA-Analyse | Nanopartikel-anteil aus ESCA-Analyse | Über die stöchiometrie berechneter metallischer -bzw. Metallnanopartikelanteil | Schichtsystem |
|---|---|---|---|---|---|---|---|---|
| Geprägt | 1 | Al | 33 | 44 | | | 27 | Einschicht |
| | 2 | Cr | 35-38 | 43-46 | | | 20 | Einschicht |
| | 3a | Cr | 23-25 | 53 | | | 12 | |
| | 3b | Al | 26-29 | 18 | | | 70 | |
| | 3c | Cr | 31-35 | 34 | | | 43 | |
| | 3 | | 77 | 24 | | | | Dreischicht |
| | 4a | Al | 24-26 | | s Abb. 11a | | | |
| | 4b | Ti | 80-87 | | s. Abb. 11a | | | |
| | 4 | | 93-101 | 50-63 | | s. Abb. 11a | | Zweischicht |
| | 5 | Al | 80 | 30 | | | | Einschicht |
| | 6 | Al | 112-119 | 54 | | | 10 | Einschicht |
| | 7a | Al | 53 | 38 | | | 37 | |
| | 7b | Al | 65 | 50 | | | 17 | |
| | 7c | Al | 49 | 48 | | | 20 | |
| | 7 | Al | 156-169 | 38 | | | 37 | Einschicht |
| Ungeprägt | Vgl.-1 | Al | 33 | 44 | | | 27 | Einschicht |
| | Vgl.-2 | Cr | 35-38 | 43-46 | | | 20 | Einschicht |
| | Vgl.-3a | Cr | 23-25 | 53 | | | 12 | |
| | Vgl.-3b | Al | 26-29 | 18 | | | 70 | |

| | | | | | | | | |
|---|---|---|---|---|---|---|---|---|
| | Vgl.-3c | Cr | 31-35 | 34 | | | 43 | |
| | Vgl.-3 | | 77 | 24 | | | | Dreischicht |
| | Vgl.-4a | Al | 24-26 | | s. Abb. 12a | | | |
| | Vgl.-4b | Ti | 80-87 | | s. Abb. 12a | | | |
| | Vgl.-4 | | 93-101 | 50-63 | | s. Abb. 12a | | Zweischicht |
| | 5 | Al | 80 | 30 | | | 50 | Einschicht |
| | Vgl.-6 | Al | 112-119 | 54 | | | 10 | Einschicht |
| | Vgl.-7a | Al | 53 | 38 | | | 37 | |
| | Vgl.-7b | Al | 65 | 50 | | | 17 | |
| | Vgl.-7c | Al | 49 | 48 | | | 20 | |
| | Vgl.-7 | Al | 156-169 | 38 | | | 37 | Einschicht |
| | Vgl.-8 | Al | 51-60 | 16 | | | 72 | |
| | Vgl.-9 | Al | 46-49 | 25 | | | 58 | |
| | Vgl.-9a | | | | | | | |
| | Vgl.-9b | | | | | | | |
| | Vgl.-9c | | | | | | | |

**Teil D:** Charakterisierung des Verlaufs an Sauerstoff bzw. Metall über die Schichtdicke von der oberen Fläche A zur unteren Fläche B für das erfindungsgemäßen Beispiele 4 und das Vergleichsbeispiel 4 durch Photoelektronenspektroskopie (XPS/ESCA) und Sputterprofilmessungen

Zur genaueren strukturellen Charakterisierung wurden die beschichteten Folien des Beispiels 4 und des Vergleichsbeispiels 4 mittels ESCA untersucht.

Eingesetzte Analyseverfahren und Geräte

Photoelektronenspektroskopie

Mit Hilfe der Photoelektronenspektroskopie (ESCA/XPS) kann die atomare Zusammensetzung der Oberfläche einer Probe quantitativ bestimmt werden. Zudem können durch Hochauflösungsspektren Informationen zum chemischen Bindungszustand der einzelnen Elemente gewonnen werden. Die Informationstiefe liegt bei dieser Methode bei etwa 5 -10 nm, die Nachweisgrenze bei etwa 0,1 bis 1 Atom-%.

Die Messung wurde mit einem Gerät der Firma Thermo VG Scientific, Typ ESCALAB 250, durchgeführt. Für die Anregung wurde monochromatische Al $K_{\alpha}$ Röntgenstrahlung verwendet (15 kV, 150 W, 500 μm Spotgröße). Die Transmissionsfunktion des Gerätes wurde an einer Kupferprobe gemessen. Zur Ladungskompensation kam eine "Flood-Gun" mit einer Elektronenenergie von 6 eV / 0,05 mA Strahlstrom zum Einsatz. Die Energielage wurde für die Auswertung so eingestellt, dass die Kohlenstoff-Hauptlinie bei 285 eV liegt.

Für die Messung der Spektren wurden folgende Einstellungen verwendet: Übersichtsspektren wurden mit einer Pass-Energie von 80 eV, Hochauflösungsspektren mit 30 eV, gemessen. Auf nicht magnetischen Proben kam dabei die Magnetlinse zum Einsatz.

Quantitative Angaben über die Oberflächenzusammensetzung wurden mittels Scofield-Faktoren an Übersichtsmessungen berechnet.

Sputtertiefenprofil

Aus den Tiefenprofilen ergeben sich für die einzelnen Proben die im Folgenden aufgeführten Verteilungen der Elemente in der Tiefe. Die Profile der einzelnen Elemente wurden nur soweit angefertigt, wie es die Datenlage in den Spektren erlaubt. Bei sehr geringem Anteil eines Elementes im analysierten Volumen kann keine eindeutige Aussage über den Oxidationszustand getroffen werden. Als Schichtdicke ist der Punkt definiert, in dem der Anteile der betrachteten Elemente gleich groß ist. Bei unterschiedlichen Metallen werden hierbei immer die Werte der beiden Metalle herangezogen.

Auswertung Beispiel 4 (s. Abb. 11a und 11b):

- Die Titanschichtdicke beträgt ca. 55 nm, die Aluminiumschichtdicke ca. 25 nm.
- Titan liegt an der Oberfläche überwiegend oxidiert vor. Im Bereich von ca. 10-50 nm Schichtdicke liegt es zu gleichen Anteilen metallisch und oxidiert vor.
- Aluminium liegt in der "Mitte" der Aluminiumschicht weniger stark oxidiert vor als an den Schichträndern. An der Foliengrenze ist der Oxidationsgrad höher als auf der Titangrenze.
- Kohlenstoff liegt im wesentlichen als Substrat vor.

Auswertung Vergleichsbeispiel 4 (s. Abb. 12a und 12b):

- Die Titanschichtdicke beträgt ca. 75 nm, die Aluminiumschichtdicke ca. 25 nm.
- Titan liegt an der Oberfläche überwiegend oxidiert vor. Im Bereich von ca. 10-70 nm liegt es zu gleichen Anteilen metallisch und oxidiert vor.
- Aluminium liegt in der "Mitte" der Aluminiumschicht weniger stark oxidiert vor als an den Schichträndern. An der Foliengrenze ist der Oxidationsgrad höher als auf der Titangrenze.

**<u>Teil E:</u> Farbmetrische Bewertung der erfindungsgemäßen geprägten PVD-Metalleffektpigmente und Pigmenttypen nach dem Stand der Technik**

Zur farbmetrische Vermessung (Tabelle 3) der Pigmente der Beispiele 1-6 und den Vergleichsbeispielen 1-6 sowie den Vergleichsbeispielen 8, 9, 9a,9b und 9c wurden Farbkarten erstellt.

| Substrat | Patentbeispiel | Äußeres Erscheinungsbild der Pigmente |
|---|---|---|
| Geprägt | 1 | dunkel blaustichig metallisch, prismatisch glänzende Pigmente |
| | 2 | dunkelgrau metallisch, prismatisch glänzende Pigmente |
| | 3a | |
| | 3b | |
| | 3c | |
| | 3 | dunkel goldfarben, metallisch prismatisch glänzende Pigmente |
| | 4a | |
| | 4b | |
| | 4 | blaustichig silbermetallisch, prismatisch glänzende Pigmente |
| | 5 | goldfarben, metallisch glänzende, prismatische Pigmente |
| | 6 | dunkelgrau metallisch, prismatisch glänzende Pigmente |
| | 7a | |
| | 7b | |
| | 7c | |
| | 7 | dunkelgrau metallisch, prismatisch glänzende Pigmente |

| | | |
|---|---|---|
| Ungeprägt | Vgl.-1 | dunkel blaustichig metallisch glänzende Pigmente |
| | Vgl.-2 | dunkelgrau metallisch, prismatisch glänzende Pigmente |
| | Vgl.-3a | |
| | Vgl.-3b | |
| | Vgl.-3c | |
| | Vgl.-3 | dunkel goldfarben, metallisch glänzende Pigmente |

| | | |
|---|---|---|
| | Vgl.-4a | |
| | Vgl.-4b | |
| | Vgl.-4 | blaustichig silbermetallisch, prismatisch glänzende Pigmente |
| | 5 | goldfarben, metallisch glänzende Pigmente |
| | Vgl.-6 | dunkelgrau metallisch glänzende Pigmente |
| | Vgl.-7a | |
| | Vgl.-7b | |
| | Vgl.-7c | |
| | Vgl.-7 | dunkelgrau metallisch glänzende Pigmente |
| geprägt | Vgl.-8 | sibermetallisch, prismatisch glänzende Pigmente |
| geprägt | Vgl.-9 | sibermetallisch, prismatisch glänzende Pigmente |
| geprägt | Vgl.-9a | braun prismatische Pigmentmischung |
| geprägt | Vgl.-9b | braun prismatische Pigmentmischung |
| geprägt | Vgl.-9c | braungrau prismatische Pigmentmischung |

Tabelle 3

Hierzu wurden jeweils von der Trägerfolie geometrisch gleiche Beschichtungsflächen gemäß Tabelle 4 von der Trägerfolie abgelöst und vom Release Coat gewaschen. Es wurden demnach bis auf die Beispiele 9b und 9c immer gleiche Beschichtungsflächen verwendet.
Die Vorpigmente der Beispiele 1-6 und Vergleichsbeispiele 1-6 und 8 wurden danach in 80 ml Ethylacetat suspendiert und mit einem Turrax 5 Minuten bei einer Drehzahl von 24.000 Umdrehungen/min zerkleinert.
Die resultierenden Partikelgrößen (D50-Werte) sind hierbei in Tabelle 4 erfasst.

Das bereits in Pigmentform vorliegende sehr grobe prismatische Metalure mit einem D50 von 50 μm des Vergleichsbeispiels 9 und der Vergleichsbeispiele 9a, 9b und 9c wurde nach dem wie oben beschriebenen Verfahren entsprechend zerkleinert.
Für die Abmischungen der Vergleichsbeispiele 9a, 9b und 9c wurde ebenfalls das Vergleichsbeispiel 9 zerkleinert und stand danach für die Schwarzabmischungen zur Verfügung. Die resultierende Partikelgröße des Vergleichsbeispiels 9 ist ebenfalls in Tabelle 4 erfasst.

Das jeweilige PVD-Metalleffektpigment der Beispiele 1-6 und der Vergleichsbeispiele 1 und 6 und des Vergleichbeispiels 8 und 9 wurde gemäß der Tabelle 4 in die genannten Lacksystem eines konventionellen Nitrocelluloselackes (Dr. Renger Erco Bronzemischlack 2615e; Fa. Morton) eingerührt. Die Pigmente der Vergleichsbeispiele 9a, 9b und 9c wurden in einen Schwarzlack (5% Noir Covachip W9702ET+20% Butylacetate+75% Intern.Lacquers Base 359) eingerührt. Aufgrund der kleineren zu Pigmenten verarbeiteten Beschichtungsflächen der Vergleichsbeispiele 9b und 9c erhält man mit dem Schwarzlack verschiedene Abtönungen. Dabei wurde jeweils das PVD-Metalleffektpigment vorgelegt und anschließend in das jeweilige Lacksystem unter zu Hilfenahme von Ethylacetat dispergiert.
Der fertige Lack wurde auf einem Rakelabzugsgerät mit der in Tabellen 4 genannten Nassfilmdicke von 12 μm auf Prüfkarten der Nr. 2853 der Fa. Byk Gardner (Schwarz-Weiß-Kontrastpapier) appliziert.

Tabelle 4

| **Farbansätze feine Pigmente, die nicht deckend appliziert wurden** | | | | | |
|---|---|---|---|---|---|
| **Beispiel** | **Abgelöste Pigmentfläche [m$^2$]** | **Lacksystem** | | **D50 [μm]** | **Rakeltiefe [μm]** |
| | | **NC [g]** | **Schwarzlack [g]** | | |
| 1 | 0,435 | 2 | | 10,75 | 12 |

(fortgesetzt)

| Farbansätze feine Pigmente, die nicht deckend appliziert wurden | | | | | |
|---|---|---|---|---|---|
| Beispiel | Abgelöste Pigmentfläche [$m^2$] | Lacksystem | | D50 [μm] | Rakeltiefe [μm] |
| | | NC [g] | Schwarzlack [g] | | |
| 2 | 0,435 | 2 | | 8,11 | 12 |
| 3 | 0,435 | 2 | | 17,85 | 12 |
| 4 | 0,435 | 2 | | 30,14 | 12 |
| 5 | 0,435 | 2 | | 17,5 | 12 |
| 6 | 0,435 | 2 | | 20,8 | 12 |
| Vgl.-1 | 0,435 | 2 | | 9,55 | 12 |
| Vgl.-2 | 0,435 | 2 | | 9,25 | 12 |
| Vgl.-3 | 0,435 | 2 | | 16,94 | 12 |
| Vgl.-4 | 0,435 | 2 | | 20,5 | 12 |
| Vgl.-5 | 0,435 | 2 | | 17,4 | 12 |
| Vgl.-6 | 0,435 | 2 | | 20,5 | 12 |
| Vgl.-8 | 0,435 | 2 | | 14,6 | 12 |
| Vgl-.9 | 0,435 | 2 | - | 12,2 | 12 |
| Vgl-.9a | 1 x 0,435 | - | 2 | | 12 |
| Vgl-.9b | ¼ x 0,435 | - | 2 | | 12 |
| Vgl-.9c | 1/12 x 0,435 | - | 2 | | 12 |

Bei den Pigmentierungshöhen der Beispiele bzw. Vergleichsbeispielen wurde auf eine komplette Deckfähigkeit verzichtet und die Messungen wurden alle auf dem mit dem Rakelabzug beschichteten Schwarzkontrastpapier gemessen.

Sehr dünne Nassfilmdicken haben sich als besonders attraktiv erwiesen, da sie den prismatischen Effekt für einen Betrachter stärker hervorheben, als zum Beispiel Nassfilmdicken von 24 μm oder etwa 50 μm. Des Weiteren zeigte sich, dass bei den dünnen transparenten Beispielen 1 und 2 ein Regenbogeneffekt erzielt werden kann der schwarzblau schimmernd flankiert ist. In besonderem Maße wirkten hier zum einen die in die oxidische Matrix eingebundenen Metallnanopartikel als starke Absorber, zum anderen dient zusätzlich der Schwarzkarton als starker Absorber. Durch diese Effekte des durchschimmernden Schwarzkartons und der dünnen Nassfilmdicke lässt sich somit ein edler Farbeindruck eines bläulich schwarzblau schimmernden flankierten Regenbogens erzeugen.

Der subjektive Farbeindruck wurde durch eine exemplarische Beleuchtung der Farbkarten gemäß der schematischen Beleuchtungs- bzw. Beobachtungsanordnung gemäß Abbildung 15 in Tabelle 5 erfasst. Hierzu wurden die erstellten Farbkarten durch eine entsprechende Vorrichtung gewölbt und mittels drei Lichtquellen gemäß der Abb. 15 beleuchtet. Hierbei traf das eingestrahlte Licht einmal senkrecht auf die gewölbte Farbkarte (mittlere Lampe) und im anderen Fall im wesentlichen in einem 45°-Winkel auf die gewölbte Oberfläche. Der Betrachter konnte nunmehr die gewölbte Oberfläche unter verscheidenen Winkeln betrachten und demgemäß ähnliche Lichtverhältnisse wie bei den farbmetrischen Messungen (Abb. 16) simulieren.
Tabelle 5 fasst die subjektiven Farbeindrücke, der auf diese Weise beleuchteten Farbkaten (des beschichteten Schwarzkartons) der drei angedeuteten Reflexionspunkte 24, 25 und 26 gemäß Abbildung 15 zusammen.

Tabelle 5

| | Farbeindruck gemäß der näherungsweise unter 45° beleuchten Fläche (links) | Farbeindruck in Bereichen senkrechter Reflexion (Mitte) | Farbeindruck gemäß der näherungsweise unter 45° beleuchten Fläche (rechts) |
|---|---|---|---|
| 1 | Starker prismat. schwarzblau schimmernder Effekt | Schwarz glänzend | Starker prismat. schwarzblau schimmernder Effekt |

(fortgesetzt)

| | Farbeindruck gemäß der näherungsweise unter 45° beleuchten Fläche (links) | Farbeindruck in Bereichen senkrechter Reflexion (Mitte) | Farbeindruck gemäß der näherungsweise unter 45° beleuchten Fläche (rechts) |
|---|---|---|---|
| **2** | Starker prismat. schwarzblau schimmernder Effekt | Schwarz glänzend | Starker prismat. schwarzblau schimmernder Effekt |
| **3** | Starker prismat. Effekt | Sehr intensiv goldfarben glänzend | Starker prismat. Effekt |
| **4** | Starker prismat. Effekt | Blau silbrig sehr stark glänzend | Starker prismat. Effekt |
| **5** | Starker prismat. Effekt | Goldfarben glänzend | Starker prismat. Effekt |
| **6** | Starker prismat. Effekt | Antrazit glänzend | Starker prismat. Effekt |
| **Vgl.-1** | Intensiv Schwarz | Schwarz glänzend | Intensiv Schwarz |
| **Vgl.-2** | Intensiv Schwarz | Schwarz glänzend | Intensiv Schwarz |
| **Vgl.-3** | Ins dunkle abkippende Goldfarbe | Sehr intensiv goldfarben glänzend | Ins dunkle abkippende Goldfarbe |
| **Vgl.-4** | Blau silbrig ins dunkle abkippende Farbton | Blau silbrig sehr stark glänzend | Blau silbrig ins dunkle abkippende Farbton |
| **Vgl.-5** | Ins dunkle abkippende Goldfarbe | Hellgoldfarben sehr stark glänzend | Ins dunkle abkippende Goldfarbe |
| **Vgl.-6** | Ins dunkle abkippender Farbton | Antrazit glänzend | Ins dunkle abkippender Farbton |
| **Vgl.-8** | Starker prismat. Effekt | Silbrig gläzend | Starker prismat. Effekt |
| **Vgl-.9** | Starker prismat. Effekt | Silbrig gläzend | Starker prismat. Effekt |
| **Vgl-.9a** | Rostartig gepixelter prismat. | Grau glänzend | Rostartig gepixelter prismat. |
| **Vgl-.9b** | Rostartig gepixelter prismat. | Dunkelgrau glänzend | Rostartig gepixelter prismat. |
| **Vgl-.9c** | Rostartig gepixelter prismat. | Sehr stark Dunkelgrau glänzend | Rostartig gepixelter prismat. |

Die farbmetrische Vermessung der Rakelabzüge erfolgte gemäß Herstellerangaben (Gerät Optronic Multiflash, Berlin, Deutschland). Dabei wurde unter einem konstanten Winkel von 45° eingestrahlt und die CIELAB L*-, a*- und b*-Werte bei Beobachtungswinkeln von 15°, 20°, 25°, 45°,55°, 70°, 75° und 110° relativ zum Glanzwinkel bestimmt (Lichtquelle: D65). Diese Anordnung kommt auch exemplarisch in Abbildung 16 zum Ausdruck.

Zusätzlich wurden von den Rakelabzügen die Reflektivitäten bei jeweils den korrespondierenden Glanzwinkeln von 25°, 45° und 75° über den jeweils sichtbaren Wellenlängenbereich von 400-700 nm vermessen.

Um die Proben bezüglich ihres homogenen Erscheinungsbildes zu untersuchen, wurden die Proben weiterhin mit einem BYK-Mac-Farbmessgerät vermessen.

**Farbmetrische Beurteilung:**

**1. Farbmetrische Beurteilung von Schwarzabmischungen der Vergleichsbeispiele 9a, 9b und 9c des Vergleichsbeispiels 9 mit dem sehr dunklen erfindungsgemäßen Beispiel 1**

1.1 Beurteilung durch L*, H* und -C*-Diagramme:

Die Abbildung 13a zeigt hier zunächst die Abnahme der Helligkeiten der L*-Werte, die durch dass Abmischen des Vergleichsbeispiels 9 mit Schwarzlacksystem bewirkt wird , da der Pigmentanteil des Vergleichsbeispiels 9 innerhalb des Schwarzlacksystems gemäß den Vergleichsbeispielen 9a, 9b und 9c reduziert wird. Vergleichsweise hierzu zeigt das Beispiel 1 ein noch dunkleres Erscheinungsbild bereits bei Beobachtungswinkeln bzw. Glanzwinkeln von 45°.

Die Darstellung der H*-Werte gegen den Glanz- bzw. Beobachtungswinkel entsprechend der Abbildung 13b zeigt, dass der prismatische Effekt bei Beispiel 1 und bei allen Vergleichsbeispielen deutlich erkennbar ist anhand der Modulation des Farbortes im Bereich 15 - 55 °. Selbst bei dem niedrig konzentrierten Vergleichsbeispiel 9c ist der prismatische Effekt noch ausgebildet. Bei hohen Glanz- bzw. Beobachtungswinkeln (70°-110°) jedoch zeigen die Vergleichsbeispiele einen gelbstichigem bzw. braunen Farbbereich. Dagegen zeigt das erfindungsgemäße Beispiel 1 in diesem Bereich einen deutlichen Blaufarbton.

Die Darstellung der C*-Werte Abbildung 13c der Vergleichsbeispiele 9, 9a, 9b und 9c zeigt die Schwächung des Farbchromas durch das Verringern des prismatischen Pigmentanteils des Vergleichbeispiels 9 in den Applikationen der Vergleichsbeispiele von 9a über 9b hinzu 9c.

Im Vergleich zu den Schwarzlackabmischungen 9a, 9b und 9c zeigt Beispiel 1 hierzu ein überraschend starkes Farbchroma in den Beobachtungswinkeln von 20° und 25°. Hier kommt demgemäß der prismatische Effekt besonders stark hervor. Ab 45° erscheint die Probe bereits nur noch schwarz absorbierend.

<u>1.2 Beurteilung durch die Darstellung der Spektren:</u>

Zur Untermauerung und Verdeutlichung der farbmetrischen CIELAB Daten kann auch die im selben Zuge erstellte Aufnahme der Spektren aus Abbildung 13d herangezogen werden.

Die Interpretation der Spektren von 25°, 45° und 75° über den sichtbaren Wellenlängenbereich von 400-700 nm zeigt für das Vergleichsbeispiel 9 seinen charakteristischen Verlauf mit der stärksten Reflexion im blauen Bereich bei Blickrichtung und Beleuchtungsrichtung gemäß Abbildung 16 auf die in 45° angeordnete Farbkarte.

Bei den Vergleichsbeispielen 9a, 9b und 9c wird die Reflektivität in dem Winkel von 25° nach Abnahme des Pigmentgehalts im blauen Wellengenbereich stark vermindert und eine maximale Reflektivität ist hier entgegen im roten Wellenlängenbereich bereits bei 45° zu beobachten. Bei 75° ist die Reflektivität gegenüber Vergleichsbeispiel 9 auch vermindert, jedoch nicht so stark wie bei Beispiel 1.

Völlig überraschend zeigen die Pigmente des Beispiels 1 vergleichsweise zum einen eine starke spektrale Aufspaltung des Lichts in den Glanzwinkel um 25° mit einem Maximum im blauen Wellenlängenbereich und zum anderen ein sehr starkes Abkippen ins Dunkle bei Beobachtungswinkeln von bereits 45° gemäß Abbildung 15.

**<u>2. Farbmetrische Beurteilung von geprägten Pigmenten zu Pigmenten nach dem Stand der Technik</u>**

Um den Unterschied zwischen den geprägten Pigmenten der Beispiele 1-6 sowie der Vergleichsbeispiele 8 und 9 zu Pigmenten ohne Prägstruktur zu verdeutlichen können die farbmetrische Auswertung der H*-Verläufe herangezogen werden. Dieser Vergleich wird durch die Abbildungen 14a und 14b ermöglicht.

Während bei allen geprägten Beispielen ein ähnlicher charakteristischer wellenförmiger Verlauf über den gesamten Farbbereich ("Regenbogen") zu beobachten ist, zeigen die Vergleichsbeispiele 1 und 4 einen horizontalen Kurvenverlauf auf. Die goldfarbenen Vergleichsbeispiele 3 und 6 zeigen hingegen ein steiles Abkippen der Goldfarbe in den dunklen Bereich. Keines der Vergleichsbeispiele zeigt auch nur annähernd einen Regenbogeneffekt wie die geprägten Pigmente.

**<u>3 Beurteilung auf Homogenität bzw. des "Sparkle-Effekts" der Farbkarten:</u>**

Der Sparkle-Effekt und die Körnigkeit einer Oberfläche waren lange nur dem subjektiven Eindruck des Betrachters zugänglich und konnten nicht quantifiziert werden. Die Firma BYK-Gardner brachte jedoch im Jahre 2008 ein neues Gerät auf den Markt (BYK-mac®), mit dem diese Effekte erstmalig quantifiziert werden können. Der Sparkle-Effekt wird mit Hilfe sehr heller weißer LED-Lampen erzeugt, die die Oberfläche unter drei verschiedenen Beleuchtungswinkeln (15°, 45° 75° relativ zur Normalen) beleuchten. Die Körnigkeit wird durch eine diffuse Beleuchtung der Oberfläche mittels einer Ulbricht-Kugel sichtbar gemacht. Mit Hilfe einer senkrecht zur Oberfläche stehenden hochauflösenden CCD-Kamera wird ein Abbild der Oberfläche aufgenommen und aus der Intensität und Verteilung der Helligkeitsmuster werden nach einem Geräte-internen Algorithmus für jede Beleuchtungsrichtung die "Sparkle-Intensität", welche die Helligkeit der einzelnen Flächen widerspiegelt, die "Sparkle-Fläche" als Maß für die Gesamtfläche der sparkelnden Punkte sowie der Körnigkeitskennwert errechnet. Aus den beiden Sparkle-Größen wird der "Sparklegrad" abgeleitet, der zum visuellen Eindruck korreliert: je höher dieser Wert ist, desto stärker empfindet ein Beobachter den Sparkleeffekt einer Oberfläche.

Die oben erwähnten Rakelabzüge der erfindungsgemäßen Beispiele und der Vergleichsbeispiele gemäß Tab. 4 wurden entsprechend mit diesem Gerät vermessen.

Die Ergebnisse der Messungen zeigten, dass mit der gewählten Prägestruktur Abbildung 18 der erfindungsgemäßen Beispiele im Vergleich zu den Vergleichsbeispiel 9 mit einer Prägestruktur als Linienmuster ein homogeneres Erscheinungsbild erzeugt wurde.

**Patentansprüche**

1. Metalleffektpigment,
**dadurch gekennzeichnet,**
**dass** das Metalleffektpigment wenigstens eine diffraktive Struktur und wenigstens eine Schicht, die Metallnanopartikel und Metalloxidphase umfasst, aufweist, wobei das Metall der Metalloxidphase und das Metall der Metallnanopartikel in dieser wenigstens einen Schicht identisch sind, wobei die wenigstens eine Schicht, die Metallnanopartikel und Metalloxidphase umfasst, eine erste Außenfläche und eine zweite Außenfläche aufweist, wobei der Gehalt an Metallnanopartikeln in der ersten Außenfläche und in der zweiten Außenfläche dieser Schicht voneinander verschieden ist und sich um wenigstens 10 Atom-% unterscheidet.

2. Metalleffektpigment nach Anspruch 1,
**dadurch gekennzeichnet,**
**dass** die wenigstens eine Schicht, die Metallnanopartikel und Metalloxidphase umfasst, die wenigstens eine diffraktive Struktur umfasst.

3. Metalleffektpigment nach einem der vorstehenden Ansprüche,
**dadurch gekennzeichnet,**
**dass** das Metall der wenigstens einen Schicht, die Metallnanopartikel und Metalloxidphase umfasst, aus der Gruppe, die aus Aluminium, Magnesium, Chrom, Silber, Kupfer, Gold, Zink, Zinn, Mangan, Eisen, Kobalt, Nickel, Titan, Tantal, Molybdän, Wolfram, deren Mischungen und deren Legierungen besteht, ausgewählt ist.

4. Metalleffektpigment nach einem der vorstehenden Ansprüche,
**dadurch gekennzeichnet,**
**dass** die mittlere Größe der Metallnanopartikel in einem Bereich von 1 bis 50 nm liegt.

5. Metalleffektpigment nach einem der vorstehenden Ansprüche,
**dadurch gekennzeichnet,**
**dass** in der wenigstens einen Schicht, die Metallnanopartikel und Metalloxidphase umfasst, der durchschnittliche Gehalt an Metall M und Sauerstoff mindestens 80 Atom.-%, bezogen auf diese eine Schicht, beträgt.

6. Metalleffektpigment nach einem der vorstehenden Ansprüche,
**dadurch gekennzeichnet,**
**dass** die wenigstens eine diffraktive Struktur wenigstens ein periodisches Muster mit diffraktiven Elementen, vorzugsweise mit oder aus geometrischen Formen oder Körpern, aufweist.

7. Metalleffektpigment nach Anspruch 6,
**dadurch gekennzeichnet,**
**dass** das periodische Muster 5000 bis 20000 diffraktive Elemente/cm aufweist.

8. Metalleffektpigment nach einem der vorstehenden Ansprüche,
**dadurch gekennzeichnet,**
**dass** die diffraktive Struktur eine Tiefe von wenigstens 40 nm aufweist.

9. Metalleffektpigment nach einem der vorstehenden Ansprüche,
**dadurch gekennzeichnet,**
**dass** die mittlere Schichtdicke der wenigstens einen Schicht, die Metallnanopartikel und Metalloxidphase umfasst, in einem Bereich von 8 bis 500 nm liegt.

10. Metalleffektpigment nach einem der vorstehenden Ansprüche,
**dadurch gekennzeichnet,**
**dass** das Metalleffektpigment zwei aufeinander angeordnete Schichten, wobei wenigstens eine Schicht Metallnanopartikel in einer Metalloxidphase umfasst, aufweist, diese wenigstens eine Schicht eine erste Außenfläche und eine zweite Außenfläche aufweist und der Gehalt an Metalinanopartikeln in der ersten Außenfläche und in der zweiten Außenfläche dieser wenigstens einen Schicht voneinander verschieden ist und sich um wenigstens 10 Atom-% unterscheidet.

11. Metalleffektpigment nach einem Ansprüche 1 bis 9,

**dadurch gekennzeichnet,**
**dass** das plättchenförmige Metalleffektpigment drei oder mehr aufeinander angeordnete Schichten, wobei wenigstens eine Schicht Metallnanopartikel in einer Metalloxidphase umfasst, aufweist, die wenigstens eine Schicht eine erste und eine zweite Außenfläche aufweist, das Metalleffektpigment eine erste Außenfläche und eine zweite Außenfläche aufweist und der höchste Gehalt an Metallnanopartikeln in der ersten oder in der zweiten Außenfläche des Metalleffektpigmentes vorliegt und sich der Gehalt an Metallnanopartikeln in der ersten und in der zweiten Außenfläche dieser wenigstens einen Schicht um wenigstens 10 Atom-% unterscheidet.

**12.** Metalleffektpigment nach einem der vorstehenden Ansprüche,
**dadurch gekennzeichnet,**
**dass** sich in wenigstens einer Schicht, die Metallnanopartikel und Metalloxidphase umfasst, der Gehalt an Metallnanopartikeln kontinuierlich über die Dicke dieser Schicht ändert.

**13.** Metalleffektpigment nach Anspruch 12,
**dadurch gekennzeichnet,**
**dass** sich in wenigstens einer Schicht, die Metallnanopartikel und Metalloxidphase umfasst, der Gehalt an Metallnanopartikeln wenigstens teilweise mit einem Gradienten von 0,1 bis 4 Atom-%/nm über die Dicke der Schicht ändert.

**14.** Metalleffektpigment nach einem der vorstehenden Ansprüche,
**dadurch gekennzeichnet,**
**dass** sich zwischen zwei aufeinander folgenden Schichten der Gehalt an Metallnanopartikeln diskontinuierlich ändert.

**15.** Metalleffektpigment nach einem der vorstehenden Ansprüche,
**dadurch gekennzeichnet,**
**dass** das Metall ein dreiwertiges Metall ist
und das Metalleffektpigment wenigstens eine erste und eine zweite aufeinanderfolgende Schicht aufweist, wobei die erste Schicht Metallnanopartikel enthält und die zweite Schicht elementares Metall enthält, wobei der Gehalt an Metallnanopartikeln in der Außenfläche der ersten Schicht, die Metallnanopartikel und Metalloxidphase umfasst, in einem Bereich von 1 bis 50 Atom-% liegt und der Gehalt an elementarem Metall in der Außenfläche der zweiten Schicht in einem Bereich von 60 bis 95 Atom-% liegt, mit der Maßgabe, dass der Unterschied in dem Gehalt an Metallnanopartikeln und an elementarem Metall in den beiden Außenflächen wenigstens 10 Atom-% beträgt.

**16.** Metalleffektpigment nach einem der Ansprüche 1 bis 14,
**dadurch gekennzeichnet,**
**dass** das Metall ein vierwertiges Metall ist und das Metalleffektpigment wenigstens eine erste und eine zweite aufeinanderfolgende Schicht aufweist, wobei die erste Schicht Metallnanopartikel enthält und die zweite Schicht elementares Metall enthält,
wobei der Gehalt an Metallnanopartikeln in der Außenfläche der ersten Schicht, die Metallnanopartikel und Metalloxidphase umfasst, in einem Bereich von 1bis 50 Atom-% liegt und der Gehalt an elementarem Metall in der Außenfläche der zweiten Schicht in einem Bereich von 60 bis 95 Atom-% liegt, mit der Maßgabe, dass der Unterschied in dem Gehalt an Metallnanopartikeln und an elementarem Metall in den beiden Außenflächen wenigstens 10 Atom-% beträgt.

**17.** Metalleffektpigment nach einem der Ansprüche 1 bis 14,
**dadurch gekennzeichnet,**
**dass** die wenigstens eine Schicht, die Metallnanopartikel und Metalloxidphase umfasst, einen durchschnittlichen Sauerstoffgehalt von 30 bis 77 Atom-%, bezogen auf den Gesamtgehalt an Metall und Sauerstoff in dieser Schicht, aufweist.

**18.** Metalleffektpigment nach einem der Ansprüche 1 bis 16,
**dadurch gekennzeichnet,**
**dass** das Metalleffektpigment wenigstens drei Schichten umfasst:

A) eine Schicht A, welche wenigstens ein Metall $M_A$ und einen durchschnittlichen Gehalt an Sauerstoff $O_A$, bezogen auf den Gesamtgehalt an $M_A$ und $O_A$ in der Schicht A aufweist,
B) eine Schicht B mit wenigstens einem Metall $M_B$ und einem durchschnittlichen Gehalt an Sauerstoff $O_B$ von 0 bis 77 Atom-%, bezogen auf den Gesamtgehalt an $M_B$ und $O_B$ in der Schicht B,

C) eine Schicht C, welche wenigstens ein Metall $M_C$ und einen durchschnittlichen Gehalt an Sauerstoff $O_C$, bezogen auf den Gesamtgehalt an $M_C$ und $O_C$ in der Schicht C, aufweist,

wobei der durchschnittliche Sauerstoffgehalt $O_{AC}$ in den Schichten A und C gemäß der Formel (I)

$$O_{AC} = \frac{1}{2}\left(\frac{O_A}{M_A + O_A} + \frac{O_C}{M_C + O_C}\right) \qquad (I)$$

bestimmt wird und in einem Bereich von 8 bis 77 Atom-% liegt,
mit der Maßgabe, dass wenigstens eine der Schichten A, B oder C Metallnanopartikel enthält.

**19.** Metalleffektpigment nach einem der vorstehenden Ansprüche,
**dadurch gekennzeichnet,**
**dass** das Metalleffektpigment mit einer Korrosionsschutzschicht, die optional oberflächenmodifiziert ist, umhüllt ist.

**20.** Beschichtungsmittel,
**dadurch gekennzeichnet,**
**dass** das Beschichtungsmittel PVD-Metalleffektpigmente nach einem der Ansprüche 1 bis 19 enthält.

**21.** Beschichteter Gegenstand,
**dadurch gekennzeichnet,**
**dass** der Gegenstand mit Metalleffektpigment nach einem der Ansprüche 1 bis 19 oder mit einem Beschichtungsmittel nach Anspruch 20 versehen ist.

**22.** Verfahren zur Herstellung eines Metalieffektpigments nach einem der Ansprüche 1 bis 19,
**dadurch gekennzeichnet,**
**dass** das Verfahren folgende Schritte umfasst:

(a1) Aufbringen einer Trennschicht auf ein linear bewegbares Substrat
(a2) Einbringen einer diffraktiven Struktur in die Trennschicht, vorzugsweise durch Einprägen,
(a3) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff,
oder
(b1) Aufbringen einer Trennschicht auf ein linear bewegbares Substrat
(b2) Bedampfen der Trennschicht auf dem linear bewegbaren Substrat in einer einen Bedampfungsabschnitt aufweisenden Vakuumkammer mittels reaktiver physikalischer Dampfabscheidung (PVD) mit wenigstens einem Metall in Gegenwart von Sauerstoff,
(b3) Einbringen einer diffraktiven Struktur auf und/oder in mindestens eine Fläche der in Schritt (b2) aufgebrachten PVD-Schicht, vorzugsweise durch Einprägen,
sowie
c) Ablösen der aufgedampften und mit einer diffraktiven Struktur versehenen PVD-Schicht(en),
d) Zerkleinern der abgelösten PVD-Schicht(en),
e) optional Überführen der zerkleinerten PVD-Schicht(en) in eine Dispersion oder Paste.

## Claims

**1.** Metal effect pigment,
**characterised in that**
the metal effect pigment has at least one diffractive structure and at least one layer comprising metal nanoparticles and metal oxide phase, the metal of the metal oxide phase and the metal of the metal nanoparticles in this at least one layer being identical, and the at least one layer comprising the metal nanoparticles and metal oxide phase has a first outer face and a second outer face, the quantity of metal nanoparticles in the first outer face and in the second outer face of this layer being different from one another and differing by at least 10 atom %.

2. Metal effect pigment as claimed in claim 1,
**characterised in that**
the at least one layer comprising the metal nanoparticles and metal oxide phase comprises the at least one diffractive structure.

3. Metal effect pigment as claimed in one of the preceding claims,
**characterised in that**
the metal of the at least one layer comprising the metal nanoparticles and metal oxide phase is selected from the group comprising aluminium, magnesium, chromium, silver, copper, gold zinc, tin, manganese, iron, cobalt, nickel, titanium, tantalum, molybdenum, tungsten, mixtures thereof and alloys thereof.

4. Metal effect pigment as claimed in one of the preceding claims,
**characterised in that**
the average size of the metal nanoparticles is in a range of from 1 to 50 nm.

5. Metal effect pigment as claimed in one of the preceding claims,
**characterised in that**
in the at least one layer comprising the metal nanoparticles and metal oxide phase, the average quantity of metal M and oxygen is at least 80 atom % based on this one layer.

6. Metal effect pigment as claimed in one of the preceding claims,
**characterised in that**
the at least one diffractive structure has at least one periodic pattern with diffractive elements, preferably with or comprising geometric shapes or bodies.

7. Metal effect pigment as claimed in claim 6,
**characterised in that**
the periodic pattern has 5000 to 20000 diffractive elements/cm.

8. Metal effect pigment as claimed in one of the preceding claims,

**characterised in that**
the diffractive structure has a depth of at least 40 nm.

9. Metal effect pigment as claimed in one of the preceding claims,
**characterised in that**
the average layer thickness of the at least one layer comprising the metal nanoparticles and metal oxide phase is in a range of from 8 to 500 nm.

10. Metal effect pigment as claimed in one of the preceding claims,
**characterised in that**
the metal effect pigment has two layers disposed one on top of the other, and at least one layer comprises metal nanoparticles in a metal oxide phase, and this at least one layer has a first outer surface and a second outer surface and the quantity of metal nanoparticles in the first outer layer and in the second outer layer of this at least one layer is different from one another and differs by at least 10 atom %.

11. Metal effect pigment as claimed in one of claims 1 to 9,
**characterised in that**
the platelet-shaped metal effect pigment has three or more layers disposed one on top of the other, and at least one layer comprises metal nanoparticles in a metal oxide phase, the at least one layer having a first and a second outer face, and the metal effect pigment has a first outer face and a second outer face and the highest quantity of metal nanoparticles is in the first or in the second outer face of the metal effect pigment, and the quantity of metal nanoparticles in the first and in the second outer face of this at least one layer differs by at least 10 atom %.

12. Metal effect pigment as claimed in one of the preceding claims,
**characterised in that**
in at least one layer which comprises the metal nanoparticles and metal oxide phase, the quantity of metal nanoparticles varies continuously across the thickness of this layer.

**13.** Metal effect pigment as claimed in claim 12,
**characterised in that**
in at least one layer which comprises the metal nanoparticles and metal oxide phase, the quantity of metal nanoparticles at least partially varies with a gradient of from 0.1 to 4 atom %/nm across the thickness of the layer.

**14.** Metal effect pigment as claimed in one of the preceding claims,
**characterised in that**
the quantity of metal nanoparticles between two successive layers varies discontinuously.

**15.** Metal effect pigment as claimed in one of the preceding claims,
**characterised in that**
the metal is a trivalent metal,
and the metal effect pigment has at least a first and a second successive layer, and the first layer contains metal nanoparticles and the second layer contains elemental metal, and the quantity of metal nanoparticles in the outer face of the first layer comprising the metal nanoparticles and metal oxide phase is in a range of from 1 to 50 atom % and the quantity of elemental metal in the outer face of the second layer is in a range of from 60 to 95 atom %, provided the difference in the quantity of metal nanoparticles and elemental metal in the two outer faces is at least 10 atom %.

**16.** Metal effect pigment as claimed in one of claims 1 to 14,
**characterised in that**
the metal is a tetravalent metal and the metal effect pigment has at least a first and a second successive layer, and the first layer contains metal nanoparticles and the second layer contains elemental metal, and the quantity of metal nanoparticles in the outer face of the first layer comprising the metal nanoparticles and metal oxide phase is in a range of from 1 to 50 atom % and the quantity of elemental metal in the outer face of the second layer is in a range of from 60 to 95 atom %, provided the difference in the quantity of metal nanoparticles and elemental metal in the two outer faces is at least 10 atom %.

**17.** Metal effect pigment as claimed in one of claims 1 to 14,
**characterised in that**
the at least one layer comprising the metal nanoparticles and metal oxide phase has an average oxygen content of 30 to 77 atom % based on the total quantity of metal and oxygen in this layer.

**18.** Metal effect pigment as claimed in one of claims 1 to 16,
**characterised in that**
the metal effect pigment comprises at least three layers:

A) a layer A which comprises a metal $M_A$ and an average quantity of oxygen $O_A$ based on the total quantity of $M_A$ and $O_A$ in layer A,
B) a layer B with at least one metal $M_B$ and an average quantity of oxygen $O_B$ of 0 to 77 atom % based on the total quantity of $M_B$ and $O_B$ in layer B,
C) a layer C which has at least one metal $M_C$ and an average quantity of oxygen $O_C$ based on the total quantity of $M_C$ and $O_C$ in layer C, and the average oxygen content $O_{AC}$ in layers A and C is determined on the basis of formula (I)

$$O_{AC} = \frac{1}{2}\left(\frac{O_A}{M_A+O_A} + \frac{O_C}{M_C+O_C}\right) \qquad (I)$$

and is in a range of from 8 to 77 atom %,
provided that at least one of the layers A, B or C contains metal nanoparticles.

**19.** Metal effect pigment as claimed in one of the preceding claims,
**characterised in that**
the metal effect pigment is encased in an anti-corrosion layer, which is optionally surface-modified.

**20.** Coating composition,
**characterised in that**

the coating composition contains PVD metal effect pigments as claimed in one of claims 1 to 19.

**21.** Coated object,
**characterised in that**
the object is provided with metal effect pigment as claimed in one of claims 1 to 19 or with a coating composition as claimed in claim 20.

**22.** Method of producing a metal effect pigment as claimed in one of claims 1 to 19,
**characterised in that**
the method comprises the following steps:

(a1) applying a release layer to a linearly displaceable substrate,
(a2) introducing a diffractive structure into the release layer, preferably by embossing,
(a3) vapour depositing at least one metal on the release layer on the linearly displaceable substrate in a vacuum chamber having a vapour deposition section by means of reactive physical vapour deposition (PVD) in the presence of oxygen,
or
(b1) applying a release layer to a linearly displaceable substrate,
(b2) vapour depositing at least one metal on the release layer on the linearly displaceable substrate in a vacuum chamber having a vapour deposition section by means of reactive physical vapour deposition (PVD) in the presence of oxygen,
(b3) introducing a diffractive structure onto and/or into at least one surface of the PVD layer applied in step (b2), preferably by embossing,
and
c) detaching the vapour-deposited PVD layer(s) provided with a diffractive structure,
d) grinding the detached PVD layer(s),
e) optionally transferring the ground PVD layer(s) into a dispersion or paste.

## Revendications

**1.** Pigment à effet métallique, **caractérisé en ce que** le pigment à effet métallique possède au moins une structure diffractive et au moins une couche contenant des nanoparticules métalliques et une phase oxyde métallique, dans lequel le métal de la phase oxyde métallique et le métal des nanoparticules métalliques sont identiques dans ladite au moins une couche, dans lequel ladite au moins une couche contenant des nanoparticules métalliques et une phase oxyde métallique possède une première surface extérieure et une deuxième surface extérieure, et dans lequel les teneurs en nanoparticules métalliques dans la première surface extérieure et dans la deuxième surface extérieure de ladite couche sont différentes l'une de l'autre et diffèrent d'au moins 10 % atomiques.

**2.** Pigment à effet métallique selon la revendication 1, **caractérisé en ce que** ladite au moins une couche contenant des nanoparticules métalliques et une phase oxyde métallique contient ladite au moins une structure diffractive.

**3.** Pigment à effet métallique selon l'une des revendications précédentes, **caractérisé en ce que** le métal de ladite au moins une couche contenant des nanoparticules métalliques et une phase oxyde métallique est choisi dans le groupe constitué par l'aluminium, le magnésium, le chrome, l'argent, le cuivre, l'or, le zinc, l'étain, le manganèse, le fer, le cobalt, le nickel, le titane, le tantale, le molybdène, le tungstène, leurs mélanges et leurs alliages.

**4.** Pigment à effet métallique selon l'une des revendications précédentes, **caractérisé en ce que** la taille moyenne des nanoparticules métalliques va de 1 à 50 nm.

**5.** Pigment à effet métallique selon l'une des revendications précédentes, **caractérisé en ce que**, dans ladite au moins une couche contenant des nanoparticules métalliques et une phase oxyde métallique, la teneur moyenne en métal M et en oxygène est au moins égale à 80 % atomiques, rapportée à ladite couche.

**6.** Pigment à effet métallique selon l'une des revendications précédentes, **caractérisé en ce que** ladite au moins une structure diffractive possède au moins un motif périodique d'éléments diffractifs, de préférence comprenant ou constitués de formes ou corps géométriques.

7. Pigment à effet métallique selon la revendication 6, **caractérisé en ce que** le motif périodique contient 5000 à 20000 éléments diffractifs par cm.

8. Pigment à effet métallique selon l'une des revendications précédentes, **caractérisé en ce que** la structure diffractive possède une profondeur d'au moins 40 nm.

9. Pigment à effet métallique selon l'une des revendications précédentes, **caractérisé en ce que** l'épaisseur moyenne de ladite au moins une couche contenant des nanoparticules métalliques et une phase oxyde métallique va de 8 à 500 nm.

10. Pigment à effet métallique selon l'une des revendications précédentes, **caractérisé en ce que** le pigment à effet métallique possède deux couches superposées, dans lequel au moins une couche contient des nanoparticules métalliques dans une phase oxyde métallique, ladite au moins une couche possède une première surface extérieure et une deuxième surface extérieure, et les teneurs en nanoparticules métalliques dans la première surface extérieure et dans la deuxième surface extérieure de ladite au moins une couche sont différentes l'une de l'autre et diffèrent d'au moins 10 % atomiques.

11. Pigment à effet métallique selon l'une des revendications 1 à 9, **caractérisé en ce que** le pigment à effet métallique lamellaire possède trois couches superposées ou plus, dans lequel au moins une couche contient des nanoparticules métalliques dans une phase oxyde métallique, ladite au moins une couche possède une première et une deuxième surface extérieure, le pigment à effet métallique possède une première surface extérieure et une deuxième surface extérieure et la teneur maximale en nanoparticules métalliques se trouve dans la première ou dans la deuxième surface extérieure du pigment à effet métallique, et les teneurs en nanoparticules métalliques dans la première et dans la deuxième surface extérieure de ladite au moins une couche diffèrent d'au moins 10 % atomiques.

12. Pigment à effet métallique selon l'une des revendications précédentes, **caractérisé en ce que**, dans au moins une couche contenant des nanoparticules métalliques et une phase oxyde métallique, la teneur en nanoparticules métalliques varie de manière continue sur l'épaisseur de ladite couche.

13. Pigment à effet métallique selon la revendication 12, **caractérisé en ce que**, dans au moins une couche contenant des nanoparticules métalliques et une phase oxyde métallique, la teneur en nanoparticules métalliques varie au moins en partie selon un gradient de 0,1 à 4 % atomiques par nm sur l'épaisseur de la couche.

14. Pigment à effet métallique selon l'une des revendications précédentes, **caractérisé en ce que**, entre deux couches consécutives, la teneur en nanoparticules métalliques varie de manière discontinue.

15. Pigment à effet métallique selon l'une des revendications précédentes, **caractérisé en ce que** le métal est un métal trivalent et le pigment à effet métallique possède au moins une première et une deuxième couche consécutive, dans lequel la première couche contient des nanoparticules métalliques et la deuxième couche contient du métal élémentaire, dans lequel la teneur en nanoparticules métalliques dans la surface extérieure de la première couche contenant des nanoparticules métalliques et une phase oxyde métallique va de 1 à 50 % atomiques et la teneur en métal élémentaire dans la surface extérieure de la deuxième couche va de 60 à 95 % atomiques, à la condition que la différence des teneurs en nanoparticules métalliques et en métal élémentaire dans les deux surfaces extérieures soit au moins égale à 10 % atomiques.

16. Pigment à effet métallique selon l'une des revendications 1 à 14, **caractérisé en ce que** le métal est un métal tétravalent et le pigment à effet métallique possède au moins une première et une deuxième couche consécutive, dans lequel la première couche contient des nanoparticules métalliques et la deuxième couche contient du métal élémentaire, dans lequel la teneur en nanoparticules métalliques dans la surface extérieure de la première couche contenant des nanoparticules métalliques et une phase oxyde métallique va de 1 à 50 % atomiques et la teneur en métal élémentaire dans la surface extérieure de la deuxième couche va de 60 à 95 % atomiques, à la condition que la différence des teneurs en nanoparticules métalliques et en métal élémentaire dans les deux surfaces extérieures soit au moins égale à 10 % atomiques.

17. Pigment à effet métallique selon l'une des revendications 1 à 14, **caractérisé en ce que** ladite au moins une couche contenant des nanoparticules métalliques et une phase oxyde métallique possède une teneur moyenne en oxygène de 30 à 77 % atomiques, rapportée à la teneur totale en métal et en oxygène dans ladite couche.

**18.** Pigment à effet métallique selon l'une des revendications 1 à 16, **caractérisé en ce que** le pigment à effet métallique comprend au moins trois couches :

A) une couche A qui contient au moins un métal $M_A$ et qui possède une teneur moyenne en oxygène $O_A$, rapportée à la teneur totale en $M_A$ et $O_A$ dans la couche A,
B) une couche B qui contient au moins un métal $M_B$ et qui possède une teneur moyenne en oxygène $O_B$ de 0 à 77 % atomiques, rapportée à la teneur totale en $M_B$ et $O_B$ dans la couche B,
C) une couche C qui contient au moins un métal $M_C$ et qui possède une teneur moyenne en oxygène $O_C$, rapportée à la teneur totale en $M_C$ et $O_C$ dans la couche C,

dans lequel la teneur moyenne en oxygène $O_{AC}$ dans les couches A et C est donnée par la formule (I)

$$O_{AC} = \frac{1}{2}\left(\frac{O_A}{M_A + O_A} + \frac{O_C}{M_C + O_C}\right) \quad \text{(I)}$$

et va de 8 à 77 % atomiques, à la condition que l'une au moins des couches A, B ou C contienne des nanoparticules métalliques.

**19.** Pigment à effet métallique selon l'une des revendications précédentes, **caractérisé en ce que** le pigment à effet métallique est enrobé d'une couche de protection contre la corrosion qui est facultativement modifiée en surface.

**20.** Agent de revêtement, **caractérisé en ce que** ledit agent de revêtement contient des pigments à effet métallique pour dépôt PVD selon l'une des revendications 1 à 19.

**21.** Objet revêtu, **caractérisé en ce que** ledit objet est doté d'un pigment à effet métallique selon l'une des revendications 1 à 19 ou d'un agent de revêtement selon la revendication 20.

**22.** Procédé de fabrication d'un pigment à effet métallique selon l'une des revendications 1 à 19, **caractérisé en ce que** ledit procédé comprend les étapes consistant à :

(a1) déposer une couche de séparation sur un substrat mobile linéairement,
(a2) introduire une structure diffractive dans la couche de séparation, de préférence par estampage,
(a3) déposer la couche de séparation sur le substrat mobile linéairement, dans une enceinte sous vide comportant une section de vaporisation, par dépôt physique réactif en phase vapeur (PVD) d'au moins un métal en présence d'oxygène,
ou
(b1) déposer une couche de séparation sur un substrat mobile linéairement,
(b2) déposer la couche de séparation sur le substrat mobile linéairement, dans une enceinte sous vide comportant une section de vaporisation, par dépôt physique réactif en phase vapeur (PVD) d'au moins un métal en présence d'oxygène,
(b3) introduire une structure diffractive sur et/ou dans au moins une surface de la couche PVD déposée à l'étape (b2), de préférence par estampage,
ainsi que
(c) détacher la ou les couches PVD déposées sous vide et dotées d'une structure diffractive,
(d) broyer la ou les couches PVD détachées,
(e) facultativement, transférer la ou les couches PVD broyées dans une dispersion ou une pâte.

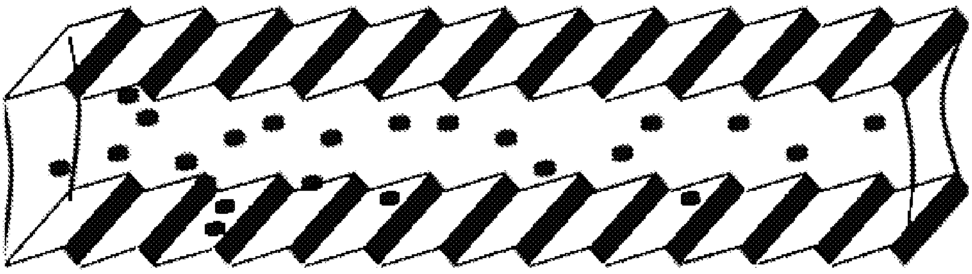

## Abbildung 1

Prägestruktur:

Oxidische Matrix:

Metallnanopartikel:

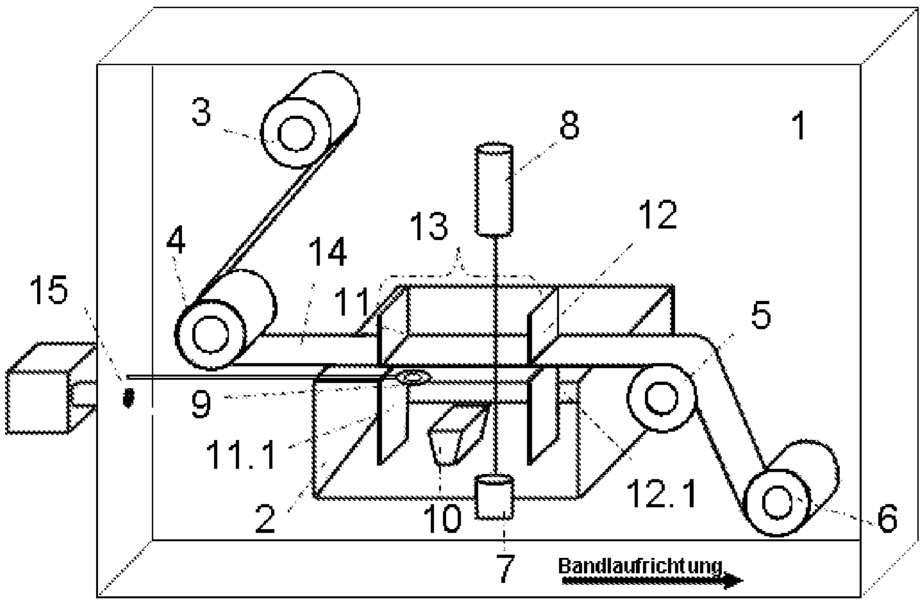


## Abbildung 2

1. Vakuumkammer
2. Fiktive Systemgrenze des Bedampfungsraums
3. Quellrolle
4. und 5. Umlenkrollen
6. Aufnehmerrolle
7. und 8. Transmissionsmessung
9. Schwingquarzmessung
10. Verdampfertiegel
11. und 12. Blendeneingang und Blendenausgang
13.Bedampfungsausschnitt
14. Substrat
15 Gasflussregelung und Sauerstoffeinlass in die linke Vakuumkammerwand

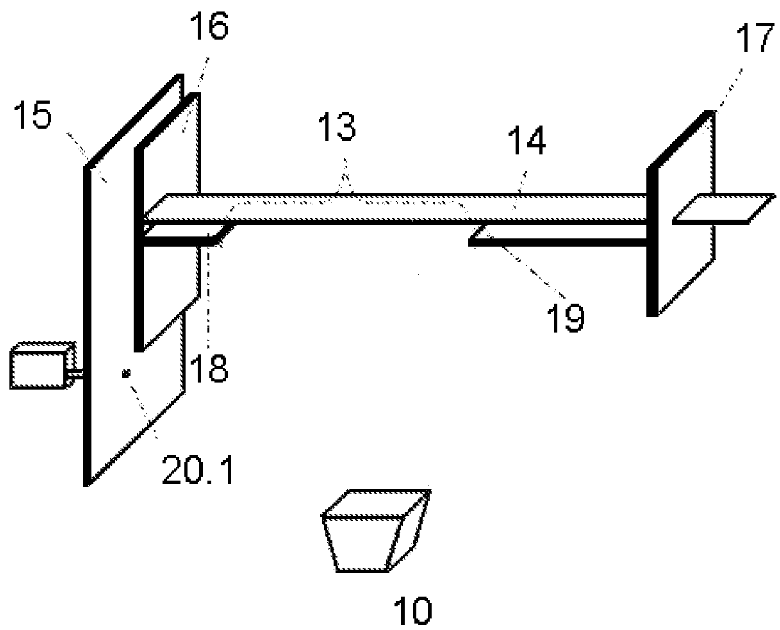


## Abbildung 3

16. Linke Abdeckplatte (11 und 11.1) für den Folieneingang in den Beschichtungsraum
17. Rechte Abdeckplatte (12 und 12.1) für den Folienausgang aus dem Beschichtungsraum
18. Abdeckplatte des Blendeneingangs
19. Abdeckplatte des Blendenausgangs

20.1 Diffuser Gaseinlass

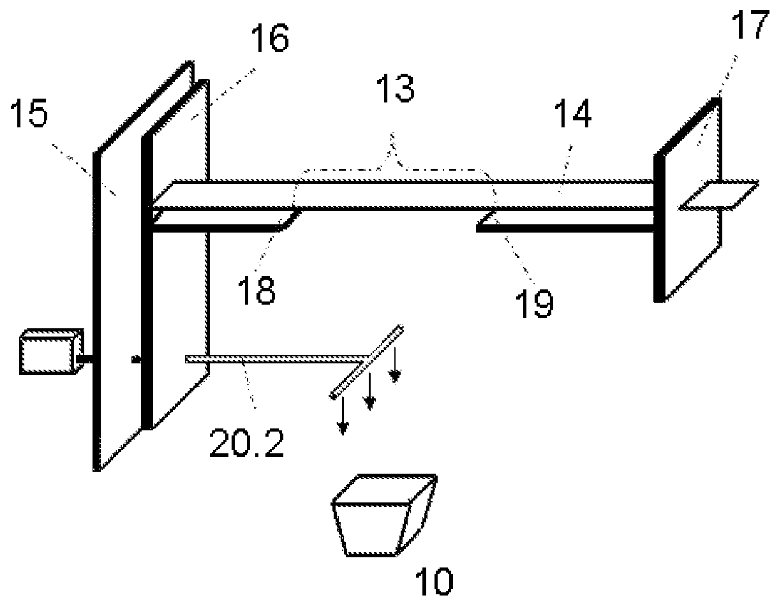


## Abbildung 4

20.2 Gaseinlasrohr horizontal, zentral über dem Verdampfer mit drei kleinen Öffnungen, wobei die Ausströmöffnungen von jeweils ca. 1 mm Durchmesser durch drei kleine Pfeile angedeutet sind

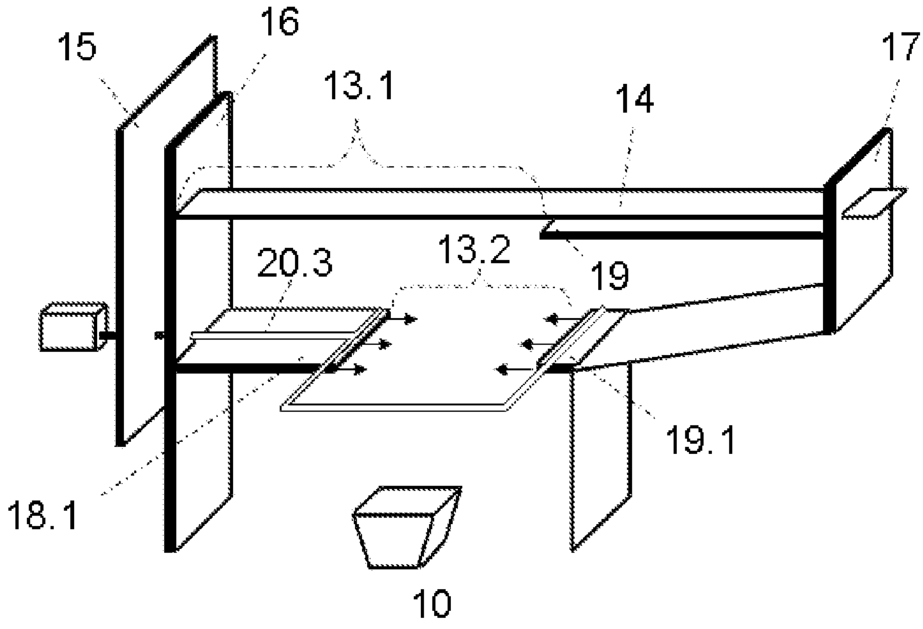


## Abbildung 5

13.1 Bedampfungsausschnitt
13.2 Bedampfungsausschnitt
18.1 Linke untere Abdeckblende des Bedampfungsausschnitts 13.2
19.1 Rechte untere Abdeckblende des Bedampfungsausschnitts 13.2
20.3 Rechts, linksseitiges Gaseinlassrohr mit jeweils drei kleinen Öffnungen, wobei die Ausströmöffnungen von jeweils ca. 1 mm durch drei kleine Pfeile angedeutet sind

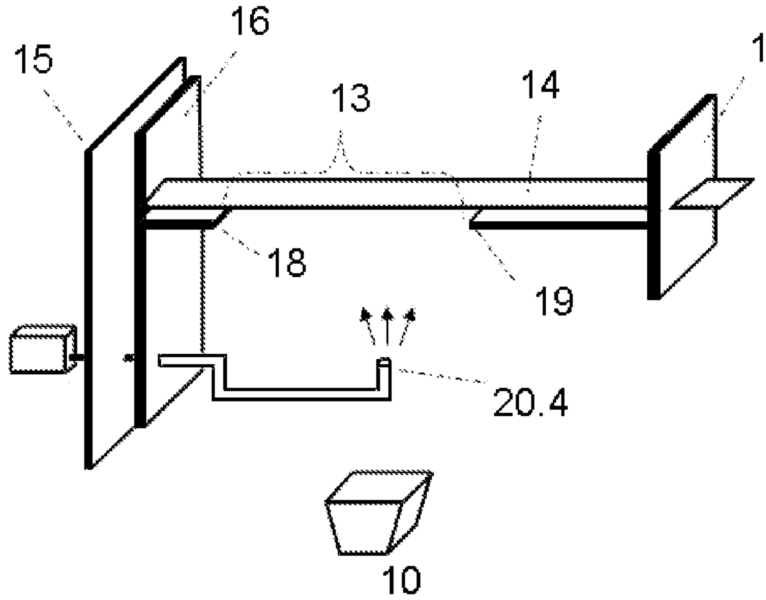


## Abbildung 6

20.4 Gaseinlass durch ein in Verdampfungsrichtung vertikales Rohr mit einer Öffnung von ca. 4 mm

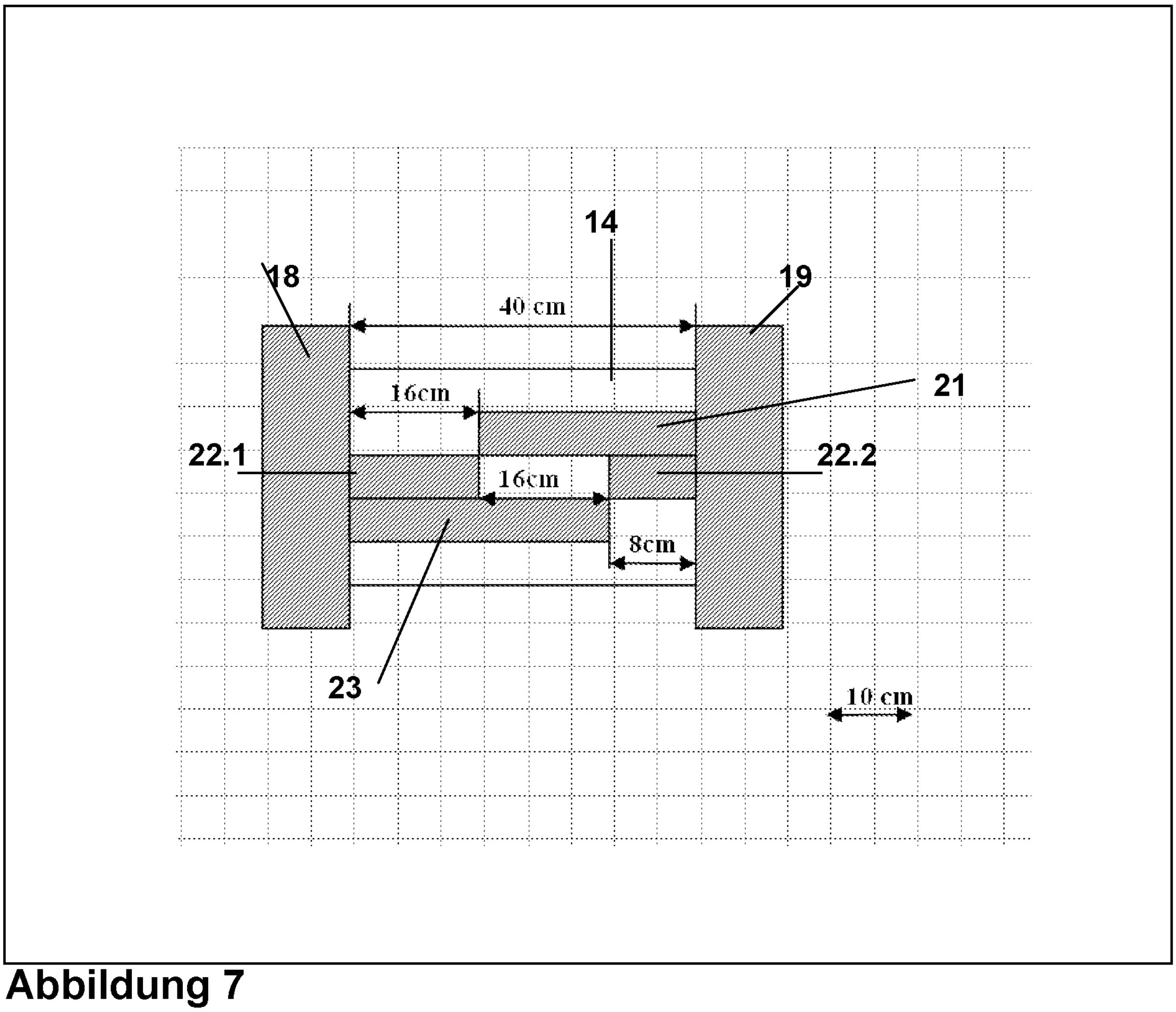


## Abbildung 7

21 Längsblende für den ersten Schichtabschnitt für Beispiel 7a
22.1 und 22.2 Längsblenden für den mittleren Schichtabschnitt für Beispiel 7b
23. Längsblende für den letzten Schichtabschnitt für Beispiel 7c

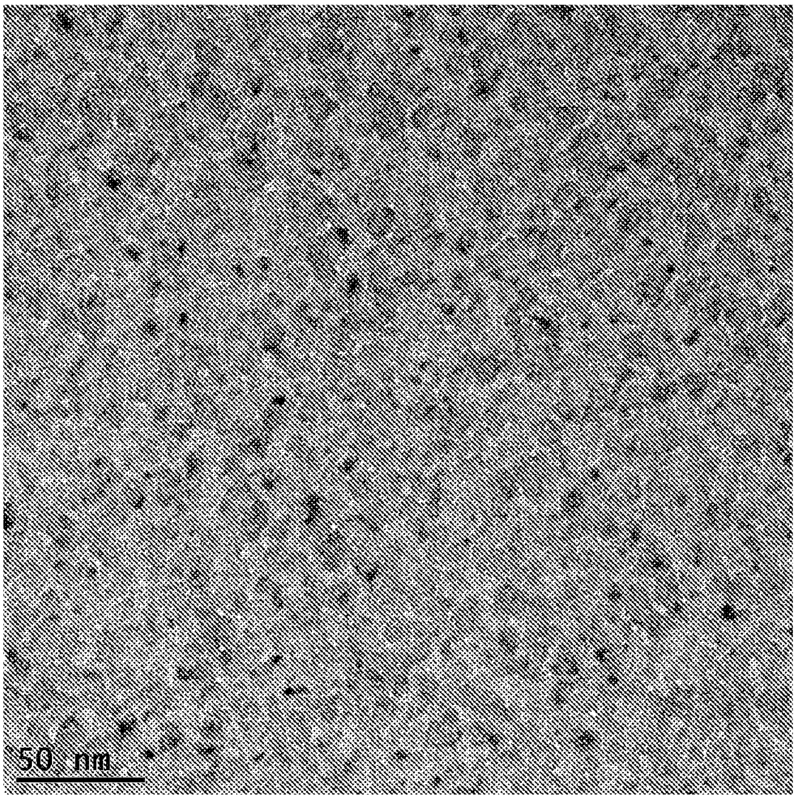


Abbildung 8a

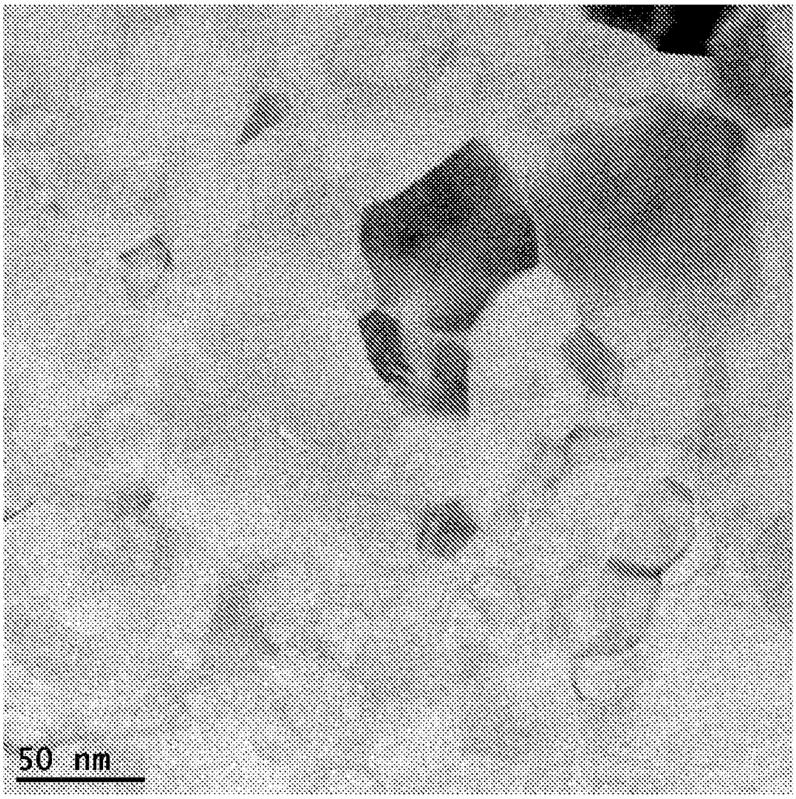


Abbildung 8b

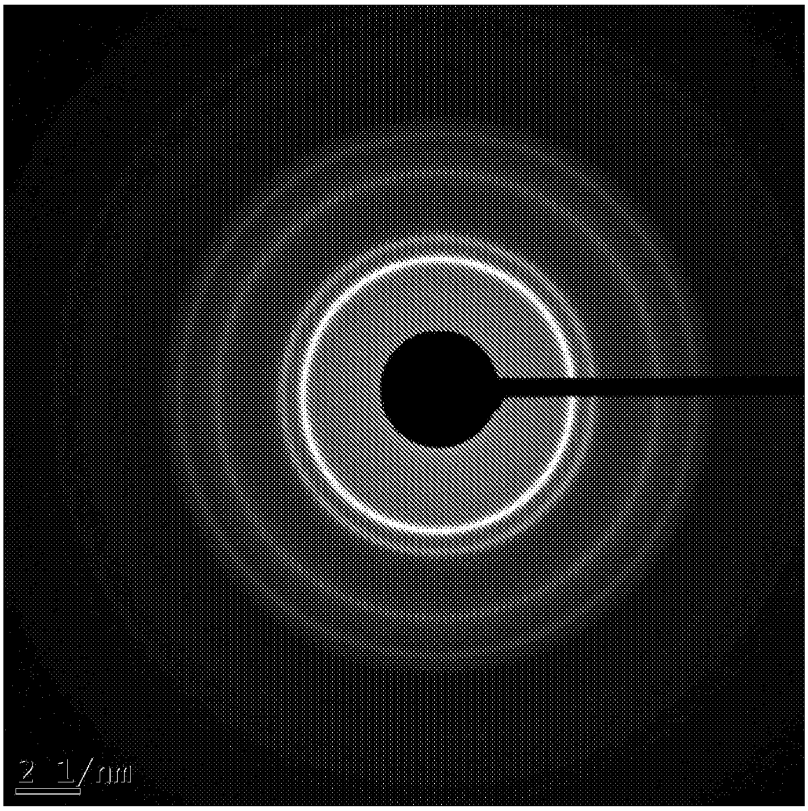


Abbildung 9a

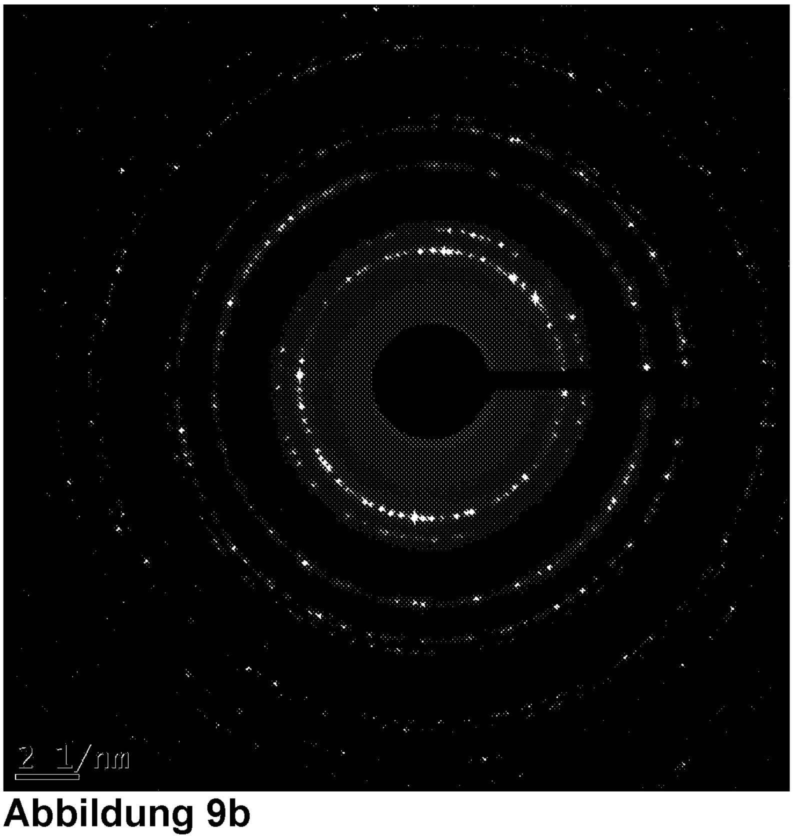


Abbildung 9b

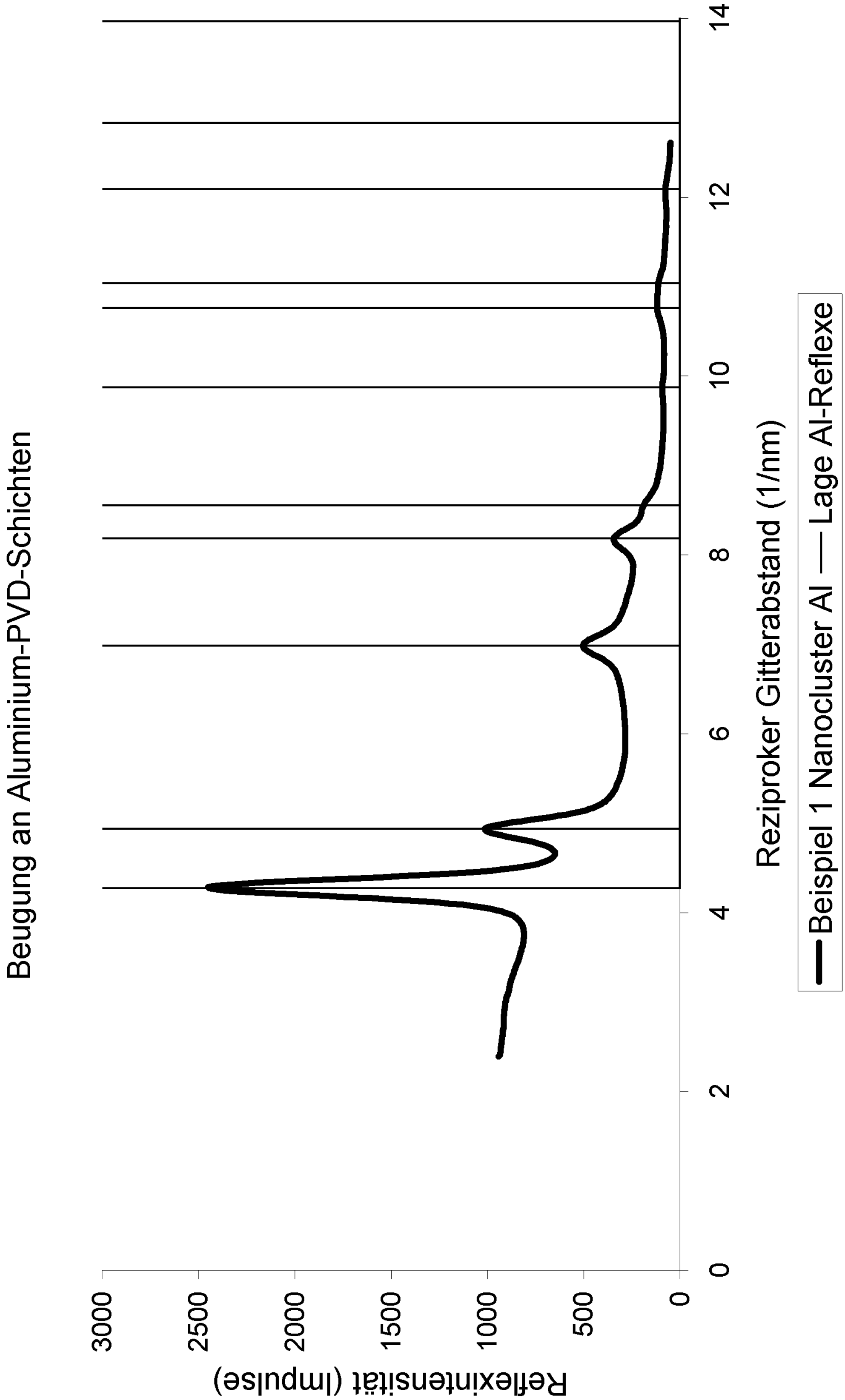


**Abbildung 10**

Abbildung 11a: ESCA-Sputterprofile von Beispiel 4

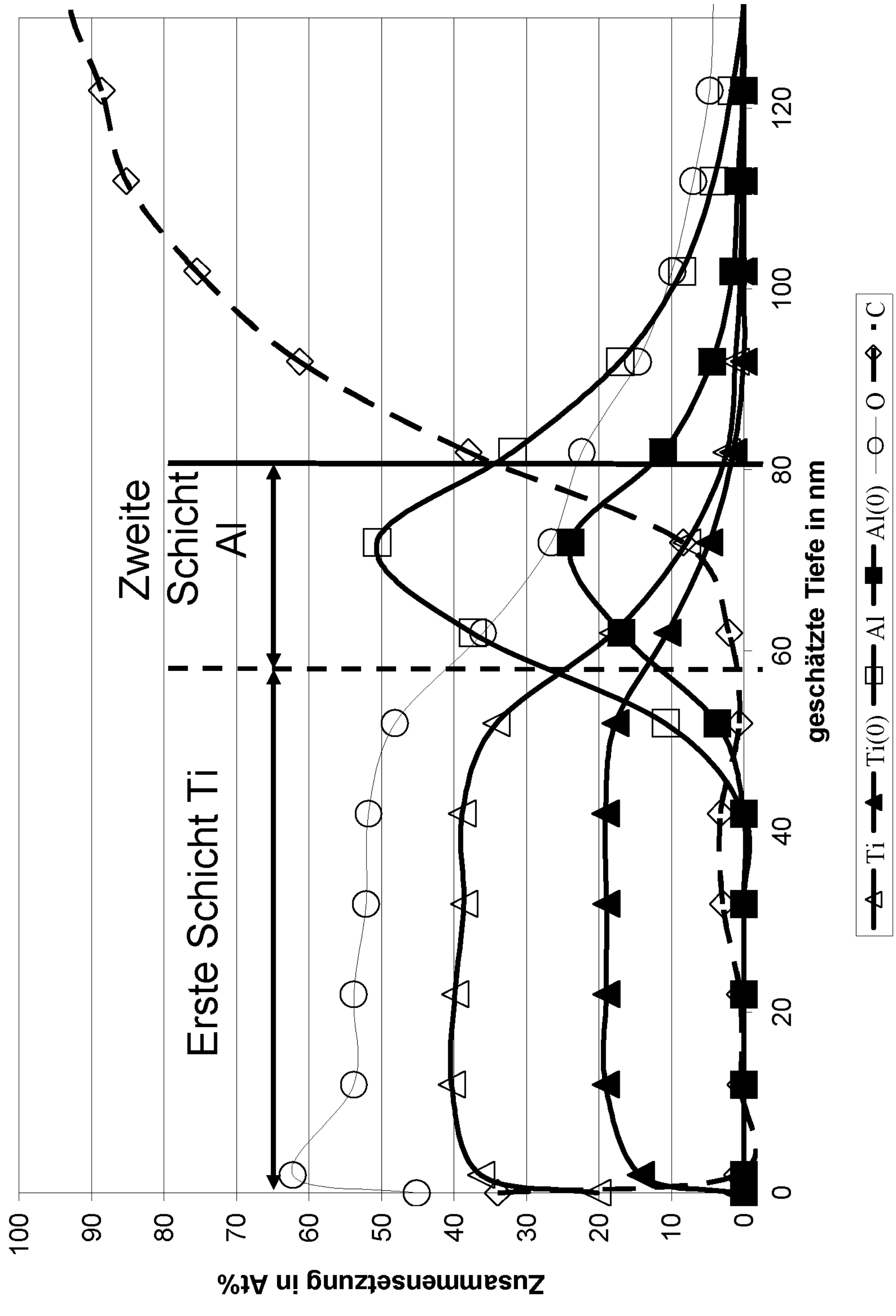


Abbildung 11a

Abbildung 11b: Vergleich oxidiertes Titan mit metallischen Titan bzw. oxidiertes Aluminium mit oxidiertem Aluminium des Beispiels 4

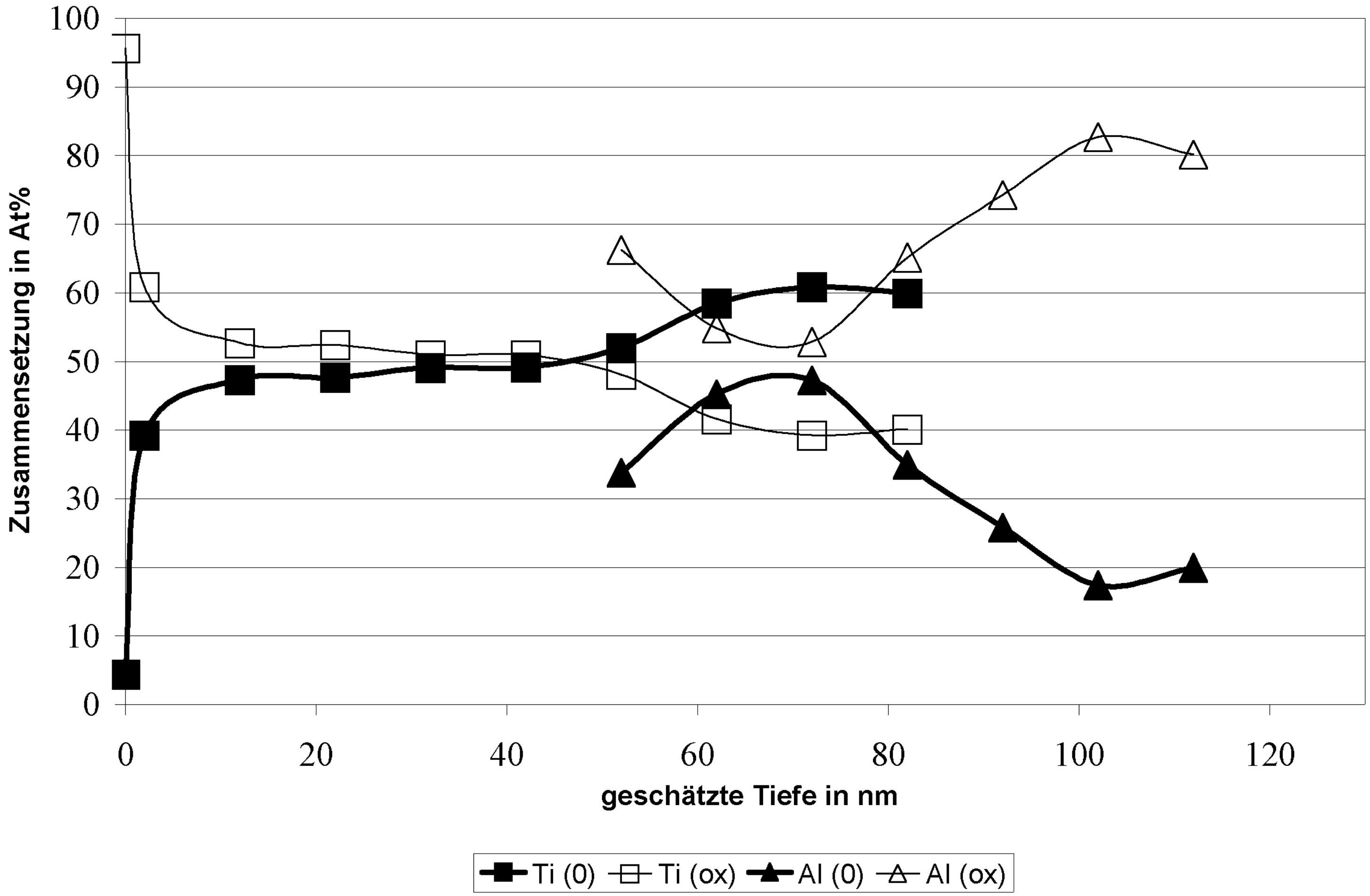


Abbildung 11b

Abbildung 12a: ESCA-Sputterprofile von Vergleichsbeispiel 4

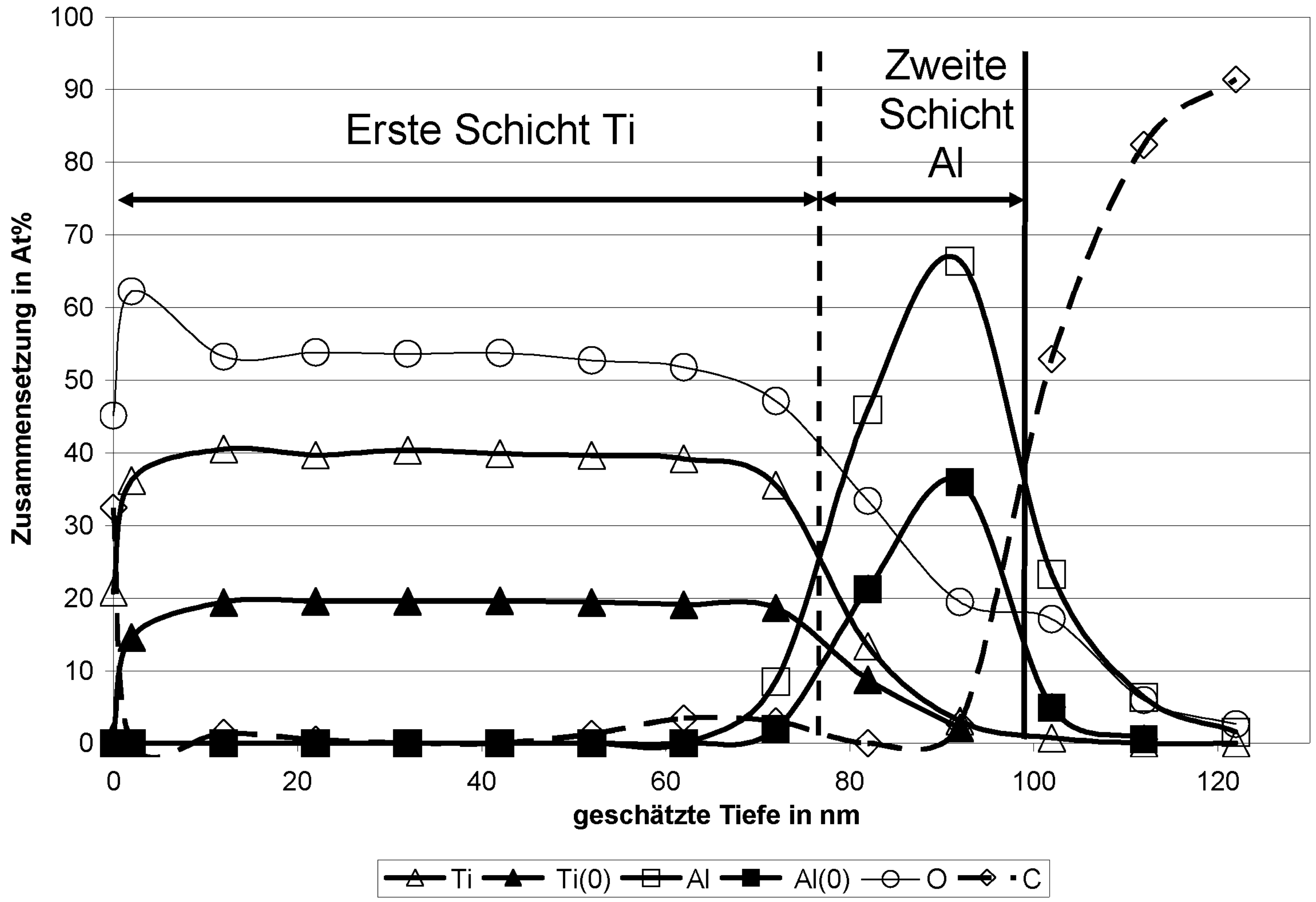


Abbildung 12a

Abbildung 12b: Vergleich oxidiertes Titan mit metallischen Titan bzw. oxidiertes Aluminium mit oxidiertem Aluminium des Vergleichbeispiels 4

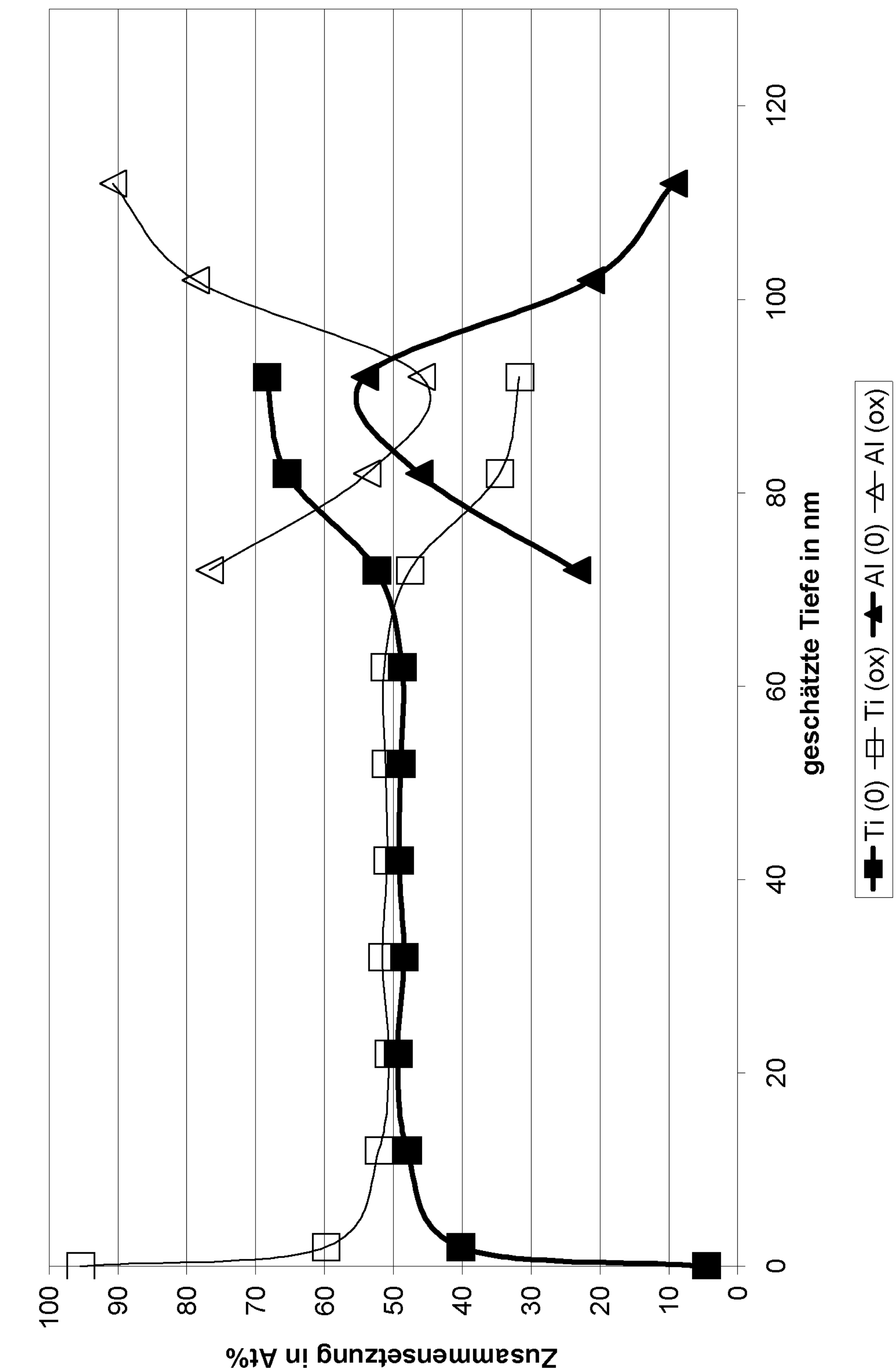


Abbildung 12b

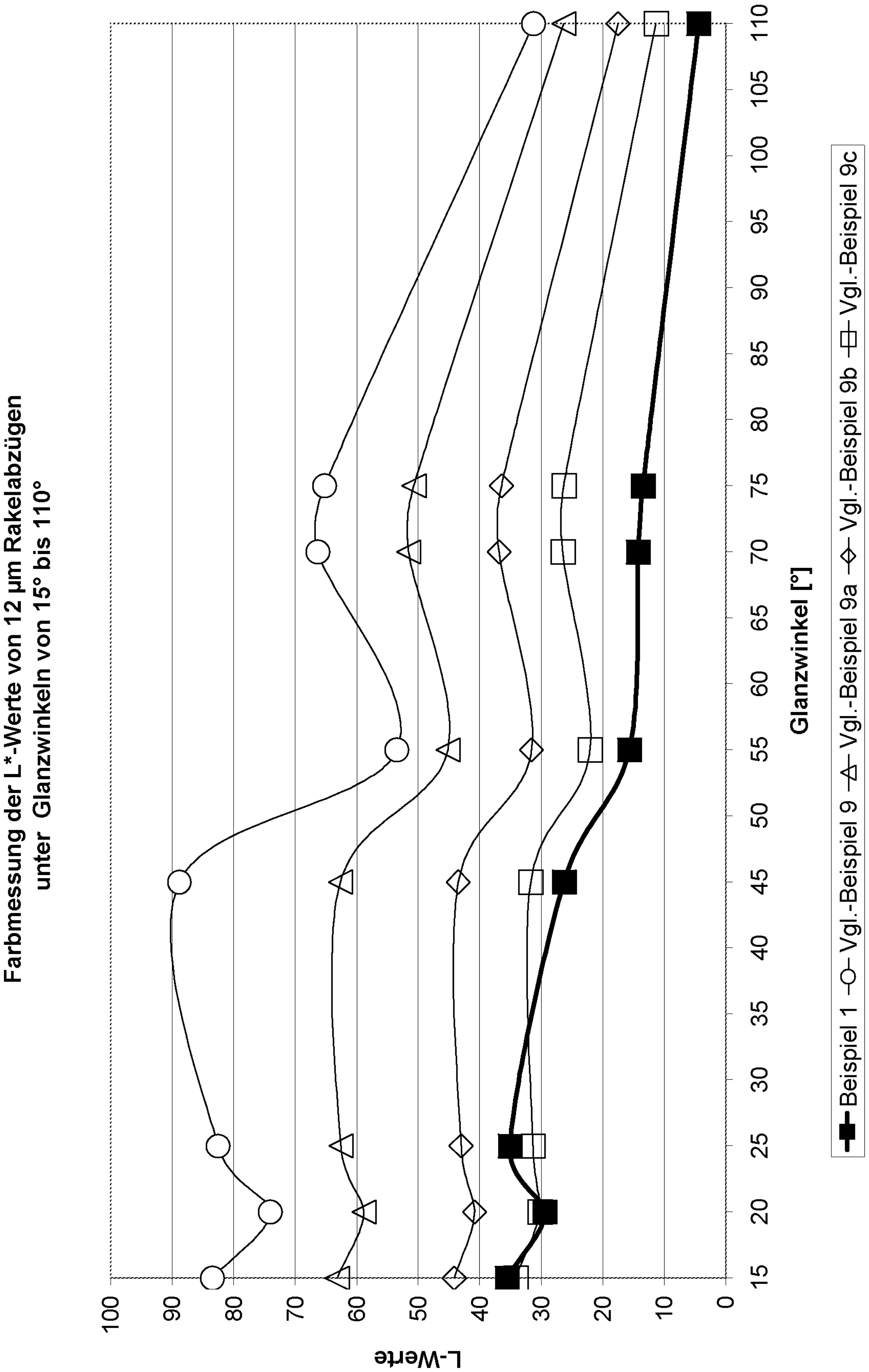


Abbildung 13a

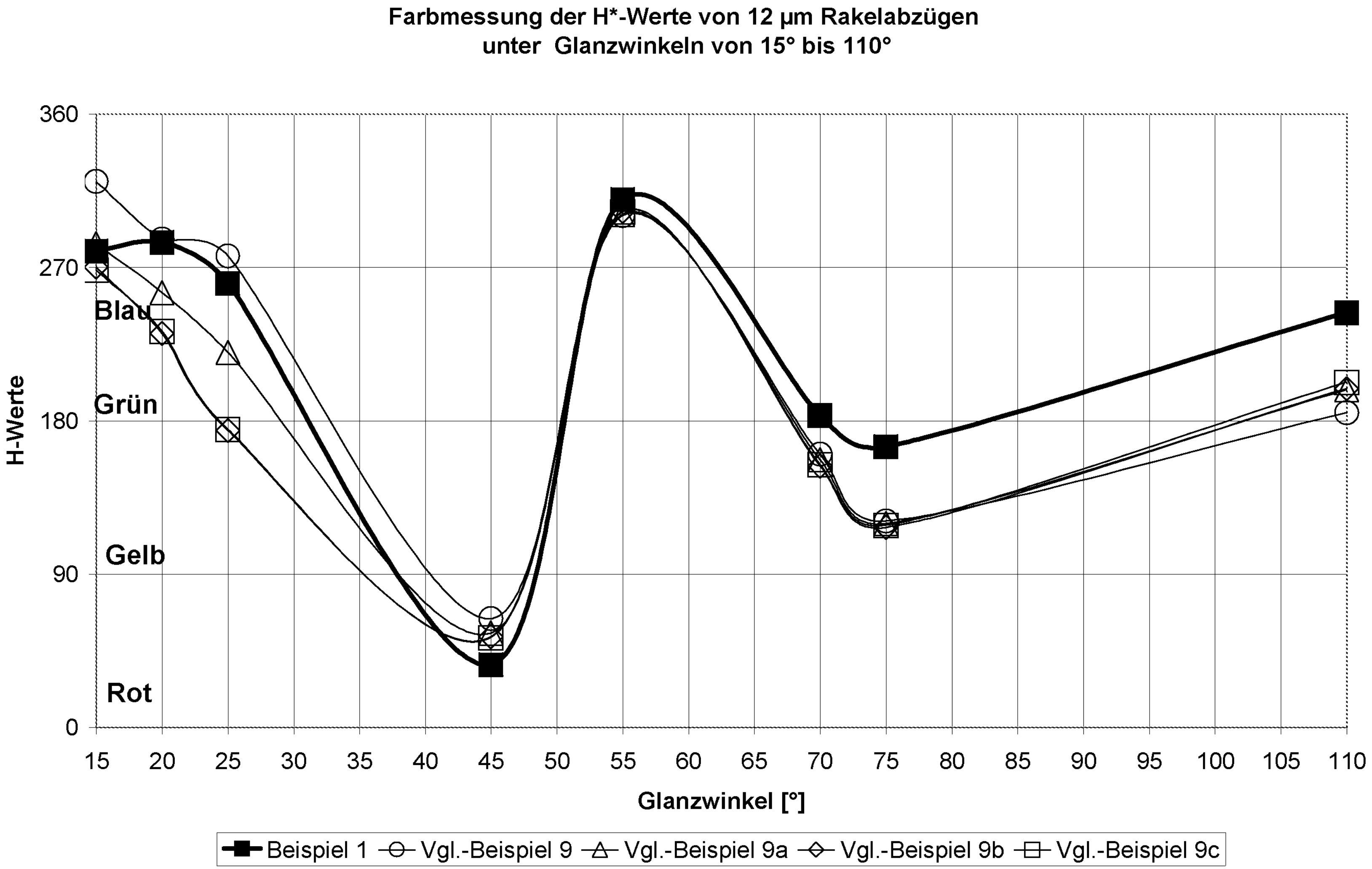


Abbildung 13b

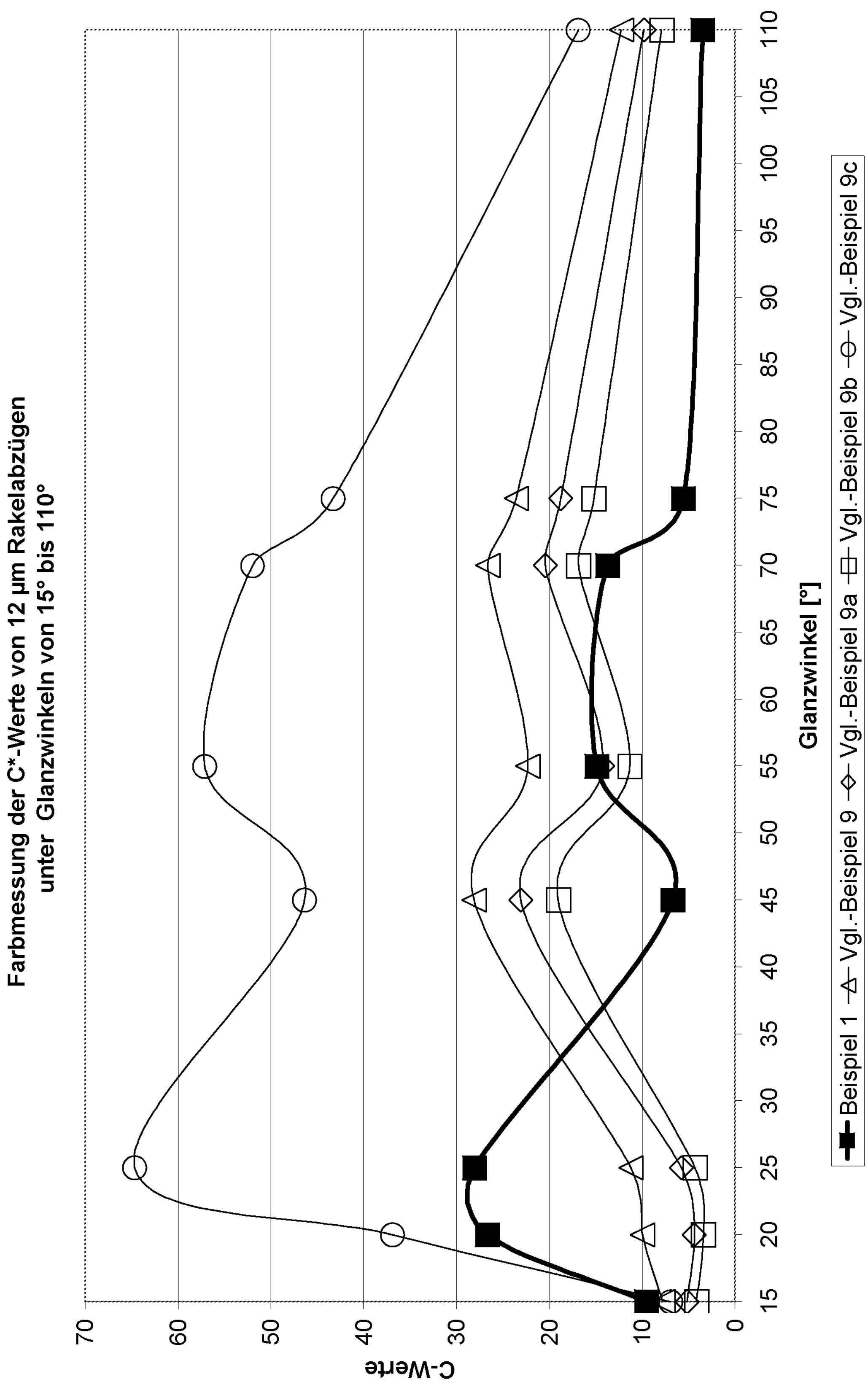


Abbildung 13c

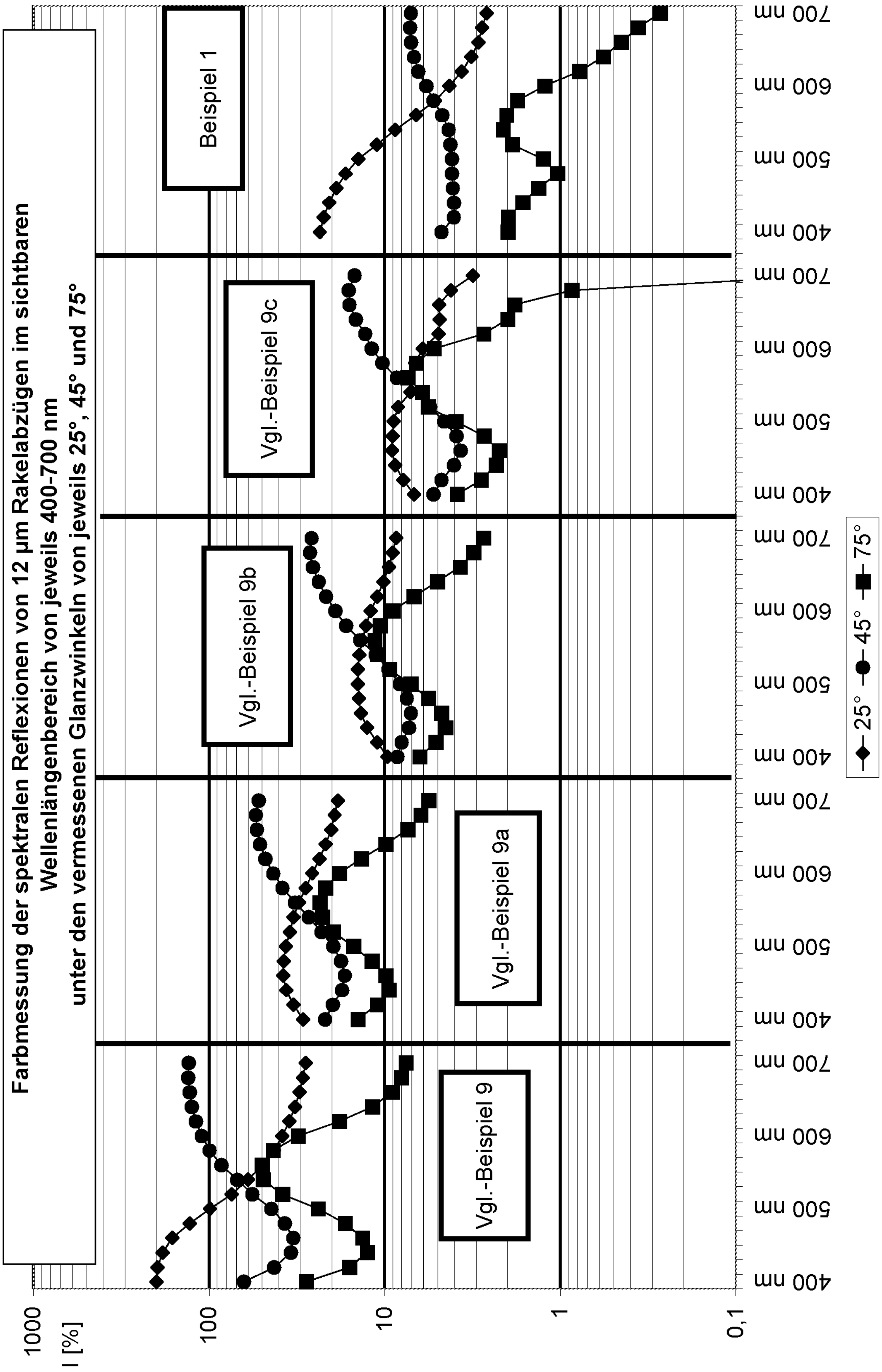


Abbildung 13d

Farbmessung der H*-Werte von 12 µm Rakelabzügen unter Glanzwinkeln von 15° bis 110°

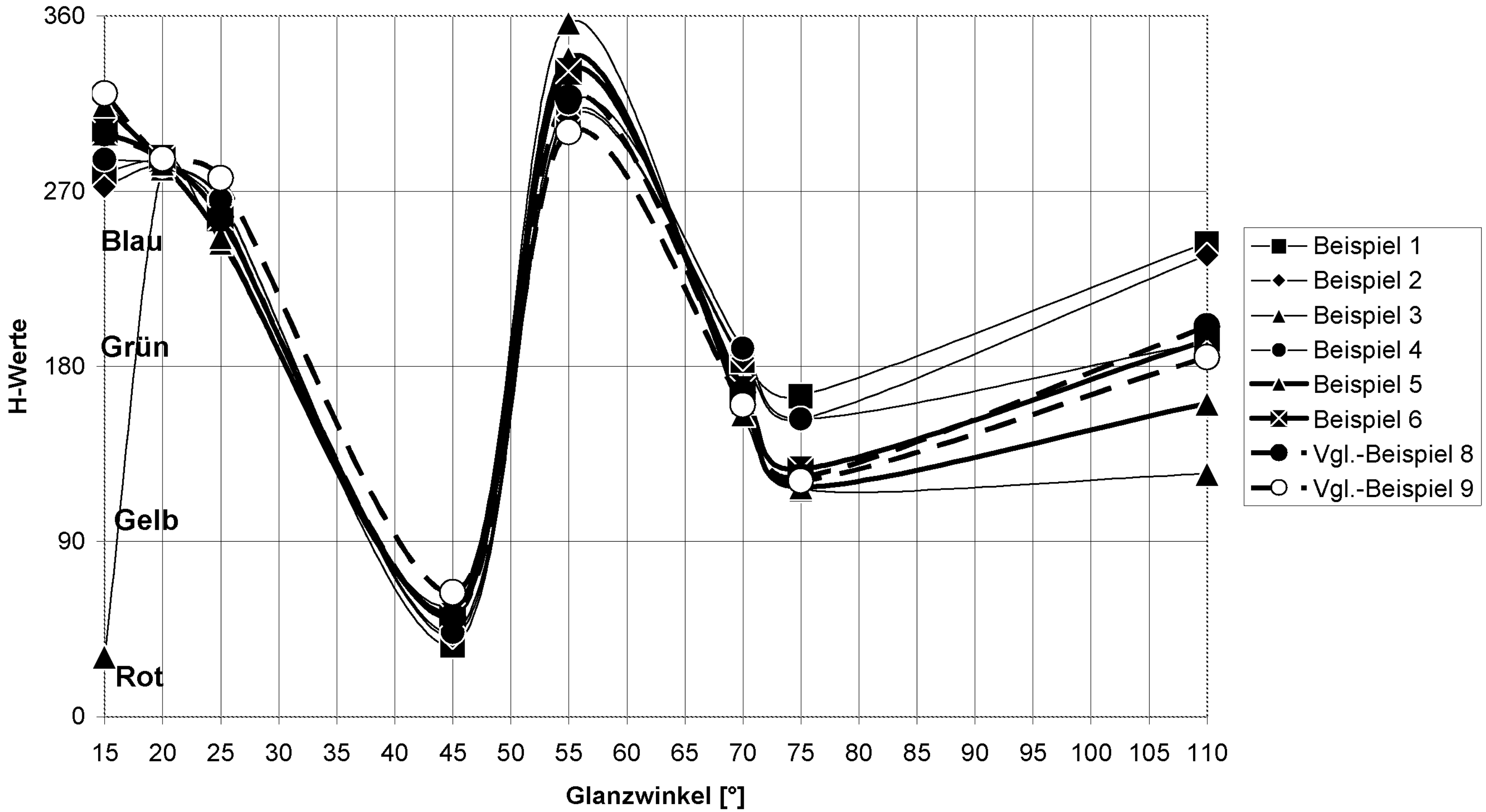


Abbildung 14a

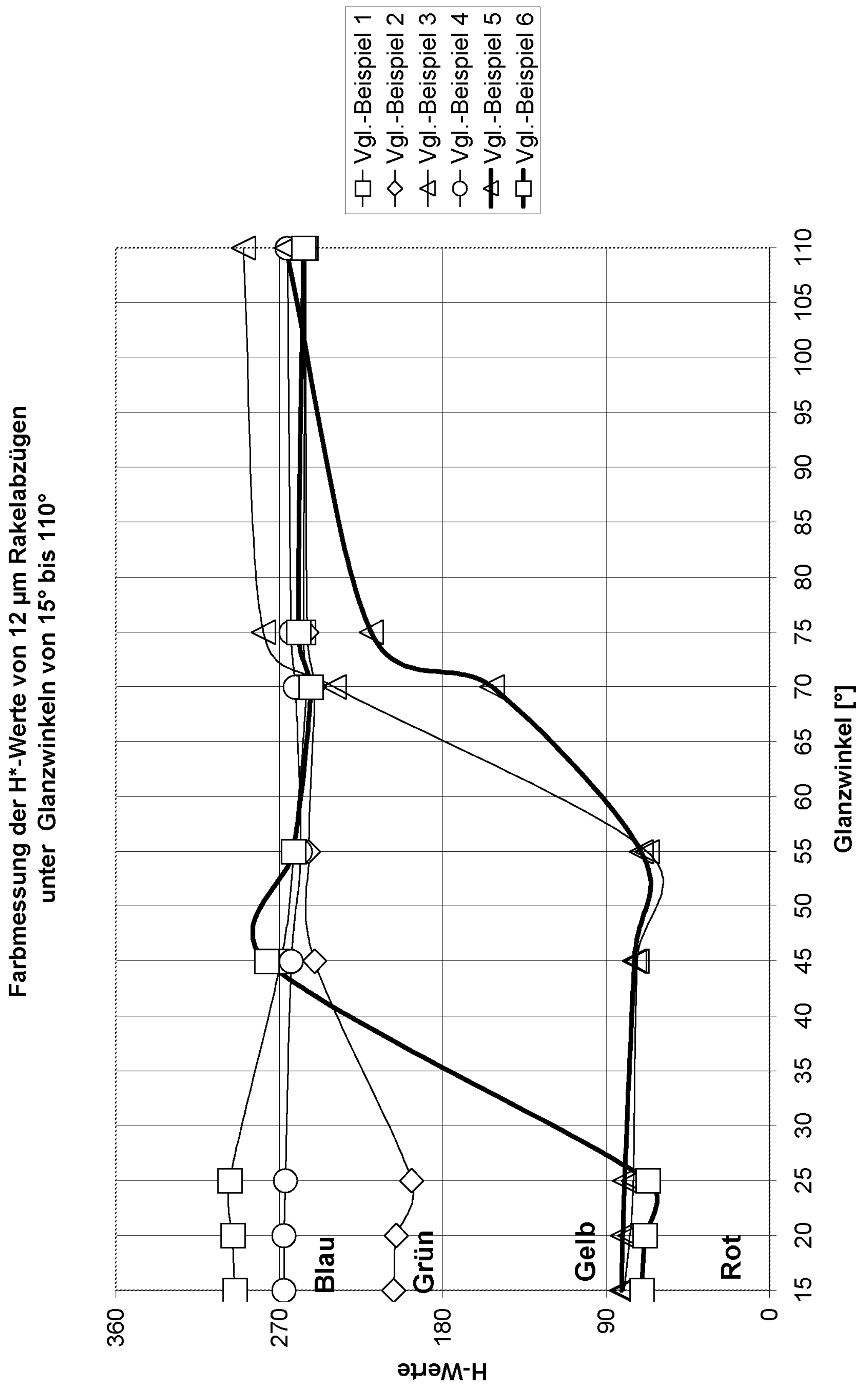


Abbildung 14b

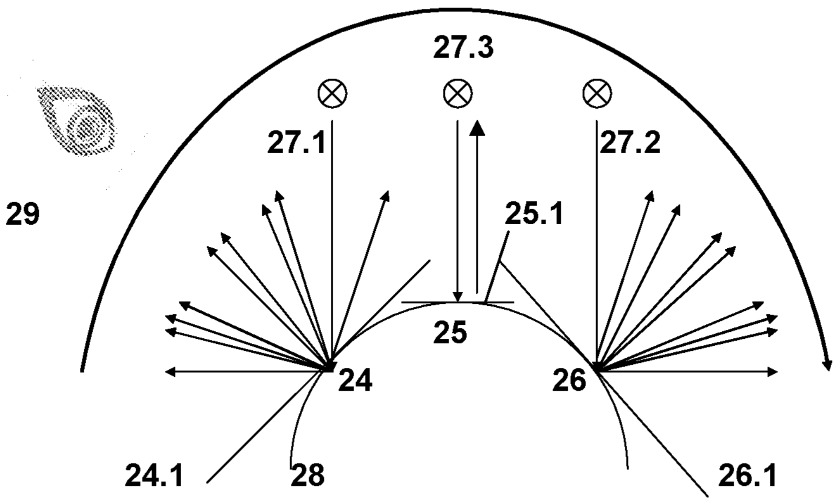


## Abbildung 15

24. Reflexionspunkt und Reflexionswinkel der Lichtquelle des geradlinigen Lichtstrahls 27.1 der erstellten und zur Ansicht gewölbten Rakelapplikationen 28 gemäß Tabelle 5

24.1 und 26.1 angedeutete Fläche einer Nährungsweise unter 45° beleuchten Fläche

25.1 Angedeutete horizontalen Fläche in Bereichen senkrechter Reflexion

25. Reflexionspunkt und Reflexionswinkel der Lichtquelle des geradlinigen Lichtstrahls 27.3 erstellten und zur Ansicht gewölbten Rakelapplikationen 28 gemäß Tabelle 5

26. Reflexionspunkt und Reflexionswinkel der Lichtquelle des geradlinigen Lichtstrahls 27.2 erstellten und zur Ansicht gewölbten Rakelapplikationen 28 gemäß Tabelle 5

27.1 Position 1 Lichtquelle, 27.2 Position 2 Lichtquelle; 27.3 Position 3 Lichtquelle

28. gewölbte Rakelapplikation

29. Blickrichtung eines Betrachters auf die gewölbte Probe

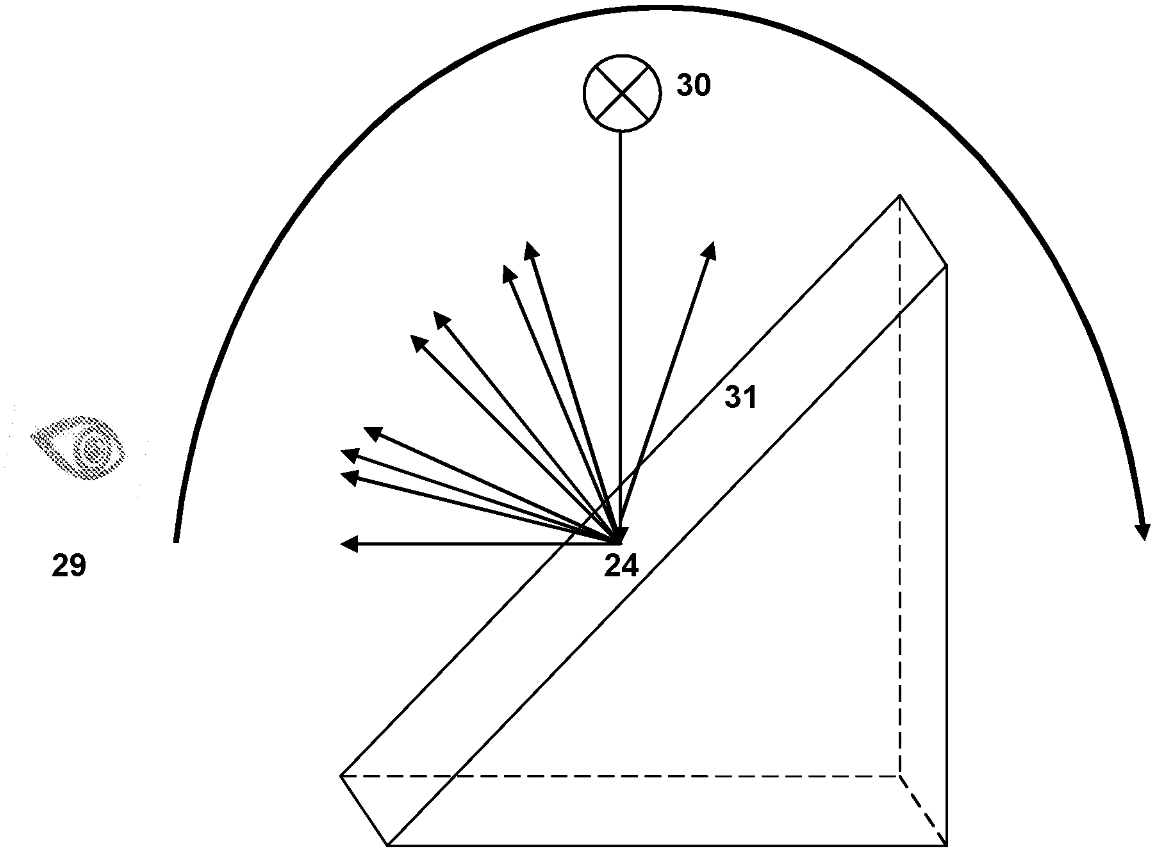


## Abbildung 16

30. Lichtquelle: D65

31. Mit Pigment beschichtete Fläche eines Rakelabzugs auf eine in 45° geneigte Fläche

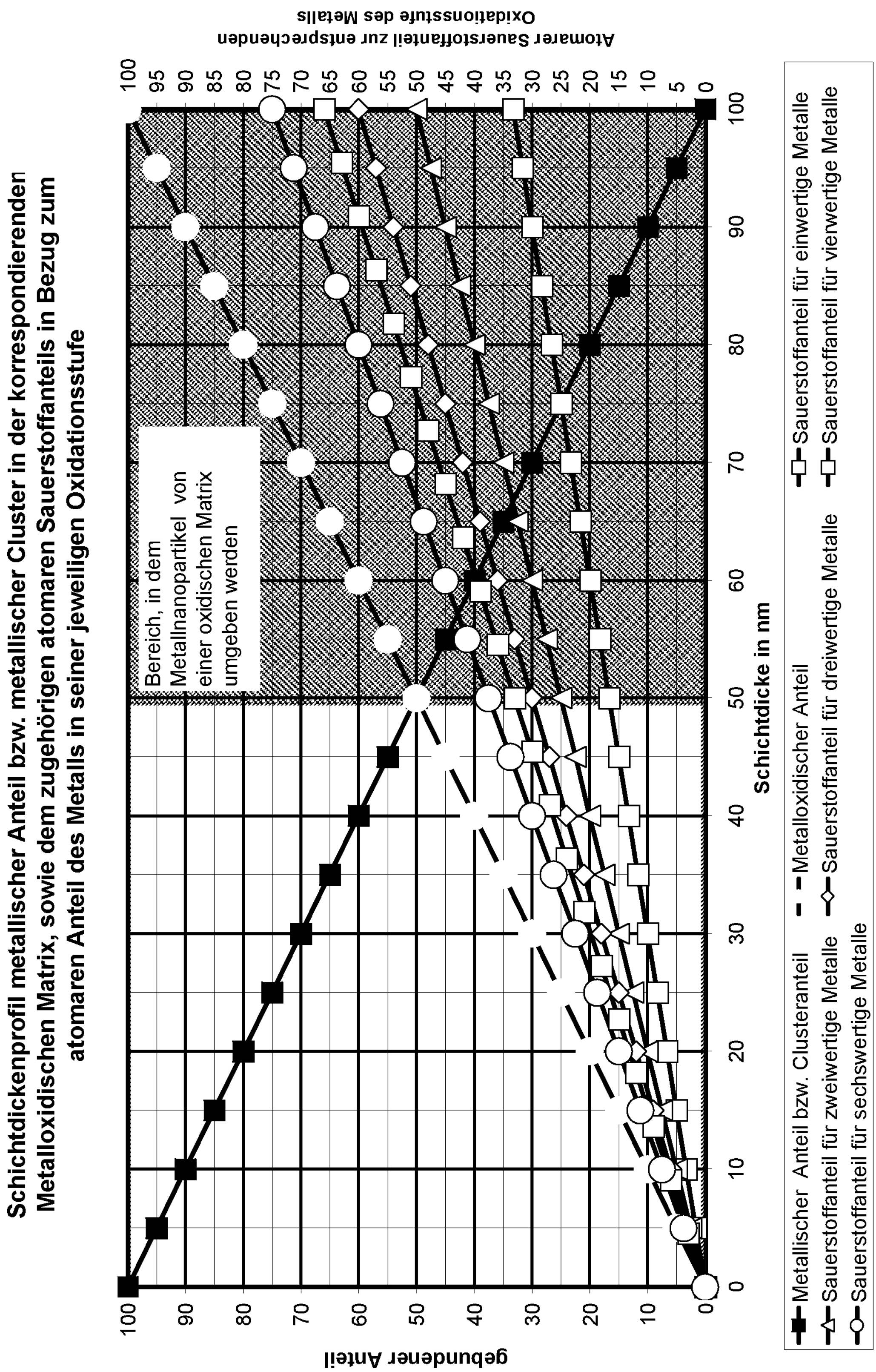


Abbildung 17

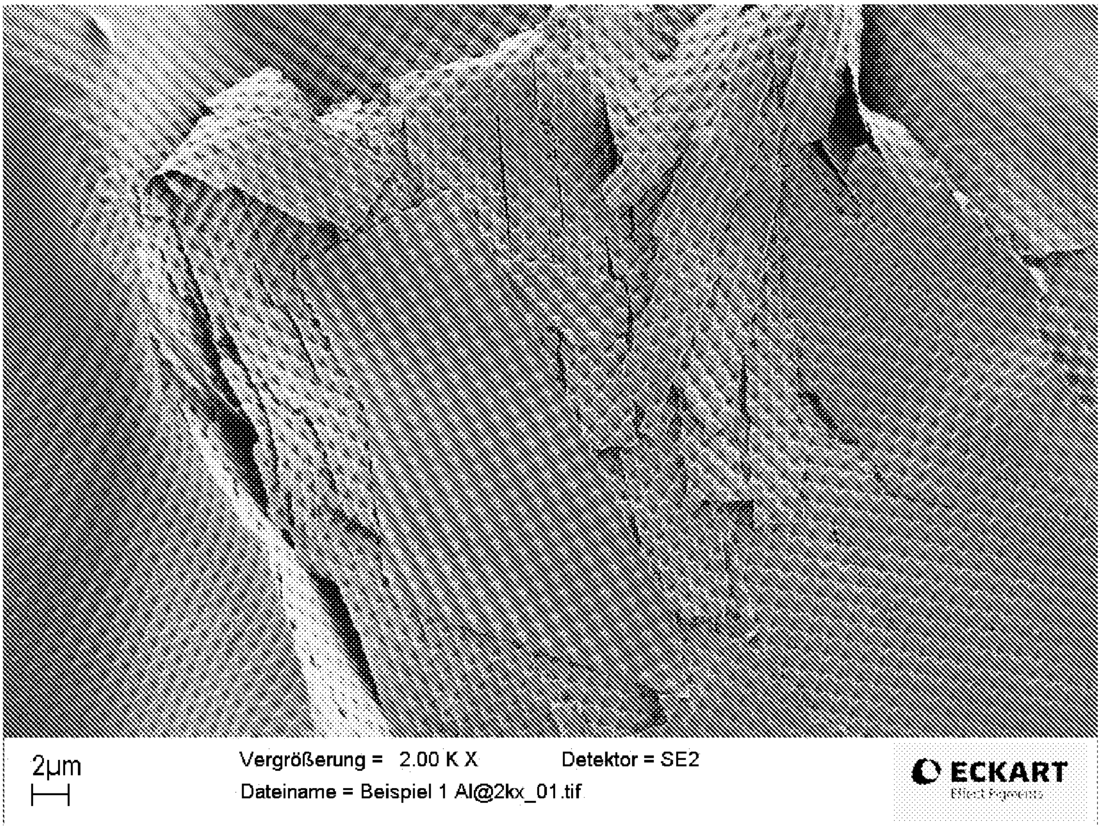


**Abbildung 18**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5624076 A
- US 6692830 B2
- EP 1694288 B1
- EP 1522606 A1
- US 4430366 A
- DE 69601432 T2
- EP 1144711 B1
- DE 102007007908 A1
- WO 2009012995 A1
- US 20070207099 A1
- DE 102007034928 A1


### In der Beschreibung aufgeführte Nicht-Patentliteratur


- **BARBARA PARKER.** Advances in Interference Color. Tagungsband Color Cosmetic Summit, 2003